# EUROPEAN PATENT APPLICATION

(11) **EP 4 477 349 A2**
(43) Date of publication of application: **18.12.2024**
(21) Application number: 24209155.1
(22) Date of filing: 12.04.2019
(51) Int. Cl.: B23K 37/02

(54) **PROCESSING DEVICE FOR AND PROCESSING METHOD OF PROCESSING AN OBJECT BY PROCESSING LIGHT**

(62) Divisional of application: 19924157.1
(71) Applicant: Nikon Corporation, Tokyo 140-8601 (JP)
(72) Inventor: Sato, Shinji, Tokyo (JP)
(74) Representative: Hoffmann Eitle

(57) **Abstract**

A processing system has: a movable member, a relative positional relationship between the movable member and a part of the object being changeable; an irradiation apparatus that irradiates an object with processing light; and a connecting apparatus that connects the movable member and the irradiation apparatus so that a relative positional relationship between the movable member and the irradiation apparatus is changeable, the connecting apparatus has: a driving member that moves at least one of the movable member and the irradiation apparatus; and an elastic member that couples the movable member with the irradiation apparatus.

## Description

### Technical Field

The present invention relates to a processing system and a processing method that are configured to process an object with processing light, a robot system, an end effector apparatus and a connecting apparatus that connects a robot and an end effector.

### Background Art

A Patent Literature 1 discloses, as a processing system that is configured to process an object, a processing system that forms a structure by irradiating a surface of an object with processing light. This type of processing system is required to allow a relative positional relationship between an irradiation apparatus that irradiates the object with the processing light and the object to be proper.

### Citation List

### Patent Literature

Patent Literature 1: US4,994,639B

### Summary of Invention

A first aspect provide a processing system that processes an object by processing light, the processing system is provided with: a movable member, a relative positional relationship between the movable member and a part of the object is changeable; an irradiation apparatus that irradiates the object with the processing light; and a connecting apparatus that connects the movable member and the irradiation apparatus so that a relative positional relationship between the movable member and the irradiation apparatus is changeable, the connecting apparatus is provided with: a driving member that moves at least one of the movable member and the irradiation apparatus; and an elastic member that couples the movable member with the irradiation apparatus.

A second aspect provides a processing system that processes an object by processing light, the processing system is provided with: a movable member, a relative positional relationship between the movable member and a part of the object is changeable; an irradiation apparatus that irradiates the object with the processing light; a connecting apparatus that connects the movable member and the irradiation apparatus so that a relative positional relationship between the movable member and the irradiation apparatus is changeable; and a vibration reduction apparatus that reduces a vibration that is transmitted from the movable member to the irradiation apparatus.

A third aspect provides a processing system that processes an object by processing light, the processing system is provided with: a movable member, a relative positional relationship between the movable member and a part of the object is changeable; an irradiation apparatus that irradiates the object with the processing light; a connecting apparatus that connects the movable member and the irradiation apparatus so that a relative positional relationship between the movable member and the irradiation apparatus is changeable; and a position measurement apparatus that measures a position of the irradiation apparatus relative to the object or a fiducial position, the connecting apparatus is provided with a position change member that changes a position of the irradiation apparatus relative to the movable member on the basis of a position measured result by the position measurement apparatus.

A fourth aspect provides a processing method of processing an object by processing light, the processing method includes: changing a positional relationship between a position of a movable member and a position of a part of the object; irradiating the object with the processing light by using an irradiation apparatus; changing a relative positional relationship between the movable member and the irradiation apparatus; and connecting the movable member and the irradiation apparatus by a connecting part that has: a driving member that moves at least one of the movable member and the irradiation apparatus; and an elastic member that couples the movable member with the irradiation apparatus.

A fifth aspect provides a processing method of processing an object by processing light, the processing method includes: changing a positional relationship between a position of a movable member and a position of a part of the object; irradiating the object with the processing light by using an irradiation apparatus; changing a relative positional relationship between the movable member and the irradiation apparatus; and reducing a vibration that is transmitted from the movable member to the irradiation apparatus.

A sixth aspect provides a processing method of processing an object by processing light, the processing method includes: changing a positional relationship between a position of a movable member and a position of a part of the object; irradiating the object with the processing light by using an irradiation apparatus; measuring a position of the irradiation apparatus relative to the object or a fiducial position; and changing a relative positional relationship between the movable member and the irradiation apparatus on the basis of the measured position of the irradiation apparatus.

A seventh aspect provides a robot system is provided with: an end effector that acts on an object; a movable member, a relative relationship between the movable member and a part of the object is changeable; and a connecting apparatus that connects the movable member and the end effector so that a relative positional relationship between the movable member and the end effector is changeable, the connecting apparatus is provided with: a driving member that moves at least one of the movable member and the end effector; and an elastic member that couples the movable member with the end effector.

An eighth aspect provides a robot system is provided with: an end effector that acts on an object; a movable member, a relative relationship between the movable member and a part of the object is changeable; a connecting apparatus that connects the movable member and the end effector so that a relative positional relationship between the movable member and the end effector is changeable; and a vibration reduction apparatus that reduces a vibration that is transmitted from the movable member to the end effector.

A ninth aspect provides a robot system is provided with: an end effector that acts on an object; a movable member, a relative relationship between the movable member and a part of the object is changeable; a connecting apparatus that connects the movable member and the end effector so that a relative positional relationship between the movable member and the end effector is changeable; and a position measurement apparatus that measures a position of the end effector relative to the object or a fiducial position, the connecting apparatus is provided with a position change member that changes a position of the end effector relative to the movable member on the basis of a position measured result by the position measurement apparatus.

A tenth aspect provides a connecting apparatus that connects an end effector and a movable member, the end effector acts on an object, a relative relationship between the movable member and a part of the object is changeable, the connecting apparatus is provided with: a driving member that moves at least one of the movable member and the end effector; and an elastic member that couples the movable member with the end effector, the connecting apparatus connects the movable member and the end effector so that a relative positional relationship between the movable member and the end effector is changeable.

An eleventh aspect provides a connecting apparatus that connects an end effector and a movable member, the end effector acts on an object, a relative relationship between the movable member and a part of the object is changeable, the connecting apparatus is provided with a vibration reduction apparatus that reduces a vibration that is transmitted from the movable member to the end effector, the connecting apparatus connects the movable member and the end effector so that a relative positional relationship between the movable member and the end effector is changeable.

A twelfth aspect provides a connecting apparatus that connects an end effector and a movable member, the end effector acts on an object, a relative relationship between the movable member and a part of the object is changeable, the connecting apparatus is provided with a position change member that changes a position of the end effector relative to the movable member on the basis of a position measured result by a position measurement apparatus that measures a position of the connecting apparatus and / or the end effector relative to the object or a fiducial position.

A thirteenth aspect provides an end effector apparatus is provided with: an end effector that acts on an object; and a connecting apparatus that connects the end effector and a movable member so that a relative positional relationship between the movable member and the end effector is changeable, a relative relationship between the movable member and a part of the object is changeable, the connecting apparatus is provided with: a driving member that moves at least one of the movable member and the end effector; and an elastic member that couples the movable member with the end effector.

A fourteenth aspect provides an end effector apparatus is provided with: an end effector that acts on an object; a connecting apparatus that connects the end effector and a movable member so that a relative positional relationship between the movable member and the end effector is changeable, a relative relationship between the movable member and a part of the object is changeable; and a vibration reduction apparatus that reduces a vibration that is transmitted from the movable member to the end effector.

A fifteenth aspect provides an end effector apparatus is provided with: an end effector that acts on an object; a connecting apparatus that connects the end effector and a movable member so that a relative positional relationship between the movable member and the end effector is changeable, a relative relationship between the movable member and a part of the object is changeable; and a position measurement apparatus that measures a position of the end effector relative to the object or a fiducial position, the connecting apparatus is provided with a position change member that changes a position of the end effector relative to the movable member on the basis of a position measured result by the position measurement apparatus.

### Brief Description of Drawings

[FIG. 1] FIG. 1 is a cross-sectional view that schematically illustrates an entire structure of a processing system in a first embodiment.
[FIG. 2] Each of FIG. 2A and FIG. 2B is a cross-sectional view that schematically illustrates an aspect of a processing of a coat of paint formed on a surface of a processing target object.
[FIG. 3] FIG. 3A is a cross-sectional view that schematically illustrates a light irradiation apparatus of the processing system in the first embodiment, and each of FIG. 3B and FIG. 3C is a cross-sectional view that illustrates a structure of a light source system of the light irradiation apparatus.
[FIG. 4] FIG. 4 is a cross-sectional view that schematically illustrates a structure of the light irradiation apparatus that is not provided with the light source system.
[FIG. 5] FIG. 5 is a cross-sectional view that illustrates a structure of a first driving system.
[FIG. 6] FIG. 6 is a cross-sectional view that illustrates a structure of a second driving system.
[FIG. 7] FIG. 7A is a cross-sectional view that illustrates a cross-sectional surface of a riblet structure formed by the processing apparatus in the first embodiment and FIG. 7B is a perspective view that illustrates the riblet structure formed by the processing apparatus in the first embodiment.
[FIG. 8] Each of FIG. 8A and FIG. 8B is a front view that illustrates an airplane that is one example of the processing target object at which the riblet structure is formed and FIG. 8C is a side view that illustrates the airplane that is one example of the processing target object at which the riblet structure is formed.
[FIG. 9] FIG. 9 is a plan view that illustrates a plurality of processing shot areas that are set on a surface of the coat of paint.
[FIG. 10] FIG. 10 is a cross-sectional view that illustrates the processing apparatus that performs one step of a processing operation for forming the riblet structure.
[FIG. 11] FIG. 11A is a cross-sectional view that illustrates the processing apparatus that performs one step of the processing operation for forming the riblet structure and FIG. 11B is a plan view that illustrates the surface of the coat of paint on which one step of the processing operation illustrated in FIG. 11A is performed.
[FIG. 12] FIG. 12 is a plan view that illustrates a sweeping path of the processing light (namely, a moving path of a target irradiation area) during a period when a scan operation and a step operation are repeated.
[FIG. 13] FIG. 13 is a cross-sectional view that illustrates the processing apparatus that performs one step of the processing operation for forming the riblet structure.
[FIG. 14] FIG. 14A is a cross-sectional view that illustrates the processing apparatus that performs one step of the processing operation for forming the riblet structure and FIG. 14B is a plan view that illustrates the surface of the coat of paint on which one step of the processing operation illustrated in FIG. 14A is performed.
[FIG. 15] FIG. 15 is a cross-sectional view that illustrates the processing apparatus that performs one step of the processing operation for forming the riblet structure.
[FIG. 16] FIG. 16 is a cross-sectional view that illustrates the processing apparatus that performs one step of the processing operation for forming the riblet structure.
[FIG. 17] FIG. 17 is a cross-sectional view that illustrates the processing apparatus that performs one step of the processing operation for forming the riblet structure.
[FIG. 18] FIG. 18 is a cross-sectional view that illustrates the processing apparatus that performs one step of the processing operation for forming the riblet structure.
[FIG. 19] FIG. 19 is a cross-sectional view that illustrates the processing apparatus that performs one step of the processing operation for forming the riblet structure.
[FIG. 20] FIG. 20 is a cross-sectional view that illustrates the processing apparatus that performs one step of the processing operation for forming the riblet structure.
[FIG. 21] FIG. 21 is a cross-sectional view that schematically illustrates an entire structure of a processing system in a second embodiment.
[FIG. 22] FIG. 22 is a cross-sectional view that schematically illustrates an entire structure of a processing system in a third embodiment.
[FIG. 23] Each of FIG. 23A and FIG. 23B is a plan view that illustrates a test structure formed when a driving system is controlled on the basis of a measured result by a position measurement apparatus.
[FIG. 24] Each of FIG. 24A and FIG. 24B is a plan view that illustrates a characteristic change pattern formed on a sensitive member when the processing light is emitted while controlling the driving system on the basis of the measured result by the position measurement apparatus in a same manner as the case where the test structure is formed.
[FIG. 25] FIG. 25 is a cross-sectional view that schematically illustrates an entire structure of a processing system in a fourth embodiment.
[FIG. 26] FIG. 26 is a perspective view that schematically illustrates an entire structure of a processing system in a fifth embodiment.
[FIG. 27] FIG. 27 is a front view that schematically illustrates an entire structure of the processing system in the fourth embodiment.
[FIG. 28] FIG. 28 is a plan view that schematically illustrates an entire structure of the processing system in the fourth embodiment.
[FIG. 29] FIG. 29 is a front view that enlarges and illustrates a part of the processing system in the fourth embodiment.
[FIG. 30] FIG. 30 is a cross-sectional view that illustrates a structure of a driving system in a sixth embodiment.
[FIG. 31] FIG. 31 is a cross-sectional view that illustrates a structure of the driving system in the sixth embodiment.
[FIG. 32] FIG. 32 is a front view that illustrates the light irradiation apparatus an attitude of which is changed to emit the processing light from an obliquely lower side toward an obliquely upper side of the airplane that is the processing target object.
[FIG. 33] FIG. 33 is a cross-sectional view that illustrates a plurality of second driving systems that connect the light irradiation apparatus illustrated in FIG. 32 and the first driving system.
[FIG. 34] FIG. 34 is a cross-sectional view that schematically illustrates an entire structure of a processing system in a seventh embodiment.
[FIG. 35] FIG. 35 illustrates one example of an end effector.
[FIG. 36] Each of FIG. 36A to FIG. 36E illustrates one example of an end effector.

### Description of Embodiments

Next, with reference to drawings, embodiments of a processing system, a processing method, a robot system, a connecting apparatus and an end effector apparatus will be described. In the below described description, the embodiments of the processing system, the processing method, the robot system, the connecting apparatus and the end effector apparatus will be described by using a processing system SYS that processes a coat SF of paint formed on a surface of a processing target object S by using processing light EL. However, the present invention is not limited to the below described embodiments.

Moreover, in the below described description, a positional relationship of various components that constitute the processing system SYS will be described by using an XYZ rectangular coordinate system that is defined by a X axis, a Y axis and a Z axis that are perpendicular to one another. Note that each of an X axis direction and a Y axis direction is assumed to be a horizontal direction (namely, a predetermined direction in a horizontal plane) and a Z axis direction is assumed to be a vertical direction (namely, a direction that is perpendicular to the horizontal plane, and substantially an up-down direction) in the below described description, for convenience of the description. Moreover, rotational directions (in other words, inclination directions) around the X axis, the Y axis and the Z axis are referred to as a θX direction, a θY direction and a θZ direction, respectively. Here, the Z axis direction may be a gravity direction. Moreover, an XY plane may be a horizontal direction.

### (1) Processing SYSa in First Embodiment

Firstly, a processing system SYS in a first embodiment (in the below described description, the processing system SYS in the first embodiment is referred to as a "processing system SYSa") will be described.

### (1-1) Structure of Processing SYSa

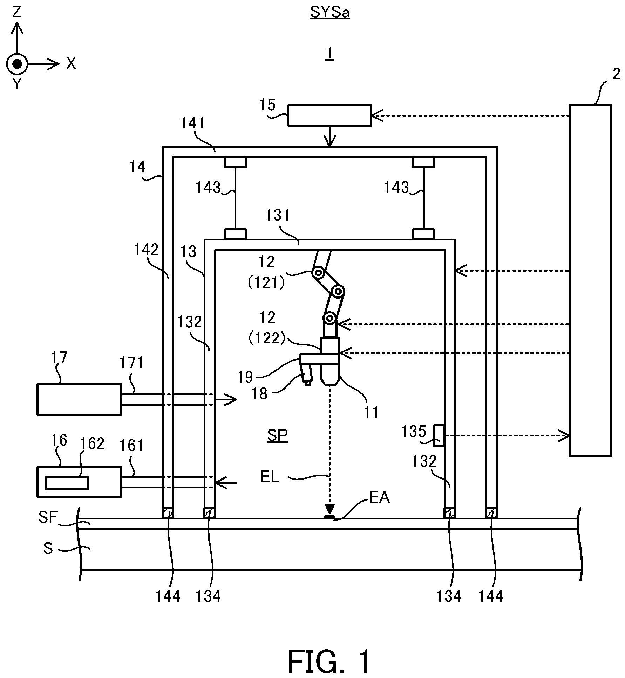

Firstly, with reference to FIG. 1, a structure of the processing system SYSa in the first embodiment will be described. FIG. 1 is a cross-sectional view that schematically illustrates the structure of the processing system SYSa in the first embodiment.

As illustrated in FIG. 1, the processing system SYS processes the coat SF of paint that is formed (for example, coated) on the surface of the processing target object S. The processing target object S may be a metal, may be an alloy (for example, a duralumin and the like), may be a resin (for example, CFRP (Carbon Fiber Reinforced Plastic) and the like), may be a glass or may be an object that is made from any other material, for example. The coat SF of paint is a film of a painting material that covers the surface of the processing target object S. Thus, the coat SF of the paint may be referred to as a paint layer. The processing target object S is a base member for the coat SF of paint. A thickness of the coat SF of paint is several tens of microns to several hundreds of microns, for example, however, may be any other size. The painting material that constitutes the coat SF of paint may include a resin painting material or may include any other type of painting material, for example. The resin painting material may include at least one of an acrylic type of painting material (for example, a painting material including an acrylic polyol), a polyurethane type of painting material (for example, a painting material including a polyurethane polyol), a polyester type of painting material (for example, a painting material including a polyester polyol), a vinyl type of painting material, a fluorine type of painting material (for example, a painting material including a fluorine polyol), a silicon type of painting material and an epoxy type of painting material, for example.

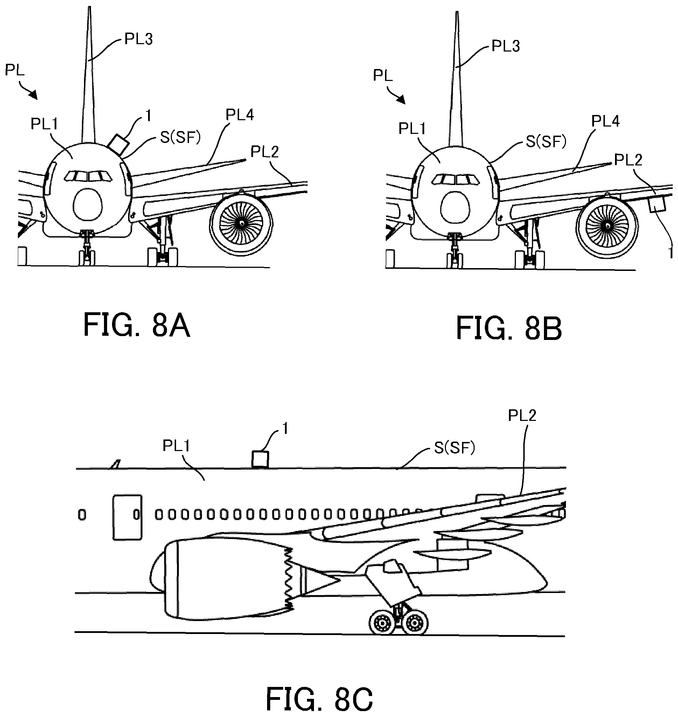

FIG. 1 illustrates an example in which the processing system SYSa (especially, a below described processing apparatus 1 of the processing system SYSa) is disposed on the processing target object S having the surface that is along the horizontal plane (namely, the XY plane). However, the processing system SYSa is not always disposed on the processing target object S having the surface that is along the horizontal plane. For example, as described in later with reference to FIG. 8 and so on, the processing system SYSa may be disposed on the processing target object S having the surface that intersects with the horizontal plane. The processing system SYSa may be disposed to be suspended from the processing target object S. In this case, the X axis direction and the Y axis direction may be defined as directions along (typically, parallel to) the surface of the processing target object S and Z axis direction may be defined as a direction that intersects with (typically, a direction perpendicular to) the surface of the processing target object S.

The processing system SYSa irradiates the coat SF of paint with the processing light EL in order to process the coat SF of paint. The processing light EL may be any type of light, as long as the coat SF of paint is processed by irradiating the coat SF of paint with it. As one example, the processing light EL may be a laser light. Moreover, the processing light EL may be a light having any wavelength, as long as the coat SF of paint is processed by irradiating the coat SF of paint with it. The first embodiment will be described by using an example in which the processing light EL is invisible light (for example, at least one of infrared light, ultraviolet light and the like). Namely, the first embodiment will be described by using an example in which the processing light EL is at least one of light a wavelength of which is included in a wavelength band that is shorter than a wavelength of visible light and light a wavelength of which is included in a wavelength band that is longer than the wavelength of the visible light. However, the processing light EL may be a visible light.

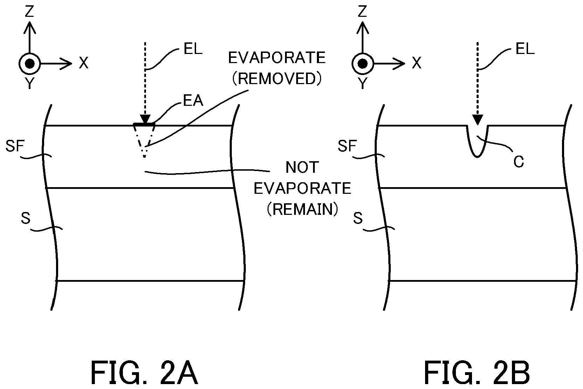

Here, with reference to FIG. 2A and FIG. 2B, an aspect of a processing of the coat SF of paint by using the processing light EL will be described. Each of FIG. 2A and FIG. 2B is a cross-sectional view that schematically illustrates the aspect of the processing of the coat SF of paint formed on the surface of the processing target object S.

As illustrated in FIG. 2A, the processing system SYSa irradiates a target irradiation area EA that is set on the surface of the coat SF of paint with the processing light EL. Note that the target irradiation area EA is an area that is expected to be irradiated with the processing light EL by the processing system SYSa. As illustrated in FIG. 2A, when the target irradiation area EA is irradiated with the processing light EL, a part of the coat SF of paint that overlaps with the target irradiation area EA (namely, the coat of paint that is located at an -Z side of the target irradiation area EA) evaporates by the processing light EL. Here, all of the coat SF of paint that overlaps with the target irradiation area EA does not evaporate along a thickness direction of the coat SF of paint. Namely, a part of the coat SF of paint that overlaps with the target irradiation area EA (specifically, a part of the coat SF of paint that is relatively close to the target irradiation area EA) evaporates and other part of the coat SF of paint that overlaps with the target irradiation area EA (specifically, a part of the coat SF of paint that is relatively far away from the target irradiation area EA) does not evaporate along the thickness direction of the coat SF of paint. In other words, the coat SF of paint evaporates so that the processing target object S is not exposed from the coat SF of paint. Thus, a characteristic of the processing light EL may be set to a desired characteristic that allows the coat SF of paint to evaporate so that the processing target object S is not exposed from the coat SF of paint. The characteristic of the processing light EL may be set to a desired characteristic that does not allow the irradiation of the processing light EL to affect the processing target object S. The characteristic of the processing light EL may be set to a desired characteristic that allows the irradiation of the processing light EL to affect only the coat SF of paint. Note that the characteristic of the processing light EL may include at least one of the wavelength of the processing light EL, an amount of energy that is transmitted from the processing light EL to the surface of the coat SF of paint per unit time and / or per unit area, a distribution of an intensity of the processing light EL on the surface of the coat SF of paint, an irradiation time of the processing light EL on the surface of the coat SF of paint and a size (as one example, a spot diameter and an area size) of the processing light EL on the surface of the coat SF of paint.

In this case, the energy (namely, the intensity) of the processing light EL with which the coat SF of paint is irradiated is set so that the irradiation of the processing light EL does not affect the processing target object S. The energy of the processing light EL is set so that the processing light EL does not penetrate the coat SF of paint and does not reach the processing target object S. In other words, the energy of the processing light EL is set so that the irradiation of the processing light EL affects only the coat SF of paint.

As a result, the coat SF of paint is removed at a part at which the coat SF of paint evaporates. On the other hand, the coat SF of paint remains as it is at a part at which the coat SF of paint does not evaporate. Namely, as illustrated in FIG. 2B, the coat SF of paint is partially removed at a part that is irradiated with the processing light EL. As a result, as illustrated in FIG. 2B, the thickness of the coat SF of paint is thinner at the part that is irradiated with the processing light EL, compared to a part that is not irradiated with the processing light EL. In other words, as illustrated in FIG. 2B, there are the coat SF of paint that is relatively thick because it is not irradiated with the processing light EL and the coat SF of paint that is relatively thin because it is irradiated with the processing light EL on the surface of the processing target object S. Namely, the thickness of the coat SF of paint is adjusted at least partially by the irradiation of the processing light EL. A part of the coat SF of paint is removed in the thickness direction (the Z axis direction in the example illustrated in FIG. 2B) by the irradiation of the processing light EL. As a result, a concave part (in other words, a groove part) C corresponding to the part at which the coat SF of paint is relatively thin is formed on the surface of the coat SF of paint. Therefore, "an operation for processing the coat SF of paint" in the first embodiment includes at least one of an operation for adjusting the thickness of the coat SF of paint, an operation for removing a part of the coat SF of paint and an operation for forming the concave part C at the coat SF of paint.

The coat SF of paint evaporates by absorbing the processing light EL. Namely, the coat SF of paint is decomposed photochemically, for example, and removed by means of the energy of the processing light EL being transmitted to the coat SF of paint. Incidentally, when the processing light EL is the laser light, a phenomenon in which the coat SF of paint is decomposed photochemically and removed by means of the energy of the processing light EL being transmitted to the coat SF of paint is sometimes referred to as a laser ablation. Thus, the coat SF of paint includes a material that is allowed to absorb the processing light EL. Specifically, the coat SF of paint may include a material in which an absorptance relating to the processing light EL (for example, an absorptance relating to a light in a wavelength band including a wavelength that is different from the wavelength of the visible light, when the processing light EL is the invisible light) is equal to or higher than a first absorption threshold value, for example. Conversely speaking, a light in a wavelength band that allows an absorptance relative to the coat SF of paint to be equal to or higher than the first absorption threshold value may be used as the processing light EL.

The material of the coat SF of paint may include a coloring matter (specifically, at least one of pigment and dye). When the coat SF of paint includes the coloring matter, the coloring matter may be a coloring matter that takes on a predetermined color when it is irradiated with the visible light. As a result, the coat SF of paint including this coloring matter takes on the predetermined color. In this case, the coloring matter may have a characteristic that the absorptance of light in a first wavelength band including a wavelength that is allowed to be recognized by a human as the predetermined colored light when it is reflected by the coat SF of paint among a wavelength band of the visible light is different from the absorptance of light in a second wavelength band of the visible light that is different from the first wavelength band so that the coat SF of paint takes on the predetermined color. For example, the coloring matter may have a characteristic that the absorptance of the light in the first wavelength band is lower than the absorptance of the light in the second wavelength band. For example, the coloring matter may have a characteristic that the absorptance of the light in the first wavelength band is equal to or lower than a predetermined second absorption threshold value (note that the second absorption threshold value is lower than the first absorption threshold value) and the absorptance of the light in the second wavelength band is equal to or higher than a predetermined third absorption threshold value (note that the third absorption threshold value is higher than the second absorption threshold value). As one example of the coloring matter that is allowed to absorb the processing light EL that is the invisible light to a certain degree and that takes on the predetermined color, there is a near infrared absorption coloring matter manufactured by Spectrum Info Ltd located in Kiev in Ukraine (as one example, a tetrafluoro boronated 4 - ((E) - 2 - {(3E) - 2 - chloro - 3 - [2 - (2,6 - diphenyl - 4H - thiopyran - 4 - ylidene) ethylidene] cyclohexa - 1 - yen - 1 - yl} vinyl) - 2,6 - diphenylthiopyrylium), for example. Incidentally, when the coat SF of paint is transparent, the coat SF of paint does not include the coloring matter.

When the coat SF of paint includes the coloring matter, the coloring matter may be a coloring matter that is transparent to the visible light. As a result, the coat SF of paint including this coloring matter is a transparent film (what we call a clear coat). Incidentally, the "transparent film" here may mean a film through which light in a wavelength band that is a part of the wavelength band of the visible light passes. In this case, the coloring matter may have a characteristic that it does not absorb the visible light much (namely, reflects to a certain degree) so that the coat SF of paint is transparent. For example, the coloring matter may have a characteristic that the absorptance of the visible light is lower than a predetermined fourth absorption threshold value. As one example of the coloring matter that is allowed to absorb the processing light EL that is the invisible light to a certain degree and that is transparent to the visible light, there is a near infrared absorption coloring matter manufactured by Spectrum Info Ltd located in Kiev in Ukraine (as one example, a tetrafluoro boronated 6 - chloro - 2 - [(E) - 2 - (3 - {(E) - 2 - [6 - chloro - 1 - ethylbenzo [cd] indole - 2(1H) - ylidene] ethylidene} - 2 - phenyl - 1 -cyclopentene - 1 - yl) ethenyl] - 1 - ethylbenzo [cd] - indolium), for example.

Again in FIG. 1, in order to process the coat SF of paint, the processing system SYSa is provided with a processing apparatus 1 and a control apparatus 2. Furthermore, the processing apparatus 1 is provided with a light irradiation apparatus 11, a driving system 12, a housing apparatus 13, a support apparatus 14, a driving system 15, an exhaust apparatus 16, a gas supply apparatus 17 and a position measurement apparatus 18.

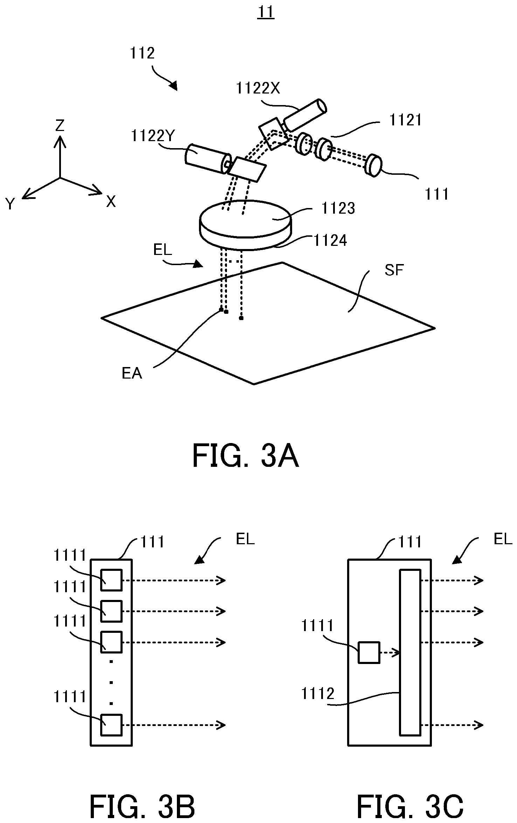

The light irradiation apparatus 11 is configured to irradiate the coat SF of paint with the processing light EL under the control of the control apparatus 2. In order to irradiate the coat SF of paint with the processing light EL, the light irradiation apparatus 11 is provided with a light source system 111 that is configured to emit the processing light EL and an optical system 112 that guides the processing light EL emitted from the light source system 111 to the coat SF of paint, as illustrated in FIG. 3A that is a cross-sectional view that schematically illustrates a structure of the light irradiation apparatus 11.

The light source system 111 emits a plurality of processing lights EL at the same time, for example. However, the light source system 111 may emit single processing light EL. In this case, the light irradiation apparatus 11 may emit single processing light EL. In order to emit the plurality of processing lights EL, the light source system 111 is provided with a plurality of light sources 1111, as illustrated in FIG. 3B that is a cross-sectional view that illustrates one example of a structure of the light source system 111. The plurality of light sources 1111 are arranged in a line at regular intervals. Each light source 1111 emits a pulsed light as the processing light EL. When a light emitting time width (hereinafter, it is referred to as a "pulse width") of the pulsed light is shorter, a processing accuracy (for example, a forming accuracy of a riblet structure described later) improves. Therefore, each light source 1111 may emit the pulsed light having a relatively short pulse width as the processing light EL. For example, each light source 1111 may emit the pulsed light having the pulse width that is equal to or shorter than 1000 nanoseconds as the processing light EL. For example, each light source 1111 may emit the pulsed light having the pulse width that is in an order of pico-second as the processing light EL, and may emit the pulsed light having the pulse width that is in an order of femto-second as the processing light EL. Alternatively, the light source system 111 may be provided with single light source 1111 and a divide device 1112 that divides the light from the single light source 1111 into the plurality of processing lights EL, as illustrated in FIG. 3C that is a cross-sectional view that illustrates another example of a structure of the light source system 111. A plurality of emitting ports from which the plurality of processing lights EL divided by the divide device 1112, respectively, are arranged in a line at regular intervals. At least one of an optical fiber coupler, a waveguide splitter, a lens array, a diffractive optical element, a spatial light modulator and so on is one example of the divide device 1112.

The optical system 112 is provided with a focusing lens 1121, a Galvano mirror 1122 and a fθ lens 1123. The coat SF of paint is irradiated with the plurality of processing lights EL through the focusing lens 1121, the Galvano mirror 1122 and the fθ lens 1123.

The focusing lens 1121 is an optical element that is constructed from one or more lens and that is for adjusting converged positions BF of the plurality of processing lights EL (in other words, light concentration positions or irradiation positions in an optical axis direction, namely, a focus position of the optical system 112) by adjusting a position of at least one lens thereof along the optical axis direction. The Galvano mirror 1122 deflects the plurality of processing lights EL so that the surface of the coat SF of paint is scanned with the plurality of processing lights EL (namely, the plurality of target irradiation areas EA that are irradiated with the plurality of processing lights EL, respectively, moves on the surface of the coat SF of paint). Namely, the Galvano mirror 1122 may be configured to serve as an irradiation position change apparatus that changes the irradiation positions of the plurality of processing lights EL on the coat SF of paint relative to the light irradiation apparatus 11. Note that the surface of the coat SF of paint is swept with the plurality of processing lights ELk emitted from the optical system 112 by the Galvano mirror 1122. The Galvano mirror 112 is provided with a X scanning mirror 1122X and a Y scanning mirror 1122Y. The X scanning mirror 1122X reflects the plurality of processing lights EL to the Y scanning mirror 1122Y. The X scanning mirror 1122X is configured to swing or rotate in the θY direction (namely, in a rotational direction around the Y axis). Due to the swing or the rotation of the X scanning mirror 1122X, the surface of the coat SF of paint is swept with the plurality of processing lights EL along the X axis direction. Due to the swing or the rotation of the X scanning mirror 1122X, the plurality of target irradiation areas EA moves on the coat SF of paint along the X axis direction. The X scanning mirror 1122X changes a relative positional relationship between the plurality of target irradiation areas EA and the coat SF of paint along the X axis direction. The Y scanning mirror 1122Y reflects the plurality of processing lights EL to the fθ lens 1123. The Y scanning mirror 1122Y is configured to swing or rotate in the θX direction (namely, in a rotational direction around the X axis). Due to the swing or the rotation of the Y scanning mirror 1122Y, the surface of the coat SF of paint is swept with the plurality of processing lights EL along the Y axis direction. Due to the swing or the rotation of the Y scanning mirror 1122X, the plurality of target irradiation areas EA moves on the coat SF of paint along the Y axis direction. The Y scanning mirror 1122Y changes a relative positional relationship between the plurality of target irradiation areas EA and the coat SF of paint along the Y axis direction. The fθ lens 1123 is an optical element for condensing the plurality of processing lights EL from the Galvano mirror 1122 on the coat SF of paint.

The fθ lens 1123 is a terminal optical element that is disposed at the most light emitting side of the optical system 112 (in other word, that is closest to the coat SF of paint or that is disposed at an end of an optical path of the plurality of processing lights EL) among the optical element(s) of the optical system 112. However, the optical system 112 may be provided with an optical element (for example, a cover lens and the like) that is disposed at more light emitting side than the fθ lens 1123. The fθ lens 1123 may be configured to be attachable to and detachable from the optical system 112. As a result, new fθ lens 1123 is allowed to be attached to the optical system 112 after old fθ lens 1123 is detached from the optical system 112. However, when the optical system 112 is provided with the optical element (for example, the cover lens and the like) that is disposed at more emitting side than the fθ lens 1123, this optical element may be the terminal optical element and this optical element may be configured to be attachable to and detachable from the optical system 112.

Traveling directions of the plurality of processing lights EL from the optical system 112 is parallel to each other, for example. As a result, in the first embodiment, the coat SF of paint is irradiated with the plurality of processing lights EL traveling directions of which are parallel to each other at the same time. Namely, the plurality of target irradiation areas EA are set on the coat SF of paint at the same time. Thus, a throughput relating to the processing of the coats SF of paint improves compared to the case where the coat SF of paint is irradiated with the single processing light EL. Note that the traveling directions of the plurality of processing lights EL from the optical system 112 may not be parallel to each other.

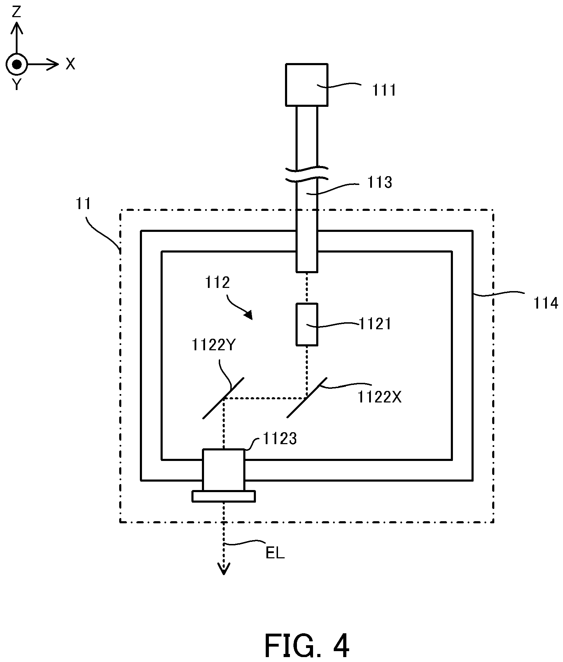

Note that the light irradiation apparatus 11 may not be provided with the light source system 111. In this case, the light irradiation apparatus 11 may irradiate the coat SF of paint with the plurality of processing lights EL, which are emitted from the light source system 111 disposed at an outside of the light irradiation apparatus 11, by using the optical system 112. Specifically, for example, as illustrated in FIG. 4 that is a cross-sectional view that schematically illustrates a structure of the light irradiation apparatus 11 that is not provided with the light source system 111, the plurality of processing lights EL may enter the light irradiation apparatus 11 from the light source system 111 disposed at the outside of the light irradiation apparatus 11 through a light transmitting member 113 such as an optical fiber and the like. The light irradiation apparatus 11 may irradiate the coat SF of paint with the plurality of processing lights EL, which enters the light irradiation apparatus 11 through the light transmitting member 113, by using the optical system 112. Note that FIG. 4 illustrates an example in which the optical system 112 is housed in a housing 114, however, the optical system 112 may not be housed in the housing 114. Namely, the light irradiation apparatus 11 may be provided with the housing 114, or may not be provided with the housing 114. Moreover, even when the light irradiation apparatus 11 is provided with the light source system 111, the optical system 112 may be housed in a housing 114 or the optical system 112 may not be housed in the housing 114. The light source system 111 may be housed in a housing 114 or the light source system 111 may not be housed in the housing 114. Here, a light pipe, a relay optical system including one or more lens and / or mirror and the like may be used as the light transmitting member 113.

Again in FIG. 1, the driving system 12 moves the light irradiation apparatus 11 relative to the coat SF of paint (namely, relative to the processing target object S on the surface of which the coat SF of paint is formed) under the control of the control apparatus 2. Namely, the driving system 12 moves the light irradiation apparatus 11 relative to the coat SF of paint so as to change a relative positional relationship between the light irradiation apparatus 11 and the coat SF of paint. When the relative positional relationship between the light irradiation apparatus 11 and the coat SF of paint is changed, a relative positional relationship between the plurality of target irradiation areas EA that are irradiated with the plurality of processing lights EL, respectively, and the coat SF of paint is also changed. Thus, it can be said that the driving system 12 moves the light irradiation apparatus 11 relative to the coat SF of paint so as to change the relative positional relationship between the plurality of target irradiation areas EA and the coat SF of paint.

The driving system 12 may move the light irradiation apparatus 11 along the surface of the coat SF of paint. In an example illustrated in FIG. 1, the surface of the coat SF of paint is a plane that is parallel to at least one of the X axis and the Y axis, and thus, the driving system 12 may move the light irradiation apparatus 11 along at least one of the X axis and the Y axis. As a result, the target irradiation areas EA move on the coat SF of paint along at least one of the X axis and the Y axis. Namely, a range which the irradiation apparatus 11 is allowed to irradiate with the processing light EL is changed. The driving system 12 may move the light irradiation apparatus 11 along the thickness direction of the coat SF of paint (namely, a direction that intersects with the surface of the coat SF of paint). In the example illustrated in FIG. 1, the thickness direction of the coat SF of paint is a direction along the Z axis, and thus, the driving system 12 may move the light irradiation apparatus 11 along the Z axis direction. The driving system 12 may move the light irradiation apparatus 11 along a rotational direction that is at least one of the θX direction, the θY direction and the θZ direction in addition to at least one of the X axis, the Y axis and the Z axis.

The driving system 12 supports the light irradiation apparatus 11 and moves the supporting light irradiation apparatus 11. In this case, the driving system 12 may be provided with a first supporting member that supports the light irradiation apparatus 11 and a first moving mechanism that moves the first supporting member, for example.

In the first embodiment, the driving system 12 is provided with a first driving system 121 and a second driving system 122. The second driving system 121 is attached to the first driving system 121. The first driving system 121 supports the second driving system 122. The light irradiation apparatus 11 is attached to the second driving system 122 through an attachment member 19. The second driving system 122 supports the light irradiation apparatus 11 through the attachment member 19. Thus, the second member 122 may substantially serve as a connecting member that connects the first driving system 121 and the light irradiation apparatus. Note that the second driving system 122 may support the light irradiation apparatus 11 without the attachment member 19. For example, the second driving system 122 may support the light irradiation apparatus 11 by supporting the housing 114 illustrated in FIG. 4.

The first driving system 121 moves the second driving system 122 relative to the coat SF of paint under the control of the control apparatus 2. Namely, the first driving system 121 serves as a movement apparatus that moves the second driving system 122 relative to the coat SF of paint. Since the light irradiation apparatus 11 is attached to the second driving system 122, it can be said that the first driving system 121 moves the light irradiation apparatus 11 relative to the coat SF of paint by moving the second driving system 122. Namely, the first driving system 121 moves the light irradiation apparatus 11 with the second driving system 122. The second driving system 122 moves the second driving system 122 relative to the coat SF of paint under the control of the control apparatus 2. Namely, the second driving system 122 serves as a movement apparatus that moves the light irradiation apparatus 11 relative to the coat SF of paint.

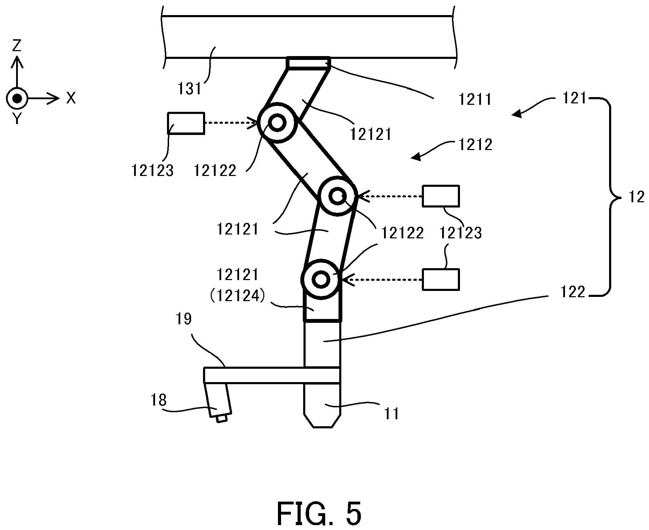

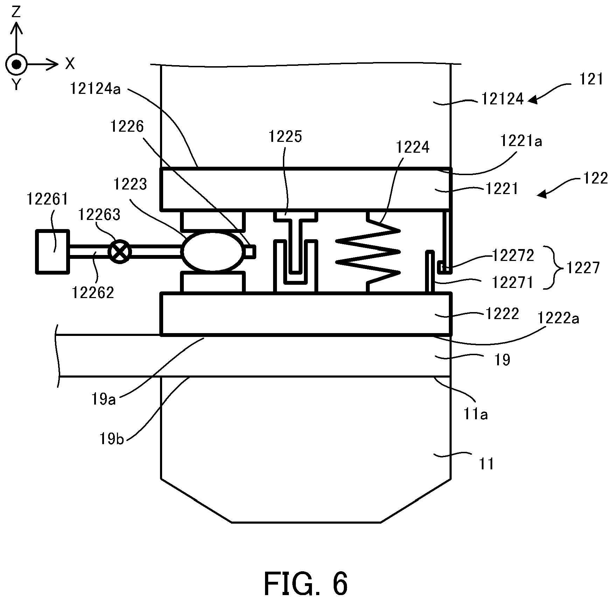

Note that specific structures of the first driving system 112 and the second driving system 122 will be described later in detail (see FIG. 5 and FIG. 6), and the detailed description thereof is omitted here.

The housing apparatus 13 is provided with a top member 131 and a partition member 132. The top member 131 is disposed at +Z side than the light irradiation apparatus 11. The top member 131 is a plate-like member along the XY plane. The top member 131 supports the driving system 12. Specifically, the first driving system 121 is attached to the top member 131. Namely, the top member 131 supports the first driving system 121. Moreover, since the second driving system 122 is attached to the first driving system 121 as described above, the second driving system 122 is attached to the top member 131 through the first driving system 121. Namely, the top member 131 supports the second driving system 122 through the first driving system 121. Moreover, since the light irradiation apparatus 11 is attached to the second driving system 122 as described above, the light irradiation apparatus 11 is attached to the top member 131 through the first driving system 121 and the second driving system 122. The top member 131 supports the light irradiation apparatus 11 through the first driving system 121 and the second driving system 122. The partition member 132 is disposed at (or near) an outer rim of a surface at the -Z side of the top member 131. The partition member 132 is a pipe-like (for example, a cylinder-like or rectangular pipe-like) member that extends from the top member 131 toward the -Z side. A space surrounded by the top member 131 and the partition member 132 is a containing space SP in which the light irradiation apparatus 11 and the driving system 12 are housed. Therefore, the above described driving system 12 moves the light irradiation apparatus 11 in the containing space SP. Moreover, the containing space SP includes a space between the light irradiation apparatus 11 and the coat SF of paint (especially, a space including the optical path of the processing lights EL). More specifically, the containing space SP includes a space between the terminal optical element (for example, fθ lens 1123) of the light irradiation apparatus 11 and the coat SF of paint (especially, the space including the optical path of the processing lights EL).

Each of the top member 131 and the partition member 132 is a member that is configured to shield the processing light EL. Namely, each of the top member 131 and the partition member 132 is opaque to the wavelength of the processing light EL. As a result, the processing light EL propagating in the containing space SP does not leak outside the containing space SP (namely, outside the housing apparatus 13). Note that each of the top member 131 and the partition member 132 may be a member that is configured to fade the processing light EL. Namely, each of the top member 131 and the partition member 132 is translucent to the wavelength of the processing light EL. Moreover, each of the top member 131 and the partition member 132 is a member that does not allow unnecessary substance that is generated by the irradiation of the processing light EL to pass therethrough (namely, that is configured to shield). Fume of the coat SF of paint is one example of the unnecessary substance. As a result, the unnecessary substance that is generated in the containing space SP does not leak outside the containing space SP (namely, outside the housing apparatus 13).

An end part (specifically, an end part at the coat SF of paint side and an end part at the -Z side in the example illustrated in FIG. 1) 134 of the partition member 132 is allowed to contact with the surface of the coat SF of paint. When the end part 134 contacts with the coat SF of paint, the housing apparatus 13 (namely, the top member 131 and the partition member 132) maintains a sealability of the containing space SP with the coat SF of paint. The end part 134 is configured to change a shape thereof (especially, a shape of a contact surface (the surface at the -Z side in the example illustrated in FIG. 1) of the end part 134 that contacts with the coat SF of paint, the same applies to the below described description) in accordance with a shape of the surface of the coat SF of paint when it contacts with the coat SF of paint. For example, when the end part 134 contacts with the coat SF of paint the surface of which is a planar shape, the shape of the end part 134 becomes a planar shape as with the coat SF of paint. For example, when the end part 134 contacts with the coat SF of paint the surface of which is a curved shape, the shape of the end part 134 becomes a curved shape as with the coat SF of paint. As a result, the sealability of the containing space SP improves, compared to the case where the end part 134 is not configured to change the shape thereof in accordance with the shape of the surface of the coat SF of paint. The end part 134 that is made from a member having an elasticity such as a gum (in other words, a flexible member) is one example of the end part 134 that is configured to change the shape. Note that a bellows-like end part that is a structure having an elasticity may be used as the end part 134 that is configured to change the shape, for example.

The end part 134 may be configured to adhere to the coat SF of paint in a state where it contacts with the coat SF of paint. For example, the end part 134 may be provided with a suction mechanism that is configured to suck the coat SF of paint. When the end part 134 adheres to the coat SF of paint, the sealability of the containing space SP improves more, compared to the case where the end part 134 does not adhere to the coat SF of paint. However, the end part 134 may not be configured to adhere to the coat SF of paint. Even in this case, the sealability of the containing space SP is maintained to a certain degree as long as the end part 134 contacts with the coat SF of paint.

The partition member 132 is a member that is configured to extend and contract along the Z axis by a non-illustrated driving system (for example, an actuator) that operates under the control of the control apparatus 2. For example, the partition member 132 may be a bellows-like member (what we call a bellows). In this case, the partition member 132 is configured to extend and contract due to the expansion and the contraction of the bellows-like part. Alternatively, the partition member 132 may be provided with a telescopic pipe in which a plurality of hollow cylindrical members having different diameters, respectively, are combined, for example. In this case, the partition member 132 is configured to extend and contract due to a relative movement of the plurality of cylindrical members. A state of the partition member 132 is allowed to be set to at least a first expansion state in which the partition member 132 extends along the Z axis and a size thereof in the Z axis direction is relatively long and a first contraction state in which the partition member 132 contracts along the Z axis and the size thereof in the Z axis direction is relatively short.

When the partition member 132 is in the first expansion state, the end part 134 is in a first contact state in which it is allowed to contact with the coat SF of paint. On the other hand, when the partition member 132 is in the first contraction state, the end part 134 is in a first non-contact state in which it does not contact with the coat SF of paint. Namely, when the partition member 132 is in the first contraction state, the end part 134 is in the first non-contact state in which it is away from the coat SF of paint toward the +Z side. Note that a configuration for switching the state of the end part 134 between the first contact state and the first non-contact state is not limited to a configuration that allows the partition member 132 to extend and contract. For example, the state of the end part 134 may be switched between the first contact state and the first non-contact state by means of the housing apparatus 13 itself being configured to move along the ±Z direction.

The housing apparatus 13 is further provided with a detection apparatus 135. The detection apparatus 135 detects the unnecessary substance (namely, the substance that is generated by the irradiation of the processing light EL) in the containing space SP. A detected result by the detection apparatus 135 is used by the control apparatus 2 when the state of the partition member 132 is changed from the first expansion state to the first contraction state, as described later in detail.

The support apparatus 14 supports the housing apparatus 13. Since the housing apparatus 13 supports the driving system 12 and the light irradiation apparatus 11, the support apparatus 14 substantially supports the driving system 12 and the light irradiation apparatus 11 through the housing apparatus 13. In order to support the housing apparatus 13, the support apparatus 14 is provided with a beam member 141 and a plurality of leg members 142. The beam member 141 is disposed at the +Z side than the housing apparatus 13. The beam member 141 is a beam-like member that extends along the XY plane. The beam member 141 supports the housing member 13 through supporting members 143. The plurality of leg members 142 are disposed at the beam member 141. The leg member 142 is a bar-like member that extends from the beam member 141 toward the -Z side.

An end part (specifically, an end part at the coat SF of paint side and an end part at the -Z side in the example illustrated in FIG. 1) 144 of the leg member 142 is allowed to contact with the surface of the coat SF of paint. As a result, the support apparatus 14 is supported by the coat SF of paint (namely, by the processing target object S). Namely, the support apparatus 14 supports the housing apparatus 13 in a state where the end part 144 contacts with the coat SF of paint (in other words, in a state where the support apparatus 14 is supported by the coat SF of paint). The end part 144 may be configured to change a shape thereof (especially, a shape of a contact surface (the surface at the -Z side in the example illustrated in FIG. 1) of the end part 144 that contacts with the coat SF of paint, the same applies to the below described description) in accordance with the shape of the surface of the coat SF of paint when it contacts with the coat SF of paint, as with the end part 134 of the housing apparatus 13. The end part 144 may be configured to adhere to the coat SF of paint in a state where it contacts with the coat SF of paint. For example, the end part 144 may be provided with a suction mechanism that is configured to suck the coat SF of paint. When the end part 144 adheres to the coat SF of paint, a stability of the support apparatus 14 improves more, compared to the case where the end part 144 does not adhere to the coat SF of paint. However, the end part 144 may not be configured to adhere to the coat SF of paint.

The beam member 141 is a member that is configured to extend and contract along at least one of the X axis and the Y axis (alternatively, along any direction along the XY plane) by the driving system 15 that operates under the control of the control apparatus 2. For example, the beam member 141 may be provided with a telescopic pipe in which a plurality of hollow cylindrical members having different diameters, respectively, are combined, for example. In this case, the beam member 141 is configured to extend and contract due to a relative movement of the plurality of cylindrical members.

The leg member 142 is a member that is configured to extend and contract along the Z axis by the driving system 15 that operates under the control of the control apparatus 2. For example, the leg member 142 may be provided with a telescopic pipe in which a plurality of hollow cylindrical members having different diameters, respectively, are combined, for example. In this case, the leg member 142 is configured to extend and contract due to a relative movement of the plurality of cylindrical members. A state of the leg member 142 is allowed to be set to at least a second expansion state in which the leg member 142 extends along the Z axis and a size thereof in the Z axis direction is relatively long and a second contraction state in which the leg member 142 contracts along the Z axis and the size thereof in the Z axis direction is relatively short. When the leg member 142 is in the second expansion state, the end part 144 is in a second contact state in which it is allowed to contact with the coat SF of paint. On the other hand, when the leg member 142 is in the second contraction state, the end part 144 is in a second non-contact state in which it does not contact with the coat SF of paint. Namely, when the leg member 142 is in the second contraction state, the end part 144 is in the second non-contact state in which it is away from the coat SF of paint toward the +Z side.

The driving system 15 moves the support apparatus 14 relative to the coat SF of paint (namely, relative to the processing target object S on the surface of which the coat SF of paint is formed) under the control of the control apparatus 2. Namely, the driving system 15 moves the support apparatus 14 relative to the coat SF of paint so as to change a relative positional relationship between the support apparatus 14 and the coat SF of paint. Since the support apparatus 14 supports the housing apparatus 13, the driving system 15 substantially moves the housing apparatus 13 relative to the coat SF of paint by moving the support apparatus 14. Namely, the driving system 15 moves the support apparatus 14 relative to the coat SF of paint so as to substantially change a relative positional relationship between the housing apparatus 13 and the coat SF of paint. Moreover, the housing apparatus 13 supports the light irradiation apparatus 11 through the driving system 12. Thus, the driving system 15 is allowed to substantially move the light irradiation apparatus 11 relative to the coat SF of paint by moving the support apparatus 14. Namely, the driving system 15 is allowed to move the support apparatus 14 relative to the coat SF of paint so as to substantially change the relative positional relationship between the light irradiation apparatus 11 and the coat SF of paint. In other words, the driving system 15 is allowed to move the support apparatus 14 relative to the coat SF of paint so as to substantially change the relative positional relationship between the plurality of target irradiation areas EA and the coat SF of paint.

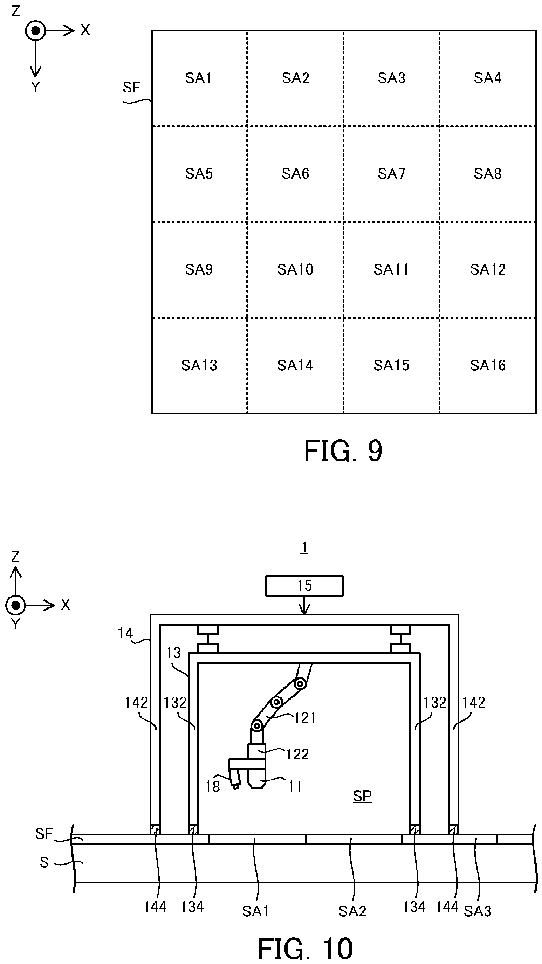

The driving system 15 extends and contracts the beam member 141 in order to move the support apparatus 14 under the control of the control apparatus 2. Moreover, the driving system 15 extends and contracts the plurality of leg members 142 in order to move the support apparatus 14 under the control of the control apparatus 2. Note that a moving aspect of the support apparatus 14 by the driving system 15 will be described later in detail with reference to FIG. 9 to FIG. 20.

The exhaust apparatus 16 is coupled to the containing space SP through an exhaust pipe 161. The exhaust apparatus 16 is configured to exhaust gas in the containing space SP. Especially, the exhaust apparatus 16 is configured to suck the unnecessary substance that is generated by the irradiation of the processing light EL from the containing space SP to an outside of the containing space SP by exhausting the gas in the containing space SP. Especially, when the unnecessary substance is on the optical path of the processing lights EL, there is a possibility that the irradiation of the processing lights EL to the coat SF of paint is affected. Thus, the exhaust apparatus 16 especially sucks, from a space including the optical path of the processing lights EL between the terminal optical element of the optical system 112 and the coat SF of paint, the unnecessary substance with the gas in this space. The unnecessary substance sucked by the exhaust apparatus 16 from the containing space SP is discharged to the outside of the processing apparatus 1 through a filter 162. The filter 162 sorbs the unnecessary substance. Note that the filter 162 may be attachable and detachable and may be replaceable.

The gas supply apparatus 17 is coupled to the containing space SP through an intake pipe 171. The gas supply apparatus 17 is configured to supply gas to the containing space SP. The gas that is supplied to the containing space SP includes at least one of an air, a CDA (Clean Dry Air) and an inert gas. A nitrogen gas is one example of the inert gas. In the first embodiment, the gas supply apparatus 17 supplies the CDA. Thus, the containing space SP is a space that is purged by the CDA. At least a part of the CDA supplied to the containing space SP is sucked by the exhaust apparatus 16. The CDA sucked by the exhaust apparatus 16 from the containing space SP is discharged to the outside of the processing system SYSa through the filter 162.

The gas supply apparatus 17 especially supplies the gas such as the CDA to an optical surface 1124 at the containing space SP side of the fθ lens 1123 (namely, an optical surface at the containing space SP side of the terminal optical element of the optical system 112) illustrated in FIG. 3. There is a possibility that the optical surface 1124 is exposed to the unnecessary substance that is generated by the irradiation of the processing light EL, because the optical surface 1124 faces the containing space SP. As a result, there is a possibility that the unnecessary substance adheres to the optical surface 1124. Moreover, there is a possibility that the unnecessary substance adhering to the optical surface 1124 is backed (namely, is firmly fixed) by the processing light EL passing through the optical surface 1124, because the processing lights EL pass through the optical surface 1124. The unnecessary substance adhering (moreover, firmly fixed) to the optical surface 1124 becomes a dust to be likely to affect a characteristic of the processing lights EL. However, when the gas such as the CDA is supplied to the optical surface 1124, a contact between the optical surface 1124 and the unnecessary substance is prevented. Thus, an adherence of the dust to the optical surface 1124 is prevented. Therefore, the gas supply apparatus 17 also serves as an adherence prevention apparatus that prevents the adherence of the dust to the optical surface 1124. Moreover, even when the dust adheres (moreover, is firmly fixed) to the optical surface 1124, there is a possibility that the dust is removed (for example, is blown) by the CDA supplied to the optical surface 1124. Therefore, the gas supply apparatus 17 also serves as an adherence prevention apparatus that removes the dust adhering to the optical surface 1124.

The position measurement apparatus 18 measures the relative positional relationship between the coat SF of paint and the light irradiation apparatus 11. Namely, the position measurement apparatus 18 measures the relative positional relationship between the processing target object S and the light irradiation apparatus 11. In the first embodiment, the position measurement apparatus 18 measures a position of the coat SF of paint relative to the light irradiation apparatus 11. Namely, the position measurement apparatus 18 measures a position of the processing target object S relative to the light irradiation apparatus 11.

In order to measure the position of the coat SF of paint (namely, the position of the processing target object SF) relative to the light irradiation apparatus 11, the position measurement apparatus 18 may measure the coat SF of paint. Namely, the position measurement apparatus 18 may measure the processing target object SF. In this case, the position measurement apparatus 18 may be referred to as an object measurement apparatus, because it measures an object including at least one of the coat SF of paint and the processing target object S.

The position measurement apparatus 18 may be disposed at a position that is fixed relative to the light irradiation apparatus 11 (especially, the optical system 112). The position measurement apparatus 18 may be disposed at a position at which a relative position relative to the light irradiation apparatus 11 is fixed. The position measurement apparatus 18 may be disposed at a position at which a relative position of the light irradiation apparatus 11 and the position measurement apparatus 18 does not change even when the driving system 12 moves the light irradiation apparatus 11. For example, FIG. 1 illustrates an example in which the position measurement apparatus 18 is attached to the attachment member 19 to which the light irradiation apparatus 11 is attached. However, the position measurement apparatus 18 may be attached to a member that is different from the attachment member 19. For example, the position measurement apparatus 18 may be attached to the light irradiation apparatus 11. For example, the position measurement apparatus 18 may be attached to the above described housing 114 (see FIG. 4).

When the position measurement apparatus 18 is disposed at the position that is fixed relative to the light irradiation apparatus 11, an output from the position measurement apparatus 18 (namely, a measured result by the position measurement apparatus 18) includes information relating to a position of the coat SF of paint relative to the light irradiation apparatus 11. Specifically, the measured result by the position measurement apparatus 18 includes information relating to a position of the coat SF of paint relative to the position measurement apparatus 18. Namely, the measured result by the position measurement apparatus 18 includes information relating to a position of the coat SF of paint in a measurement coordinate system of the position measurement apparatus 18. Here, when the position measurement apparatus 18 is disposed at the position that is fixed relative to the light irradiation apparatus 11, the information relating to the position of the coat SF of paint relative to the position measurement apparatus 18 substantially includes the information relating to the position of the coat SF of paint relative to the light irradiation apparatus 11 that is disposed at the position fixed relative to the position measurement apparatus 18. Therefore, the control apparatus 2 properly determines the position of the coat SF of paint relative to the light irradiation apparatus 11.

The position measurement apparatus 18 may be any type of measurement apparatus, as long as it is configured to measure the coat SF of paint. For example, the position measurement apparatus 18 may include an imaging apparatus (namely, a camera) that is configured to image an object such as the coat SF of paint. The position measurement apparatus 18 may include an irradiation apparatus that irradiates the coat SF of paint with measurement light that forms a predetermined pattern on the coat SF of paint and an imaging apparatus that images the pattern formed on the coat SF of paint by the measurement light. Like this, the position measurement apparatus 18 may be a measurement apparatus that measures the coat SF of paint by using a non-contact method (as one example, at least one of a light detection method, a sound wave detection method, a radio wave detection method and so on). Note that a plurality of measurement apparatuses 18 may be provided. In this case, measurement axes (typically, optical axes in a light measurement method such as an imaging method) of the position measurement apparatuses 18 may intersect with (alternatively, skew with respect to) each other or may be parallel to (alternatively, coaxial to) each other.

The control apparatus 2 controls an entire operation of the processing system SYSa. Especially, the control apparatus 2 controls the light irradiation apparatus 11, the driving system 12, the housing apparatus 13 and the driving system 15 so that the concave part C having a desired shape is formed at a desired position, as described later in detail.

The control apparatus 2 may include a CPU (Central Processing Unit) (alternatively, a GPU (Graphic Processing Unit) in addition to or instead of the CPU) and a memory, for example. The control apparatus 2 serves as an apparatus for controlling the operation of the processing system SYSa by means of the CPU executing a computer program. The computer program is a computer program that allows the control apparatus 2 (for example, the CPU) to execute (namely, to perform) a below described operation that should be executed by the control apparatus 2. Namely, the computer program is a computer program that allows the control apparatus 2 to function so as to make the processing system SYSa execute the below described operation. The computer program executed by the CPU may be recorded in the memory (namely, a recording medium) of the control apparatus 2, or may be recorded in any recording medium (for example, a hard disk or a semiconductor memory) that is built in the control apparatus 2 or that is attachable to the control apparatus 2. Alternatively, the CPU may download the computer program that should be executed from an apparatus disposed at the outside of the control apparatus 2 through a network interface.

The control apparatus 2 may not be disposed in the processing system SYSa, and may be disposed at the outside of the processing system SYSa as a server or the like. In this case, the control apparatus 2 may be connected to the processing system SYSa through a wired and / or wireless network (alternatively, a data bus and / or a communication line). A network using a serial-bus-type interface such as at least one of IEEE1394, RS-232x, RS-422, RS-423, RS-485 and USB may be used as the wired network. A network using a parallel-bus-type interface may be used as the wired network. A network using an interface that is compatible to Ethernet (a registered trademark) such as at least one of 10-BASE-T, 100BASE-TX or 1000BASE-T may be used as the wired network. A network using an electrical wave may be used as the wireless network. A network that is compatible to IEEE802.1x (for example, at least one of a wireless LAN and Bluetooth (registered trademark)) is one example of the network using the electrical wave. A network using an infrared ray may be used as the wireless network. A network using an optical communication may be used as the wireless network. In this case, the control apparatus 2 and the processing system SYSa may be configured to transmit and receive various information through the network. Moreover, the control apparatus 2 may be configured to transmit information such as a command and a control parameter to the processing system SYSa through the network. The processing system SYSa may be provided with a receiving apparatus that receives the information such as the command and the control parameter from the control apparatus 2 through the network. Alternatively, a first control apparatus that performs a part of the processing performed by the control apparatus 2 may be disposed in the processing system SYSa and a second control apparatus that performs another part of the processing performed by the control apparatus 2 may be disposed at the outside of the processing system SYSa.

Note that the recording medium recording therein the computer program that should be executed by the CPU may include an optical disc such as a CD-ROM, a CD-R, a CD-RW, a flexible disc, a MO, a DVD-ROM, a DVD-RAM, a DVD-R, a DVD+R, a DVD-RW, a DVD+RW and a Blu-ray (registered trademark), a magnetic disc such as a magnetic tape, an optical-magnetic disc, a semiconductor memory such as a USB memory, and another medium that is configured to store the program. The recording medium may include a device that is configured to record the computer program (for example, a device for a universal use or a device for an exclusive use in which the computer program is embedded to be executable in a form of at least one of a software, a firmware and the like). Moreover, various processes or functions included in the computer program may be realized by a logical process block that is realized in the control apparatus 2 by means of the control apparatus 2 (namely, a computer) executing the computer program, may be realized by a hardware such as a predetermined gate array (a FPGA, an ASIC) of the control apparatus 2, or may be realized in a form in which the logical process block and a partial hardware module that realizes an partial element of the hardware are combined.

### (1-2) Structure of Driving System 12

Next, a structure of the driving system 12 will be described. As described above, since the driving system 12 is provided with the first driving system 121 and the second driving system 122, a structure of the first driving system 121 and a structure of the second driving system 122 will be described in sequence in the below described description.

### (1-2-1) Structure of First Driving System 121

Firstly, with reference to FIG. 5, the structure of the first driving system 121 will be described. FIG. 5 is a cross-sectional view that illustrates the structure of the first driving system 121.

As illustrated in FIG. 5, the first driving system 121 is provided with a base 1211 and an arm driving system 1212.

The base 1211 is attached to the top member 131 of the housing apparatus 13. The arm driving system 1212 is attached to the base 1211. The base 1211 support the arm driving system 1212. The base 1211 is used as a base member for supporting the arm driving system 1212.

The arm driving system 121 is provided with a plurality of arm members 12121. The plurality of arm members 12121 are coupled in a pivotable manner through at least one joint member 12122. Therefore, the arm driving system 1212 is a robot that has what we call vertically articulated structure. The arm driving system 1212 may be provided with single joint (namely, a driving axis defined by the joint member 12122). Alternatively, the arm driving system 1212 may be provided with a plurality of joints. FIG. 5 illustrates an example in which the arm driving system 1212 is provided with three joints. Two arm member 12121 that are coupled through each joint pivot by an actuator 12123 corresponding to each joint. FIG. 5 illustrates an example in which the arm driving system 1212 is provided with three actuators 12123 corresponding to the three joints. As a result, at least one arm member 12121 moves. Thus, at least one arm member 12121 is movable relative to the coat SF of paint. Namely, at least one arm member 12121 is movable so that a relative positional relationship between at least one arm member 12121 and the coat SF of paint.

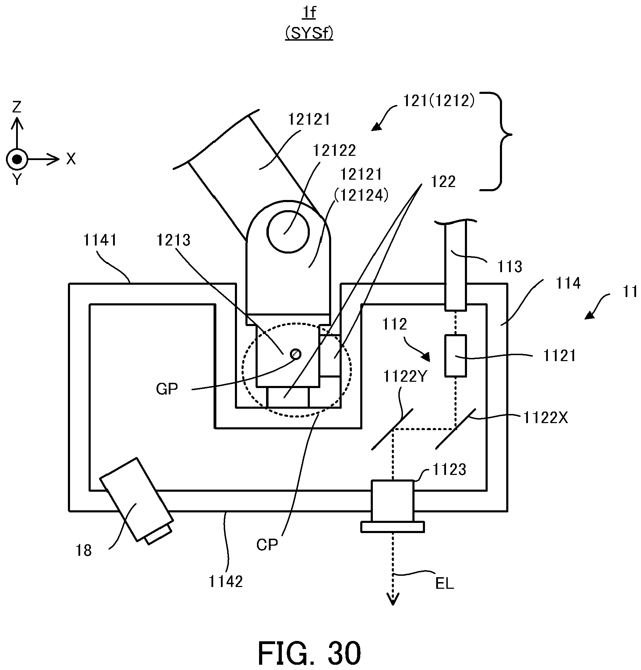

The second driving system 122 is attached to the arm driving system 1212. Specifically, the second driving system 122 is attached to one arm member 12121, which is located at a position that is farthest from the base 1211, of the plurality of arm members 12121. In the below described description, one arm member 12121 to which the second driving system 122 is attached is referred to as a tip arm member 12124 for convenience of the description. The second driving system 122 may be directly attached to the tip arm member 12121, or may be indirectly attached to the tip arm member 12121 through another member (for example, an attachment member 1213 and so on that will be described in a below described sixth embodiment with reference to FIG. 30).

When the tip arm member 12124 moves by the above described actuator 12123, the second driving system 122 attached to the tip arm member 12124 also moves. Thus, the arm driving system 1212 (namely, the first driving system 121) moves the second driving system 122. Specifically, the arm driving system 1212 moves the second driving system 122 so that a relative positional relationship between the second driving system 122 and the coat SF of paint. Moreover, when the second driving system 122 moves, the light irradiation apparatus 11 attached to the second driving system 122 also moves. Thus, the arm driving system 1212 (namely, the first driving system 121) moves the light irradiation apparatus 11.

The control apparatus 2 may control the arm driving system 1212 on the basis of the measured result by the position measurement apparatus 18. Specifically, the control apparatus 2 may obtain information relating to the relative positional relationship between the coat SF of paint and the light irradiation apparatus 11 on the basis of the measured result by the position measurement apparatus 18 and control the arm driving system 1212 on the basis of the information relating to the relative positional relationship between the coat SF of paint and the light irradiation apparatus 11. Incidentally, when the position measurement apparatus 189 is provided with the imaging apparatus, the control apparatus 2 may control the arm driving system 1212 by using a vision-based servo (a visual servo) based on the measured result by the position measurement apparatus 18 (namely, the image that is captured by the imaging apparatus). Note that the vision-based servo may be referred to as a vision servo. Moreover, the light irradiation apparatus 11 may be provided with an acceleration sensor as a motion measurement sensor for measuring a vibration thereof. In this case, the control apparatus 2 may control the arm driving system 1212 on the basis of a measured result by the acceleration sensor.

As one example, for example, the control apparatus 2 may control the arm driving system 1212 so that the light irradiation apparatus 11 moves relative to the coat SF of paint. Namely, the control apparatus 2 may control the arm driving system 1212 to change the relative position of the light irradiation apparatus 11 and the coat SF of paint. In this case, the control apparatus 2 may control the arm driving system 1212 to perform an alignment of the coat SF of paint and the light irradiation apparatus 11. The control apparatus 2 may control the arm driving system 1212 to perform an alignment of the coat SF of paint and the target irradiation area EA that is irradiated with the processing light EL by the light irradiation apparatus 11. As one example, the control apparatus 2 may control the arm driving system 1212 so that the target irradiation area EA is set at a desired position on the coat SF of paint (namely, it is irradiated with the processing light EL). The control apparatus 2 may control the arm driving system 1212 so that the target irradiation area EA moves along a desired path on the coat SF of paint. Note that the control apparatus 2 may control the arm driving system 1212 by using an output of an encoder that is provided at a joint part of the arm driving system 1212 and that detects an angle between the plurality of arm members 12121.

Note that "the relative position of the light irradiation apparatus 11 and the coat SF of paint" in the first embodiment means the relative position of the light irradiation apparatus 11 and the coat SF of paint in at least one of the X axis direction, the Y axis direction, the Z axis direction, the rotational direction around the X axis (namely, the rotational direction corresponding to the θX direction), the rotational direction around the Y axis (namely, the rotational direction corresponding to the θY direction) and the rotational direction around the Z axis (namely, the rotational direction corresponding to the θZ direction). Namely, "the relative position of the light irradiation apparatus 11 and the coat SF of paint" in the first embodiment may include a relative attitude of the light irradiation apparatus 11 and the coat SF of paint.

The position measurement apparatus 18 may measure a relative positional relationship between the coat SF of paint and the irradiation position of the processing light EL (for example, the irradiation position of the processing light EL on the coat SF of paint) in addition to or instead of the relative positional relationship between the light irradiation apparatus 11 and the coat SF of paint because the relative position of the target irradiation area EA and the coat SF of paint is changed when the relative position of the light irradiation apparatus 11 and the coat SF of paint is changed. For example, the position measurement apparatus 18 may measure the irradiation position of the processing light EL relative to the coat SF of paint in at least a part of a period when the light irradiation apparatus 11 irradiates the coat SF of paint with the processing light EL. For example, the position measurement apparatus 18 may measure the irradiation position of the processing light EL relative to the coat SF of paint (namely, a position that is actually irradiated with the processing light EL, for example, a position of a part that is processed by the processing light EL) after the light irradiation apparatus 11 completes irradiating the coat SF of paint with the processing light EL. For example, the position measurement apparatus 18 may measure the irradiation position of the processing light EL on a sensitive member (namely, a position of a part of the sensitive member a characteristic of which is changed by the irradiation of the processing light EL) after the light irradiation apparatus 11 completes irradiating the sensitive member (specifically, a member a characteristic of which is changed by the irradiation of the processing light EL, for example, a sensitive member PE described in a third embodiment) formed on the coat SF of paint with the processing light EL. Even in this case, the control apparatus 2 may control the arm driving system 1212 on the basis of the measured result by the position measurement apparatus 18 to perform the alignment of the coat SF of paint and the light irradiation apparatus 11 (namely, alignment of the coat SF of paint and the target irradiation area EA). Note that the position measurement apparatus 18 may measure the irradiation position of the processing light EL itself. In this case, the position measurement apparatus 18 may measure a light having a wavelength of the processing light EL.

Note that the first driving system 121 is not limited to the articulated robot and may have any structure as long as it is allowed to move the second driving system 122 relative to the coat SF of paint. For example, the first driving system 121 may be an orthogonal multi-axis movable body in which a plurality of linear guides are combined. For example, it may be an orthogonal two-axis movable body in which a first linear guide is provided along a first direction in a predetermined plane, a second linear guide is provided along a second direction that intersects with (typically, is perpendicular to) the first direction on a movable body (a first moving block) of the first linear guide. In this case, the second driving system may be attached to a movable body (a second moving block) of the second linear guide. Moreover, a third linear guide may be provided along a third direction that intersects with the above described predetermined plane on the movable body (the second moving block) of the second linear guide in the above described orthogonal two-axis movable body. In this orthogonal three-axis movable body, the second driving system 122 may be attached to a movable body (a third moving block) of the third linear guide.

### (1-2-2) Structure of Second Driving System 122

Next, with reference to FIG. 6, the structure of the second driving system 122 will be described. FIG. 6 is a cross-sectional view that illustrates the structure of the second driving system 122.

As illustrated in FIG. 6, the second driving system 122 is provided with a support member 1221, a support member 1222, an air spring 1223, a damper member 1224 and a driving member 1225.

The support member 1221 is attached to the first driving system 121. Specifically, the support member 1221 is attached to the tip arm member 12124 of the first driving system 121. The support member 1221 is fixed to the tip arm member 12124 so that an attachment surface 1221a of the support member 1221 and an attachment surface 12124a that is formed at a tip of the tip arm member 12124 contact with each other. Here, the attachment surface 12124a may be regarded as a part that moves relative to the coat SF of paint that is an object. The support member 1222 is attached to the light irradiation apparatus 11 through the attachment member 19. The support member 1222 is fixed to the attachment member 19 so that an attachment surface 1222a of the support member 1222 and a first attachment surface 19a of the attachment member 19 contact with each other. And, the light irradiation apparatus 11 is attached to the attachment member 19 so that a second attachment surface 19b of the attachment member 19 and a part of an outer surface of the light irradiation apparatus 11 contact with each other.

The support member 1221 is coupled (in other words, interlocked or connected) to the support member 1222 through the air spring 1223, the damper member 1224 and the driving member 1225. Specifically, the support member 1222 through the air spring 1223, the damper member 1224 and the driving member 1225 are disposed between a second surface (a surface at the -Z side in an example illustrated in FIG. 6) of the support member 1221 that is on an opposite side of a first surface (a surface at the +Z side in the example illustrated in FIG. 6) thereof to which the first driving system 121 is attached and a fourth surface (a surface at the +Z side in the example illustrated in FIG. 6) of the support member 1222 that is on an opposite side of a third surface (a surface at the -Z side in the example illustrated in FIG. 6) thereof to which the attachment member 19 is attached to couple the support member 1221 and the support member 1222. Namely, each of the air spring 1223, the damper member 1224 and the driving member 1225 is attached to the support members 1221 and 1222 to couple the support member 1221 and the support member 1222. Since the first driving system 121 is attached to the support member 1221 and the light irradiation apparatus 11 is attached to the support member 1222, it can be said that each of the air spring 1223, the damper member 1224 and the driving member 1225 is attached to the support members 1221 and 1222 to couple the first driving system 121 and the light irradiation apparatus 11.

The air spring 1223 applies an elastic force caused by a pressure of gas (as one example, air) to at least one of the support members 1221 and 1222 under the control of the control apparatus 2. The air spring 1223 applies the elastic force caused by the pressure of the gas to at least one of the first driving system 121 and the light irradiation apparatus 11 through at least one of the support members 1221 and 1222 under the control of the control apparatus 2. Especially, the air spring 1223 may apply the elastic force caused by the pressure of the gas to at least one of the support members 1221 and 1222 along a direction (the Z axis direction and the gravity direction in the example illustrated in FIG. 6) in which the support member 1221 and the support member 1222 are arranged. Namely, the air spring 1223 may apply the elastic force caused by the pressure of the gas to at least one of the first driving system 121 and the light irradiation apparatus 11 through at least one of the support members 1221 and 1222 along a direction (the Z axis direction and the gravity direction in the example illustrated in FIG. 6) in which the first driving system 121 (especially, the tip arm member 12124) and the light irradiation apparatus 11 are arranged. Note that the air spring 1223 may be referred to as an elastic member.

In order to apply the elastic force caused by the pressure of the gas, the gas is supplied to the air spring 1223 from a gas supply apparatus 12261 through a pipe 12262 and a valve 12263. The control apparatus 2 controls at least one of the gas supply apparatus 12261 and the valve 12263 on the basis of a measured result by a pressure sensor 1226 that measures a pressure of the gas in the air spring 1223. Note that the air supply apparatus 12261, the pipe 12262 and the valve 12263 may not be provided. In this case, the air spring 1223 may apply the elastic force caused by the pressure therein to at least one of the support members 1221 and 1222 regardless of the control of the control apparatus 2.

The air spring 1223 may support a weight of the support member 1222 by using the elastic force under the control of the control apparatus 2. Specifically, the air spring 1223 may support the weight of the support member 1222 along a direction in which the support member 1221 and the support member 1222 are arranged by using the elastic force. Since the light irradiation apparatus 11 is attached to the support member 1222, the air spring 1223 may support a weight of the light irradiation apparatus 11 attached to the support member 1222 by using the elastic force. Specifically, the air spring 1223 may support the weight of the light irradiation apparatus 11 along a direction in which the first driving system 121 (especially, the tip arm member 12124) and the light irradiation apparatus 11 are arranged by using the elastic force. In this case, the air spring 1223 may serve as a weight canceler that cancels the weight of the light irradiation apparatus 11. Note that the air spring 1223 may support the weight of the support member 1222 by using the elastic force regardless of the control of the control apparatus 2.

The air spring 1223 may reduce a vibration, which is transmitted between the first driving system 121 and the light irradiation apparatus 11 through the second driving system 122, by using the elastic force under the control of the control apparatus 2. Namely, the air spring 1223 may damp the vibration, which is transmitted between the first driving system 121 and the light irradiation apparatus 11 through the second driving system 122, by using the elastic force. Specifically, the air spring 1223 may reduce (damp) the vibration, which propagates (is transmitted) from the first driving system 121 to the light irradiation apparatus 11 through the second driving system 122, by using the elastic force. Namely, the air spring 1223 may reduce (damp) the vibration, which propagates (is transmitted) from a part of the first driving system 121 (namely, the tip arm part 12124) to which the second driving system 122 is attached to a part of the light irradiation apparatus 11 to which the second driving system 122 is attached, by using the elastic force. In this case, the control apparatus 2 controls at least one of the gas supply apparatus 12261 and the valve 12263 on the basis of the measured result by the pressure sensor 1226 so that the vibration that is transmitted between the first driving system 121 and the light irradiation apparatus 11 through the second driving system 122 is reduced (namely, is damped). Note that the air spring 1223 may be referred to as a vibration reduction apparatus or a vibration damping apparatus. Note that the air spring 1223 may reduce the vibration, which is transmitted between the first driving system 121 and the light irradiation apparatus 11 through the second driving system 122, by using the elastic force regardless of the control of the control apparatus 2.

Reducing the vibration that propagates from the first driving system 121 to the light irradiation apparatus 11 may include allowing an amount of the vibration of the light irradiation apparatus 11 to be reduced (namely, to be smaller) than an amount of the vibration (namely, an amplitude of the vibration) of the first driving system 121. Reducing the vibration that propagates from the first driving system 121 to the light irradiation apparatus 11 may include allowing an amount of the vibration of the part of the light irradiation apparatus 11 (namely, the tip arm part 12124) to which the second driving system 122 is attached to be reduced than an amount of the vibration of the part of the first driving system 121 (namely, the tip arm part 12124) to which the second driving system 122 is attached. Reducing the vibration that propagates from the first driving system 121 to the light irradiation apparatus 11 may include allowing an amount of the vibration of support member 1222 to which the light irradiation apparatus 11 is attached to be reduced than an amount of the vibration of the support member 1221 to which the first driving system 121 is attached. Incidentally, when the air spring 1223 does not reduce the vibration that propagates from the first driving system 121 to the light irradiation apparatus 11, the amount of the vibration of the first driving system 121 is substantially equal to the amount of the vibration of the light irradiation apparatus 11. Namely, the amount of the vibration of the support member 1121 is substantially equal to the amount of the vibration of the support member 1122. Thus, reducing the vibration that propagates from the first driving system 121 to the light irradiation apparatus 11 may include reducing the amount of the vibration of the light irradiation apparatus 11 compared to the case where the vibration that propagates from the first driving system 121 to the light irradiation apparatus 11 is not reduced. Reducing the vibration that propagates from the first driving system 121 to the light irradiation apparatus 11 may include reducing the amount of the vibration of the support member 1122 compared to the case where the vibration that propagates from the first driving system 121 to the light irradiation apparatus 11 is not reduced. Moreover, the amount of the vibration here may mean an amount of the vibration relative to any object. For example, the amount of the vibration of the first driving system 121, the amount of the vibration of the light irradiation apparatus 11, the amount of the vibration of the support member 1221 and the amount of the vibration of the support member 1222 may mean the amount of the vibration of the first driving system 121 relative to the coat SF of paint (alternatively, the processing target object SF, the same applies to the below described description), the amount of the vibration of the light irradiation apparatus 11 relative to the coat SF of paint, the amount of the vibration of the support member 1221 relative to the coat SF of paint and the amount of the vibration of the support member 1222 relative to the coat SF of paint, respectively.

The damper member 1224 applies an elastic force caused by a factor different from the pressure of the air to at least one of the support members 1221 and 1222. The damper member 1224 applies the elastic force caused by the factor different from the pressure of the air to at least one of the first driving system 121 and the light irradiation apparatus 11 through at least one of the support members 1221 and 1222. Especially, the damper member 1224 may apply the elastic force to at least one of the support members 1221 and 1222 along a direction (the Z axis direction and the gravity direction in the example illustrated in FIG. 6) in which the support member 1221 and the support member 1222 are arranged. Namely, the damper member 1224 may apply the elastic force to at least one of the first driving system 121 and the light irradiation apparatus 11 through at least one of the support members 1221 and 1222 along a direction (the Z axis direction and the gravity direction in the example illustrated in FIG. 6) in which the first driving system 121 (especially, the tip arm member 12124) and the light irradiation apparatus 11 are arranged. Note that the damper member 1224 may be referred to as an elastic member.

The damper member 1224 may be any member as long as it is configured to apply the elastic force. For example, the damper member 1224 may include a compressed spring coil. For example, the damper member 1224 may include a plate spring.

The damper member 1224 may support a weight of the support member 1222 by using the elastic force. Specifically, the damper member 1224 may support the weight of the support member 1222 along a direction in which the support member 1221 and the support member 1222 are arranged by using the elastic force. Since the light irradiation apparatus 11 is attached to the support member 1222, the damper member 1224 may support a weight of the light irradiation apparatus 11 attached to the support member 1222 by using the elastic force. Specifically, the damper member 1224 may support the weight of the light irradiation apparatus 11 along a direction in which the first driving system 121 (especially, the tip arm member 12124) and the light irradiation apparatus 11 are arranged by using the elastic force. In this case, the damper member 1224 may serve as a weight canceler that cancels the weight of the light irradiation apparatus 11.

The damper member 1224 may reduce a vibration, which is transmitted between the first driving system 121 and the light irradiation apparatus 11 through the second driving system 122, by using the elastic force. Namely, the damper member 1224 may damp the vibration, which is transmitted between the first driving system 121 and the light irradiation apparatus 11 through the second driving system 122, by using the elastic force. Specifically, the damper member 1224 may reduce (damp) the vibration, which propagates (is transmitted) from the first driving system 121 to the light irradiation apparatus 11 through the second driving system 122, by using the elastic force. Thus, the damper member 1224 may be referred to as a vibration reduction apparatus or a vibration damping apparatus.

The damper member 1224 may convert the vibration of the air spring 1223 to a damping vibration by using the elastic force. Namely, the damper member 1224 may convert the vibration, which is transmitted between the first driving system 121 and the light irradiation apparatus 11 through the second driving system 122, to the damping vibration by using the elastic force.

The driving member 1225 is configured to generate a driving force under the control of the control apparatus 2. The driving member 1225 is configured to apply the generated driving force to at least one of the support members 1221 and 1222. The driving member 1225 is configured to apply the generated driving force to at least one of the first driving system 121 and the light irradiation apparatus 11 through at least one of the support members 1221 and 1222. The driving member 1225 may have any structure as long as it is configured to generate the driving force. For example, the driving member 1225 may have a structure that is configured to electrically generate the driving force. For example, the driving member 1225 may have a structure that is configured to magnetically generate the driving force. As one example, FIG. 6 illustrates an example in which the driving member 1225 a voice coil motor (VCM: Voice Coil Motor) that is configured to electrically generate the driving force. Note that the driving member 1225 may be a linear motor that is different from the voice coil motor, although the voice coil motor is a type of linear motor. The driving member 1225 may generate the driving force along a linear axis.

Note that the driving member 1225 may have a structure in which a member of the driving member 1225 that is attached to the support member 1221 does not physically contact with a member of the driving member 1225 that is attached to the support member 1222. For example, when the driving member 1225 is the voice coil motor, the member (for example, a member including either one of a coil and a magnetic pole) of the driving member 1225 that is attached to the support member 1221 does not physically contact with a member (for example, a member including the other one of a coil and a magnetic pole) of the driving member 1225 that is attached to the support member 1222

The driving member 1225 may move at least one of the support members 1221 and 1222 by using the driving force under the control of the control apparatus 2. The driving member 1225 may move at least one of the first driving system 121 and the light irradiation apparatus 11 by moving at least one of the support members 1221 and 1222 by using the driving force under the control of the control apparatus 2. In this case, the driving member 1225 may change a relative position of the first driving system 121 and the light irradiation apparatus 11 by moving at least one of the first driving system 121 and the light irradiation apparatus 11 by using the driving force. Note that "the relative position of the first driving system 121 and the light irradiation apparatus 11" in the first embodiment means a relative position of the first driving system 121 and the light irradiation apparatus 11 in at least one of the X axis direction, the Y axis direction, the Z axis direction, the rotational direction around the X axis, the rotational direction around the Y axis and the rotational direction around the Z axis. Namely, "the relative position of the first driving system 121 and the light irradiation apparatus 11" in the first embodiment may include a relative attitude of the first driving system 121 and the light irradiation apparatus 11. In this case, it can be said that the second driving system 122 including the driving member 1225 couples the first driving system 121 and the light irradiation apparatus 11 so that the relative position of the first driving system 121 and the light irradiation apparatus 11 is changeable. Namely, it can be said that the air spring 1223 and the damper member 1224 (furthermore, the driving member 1225) couple the first driving system 121 and the light irradiation apparatus 11 so that the relative position of the first driving system 121 and the light irradiation apparatus 11 is changeable by the driving member 1225. Note that the driving member 1225 may be referred to as a position change apparatus.

The driving member 1225 may change the relative position of the first driving system 121 and the light irradiation apparatus 11 on the basis of a measured result by a position measurement apparatus 1227 of the second driving system 122 under the control of the control apparatus 2. The position measurement apparatus 1226 measures the relative position of the first driving system 121 and the light irradiation apparatus 11. For example, the position measurement apparatus 1226 is an encoder that includes a detection part 12261 that is attached to the support member 1221 and a scale part 12262 that is attached to the support member 1222. The measured result by the position measurement apparatus 1226 includes information relating to the relative position of the support member 1221 and the support member 1222. Since the first driving system 121 is attached to the support member 1221 and the light irradiation apparatus 11 is attached to the support member 1222, the information relating to the relative position of the support member 1221 and the support member 1222 includes information relating to the relative position of the first driving system 121 and the light irradiation apparatus 11. Therefore, the control apparatus 2 properly determines the relative position of the first driving system 121 and the light irradiation apparatus 11. As a result, the control apparatus 2 properly changes the relative position of the first driving system 121 and the light irradiation apparatus 11 on the basis of the measured result by the position measurement apparatus 1227.

The driving member 1225 may move the light irradiation apparatus 11 relative to the coat SF of paint by changing the relative position of the first driving system 121 and the light irradiation apparatus 11 (typically, moving the light irradiation apparatus 11 relative to the first driving system 121) under the control of the control apparatus 2. The driving member 1225 may move the light irradiation apparatus 11 so that the relative positional relationship between the light irradiation apparatus 11 and the coat SF of paint is changed. In this case, the control apparatus 2 may control the driving member 1225 on the basis of the measured result by the position measurement apparatus 18 in addition to or instead of the measured result by the position measurement apparatus 1227. Specifically, the control apparatus 2 may obtain information relating to the relative positional relationship between the light irradiation apparatus 11 and the coat SF of paint on the basis of the measured result by the position measurement apparatus 18 and control the driving member 1225 on the basis of the information relating to the relative positional relationship between the light irradiation apparatus 11 and the coat SF of paint. For example, the control apparatus 2 may control the driving member 1225 so that the light irradiation apparatus 11 moves relative to the coat SF of paint. Namely, the control apparatus 2 may control the driving member 1225 so as to change the relative positional relationship between the light irradiation apparatus 11 and the coat SF of paint. In this case, the control apparatus 2 may control the driving member 1225 so as to align the light irradiation apparatus 11 and the coat SF of paint. The control apparatus 2 may control the driving member 1225 so as to align the coat SF of paint and the target irradiation area EA that is irradiated with the processing light EL from the light irradiation apparatus 11. As one example, the control apparatus 2 may control the driving member 1225 so that the target irradiation area EA is set on (namely, the processing light EL is emitted to) the desired position on the coat SF of paint. The control apparatus 2 may control the driving member 1225 so that the target irradiation area EA moves along a desired path on the coat SF of paint.

Here, as described above, the first driving system 121 is also configured to move the light irradiation apparatus 11 relative to the coat SF of paint, as with the second driving system 122. Namely, the processing apparatus 1 is configured to move the light irradiation apparatus 11 by using both of or either one of the first driving system 121 and the second driving system 122. In this case, a moving aspect of the light irradiation apparatus 11 by the first driving system 121 may be different from a moving aspect of the light irradiation apparatus 11 by the second driving system 122. For example, an accuracy of an alignment of the light irradiation apparatus 11 by the first driving system 121 may be lower than an accuracy of an alignment of the light irradiation apparatus 11 by the second driving system 122. Namely, the accuracy of the alignment of the light irradiation apparatus 11 by the second driving system 122 may be higher than the accuracy of the alignment of the light irradiation apparatus 11 by the first driving system 121. For example, an accuracy of a movement of the light irradiation apparatus 11 (namely, an accuracy of a change of the relative position of the coat SF of paint and the light irradiation apparatus 11) by the first driving system 121 may be lower than an accuracy of a movement of the light irradiation apparatus 11 by the second driving system 122. Namely, the accuracy of the movement of the light irradiation apparatus 11 by the second driving system 122 may be higher than the accuracy of the movement of the light irradiation apparatus 11 by the first driving system 121. For example, a range in which the light irradiation apparatus 11 moves by the first driving system 121 may be larger than a range in which the light irradiation apparatus 11 moves by the second driving system 122. Namely, the range in which the light irradiation apparatus 11 moves by the second driving system 122 may be smaller than the range in which the light irradiation apparatus 11 moves by the first driving system 121. For example, a moving distance of the light irradiation apparatus 11 (namely, an amount of the change of the relative position of the coat SF of paint and the light irradiation apparatus 11) by the first driving system 121 may be larger than a moving distance of the light irradiation apparatus 11 by the second driving system 122. Namely, the moving distance of the light irradiation apparatus 11 by the second driving system 122 may be smaller than the moving distance of the light irradiation apparatus 11 by the first driving system 121. In this case, the control apparatus 2 may control the first driving system 121 to align the light irradiation apparatus 11 relative to the coat SF of paint with a first accuracy and may control the second driving system 122 to align the light irradiation apparatus 11 relative to the coat SF of paint with a second accuracy that is higher than the first accuracy. Namely, the control apparatus 2 may control the first driving system 121 to broadly align the light irradiation apparatus 11 relative to the coat SF of paint and may control the second driving system 122 to align the light irradiation apparatus 11 relative to the coat SF of paint with a higher accuracy. Note that it may be regarded that the accuracy of the alignment of the light irradiation apparatus 11 by the first driving system 121 is substantially equivalent to an accuracy of an alignment of the tip arm member 12124 by the first driving system 121. It may be regarded that the accuracy of the movement of the light irradiation apparatus 11 by the first driving system 121 is substantially equivalent to an accuracy of a movement of the tip arm member 12124 by the first driving system 121. It may be regarded that the range in which the light irradiation apparatus 11 moves by the first driving system 121 is substantially equivalent to a range in which the tip arm member 12124 moves by the first driving system 121. It may be regarded that the moving distance of the light irradiation apparatus 11 by the first driving system 121 is substantially equivalent to a moving distance of the tip arm member 12124 by the first driving system 121.

The driving member 1225 may reduce the vibration, which is transmitted between the first driving system 121 and the light irradiation apparatus 11 through the second driving system 122, by changing the relative position of the first driving system 121 and the light irradiation apparatus 11 by using the driving force under the control of the control apparatus 2. Namely, the driving member 1225 may damp the vibration, which is transmitted between the first driving system 121 and the light irradiation apparatus 11 through the second driving system 122, by using the driving force. Specifically, the driving member 1225 may reduce (damp) the vibration, which propagates (is transmitted) from the first driving system 121 to the light irradiation apparatus 11 through the second driving system 122, by using the driving force. Thus, the driving member 1225 (alternatively, the second driving system 122 including the driving member 1225) may be referred to as a vibration reduction apparatus or a vibration damping apparatus.

The driving member 1225 may convert the vibration of the air spring 1223 to the damping vibration by changing the relative position of the first driving system 121 and the light irradiation apparatus 11 by using the driving force. Namely, the driving member 1225 may convert the vibration, which is transmitted between the first driving system 121 and the light irradiation apparatus 11 through the second driving system 122, to the damping vibration by using the driving force. In this case, it can be said that the driving member 1225 reduces a relative displaced amount of the first driving system 121 and the light irradiation apparatus 11, which is caused by the vibration propagating from the first driving system 121 to the light irradiation apparatus 11, by using the driving force. Specifically, it can be said that the driving member 1225 reduces a relative displaced amount of a part of the first driving system 121 (namely, the tip arm part 12124) to which the second driving system 122 is attached and a part of the light irradiation apparatus 11 to which the second driving system 122 is attached, which is caused by the vibration propagating from the first driving system 121 to the light irradiation apparatus 11, by using the driving force. Incidentally, when the driving member 1225 is configured to converts the vibration of the air spring 1223 to the damping vibration, the second driving system 122 may not be provided with the damper member 1224. However, even when the driving member 1225 is not configured to converts the vibration of the air spring 1223 to the damping vibration, the second driving system 122 may not be provided with the damper member 1224. Moreover, the number of the air spring 1223, the number of the damper member 1224 and the number of the driving member 1225 may not be equal to one another.

Here, considering that the processing apparatus 1 is configured to move the light irradiation apparatus 11 by using both of or either one of the first driving system 121 and the second driving system 122 as described above, it can be said that the processing apparatus 1 is configured to reduce the vibration propagating from the first driving system 121 to the light irradiation apparatus 11 by using both of or either one of the first driving system 121 and the second driving system 122. In this case, when the moving aspect of the light irradiation apparatus 11 by the first driving system 121 is different from the moving aspect of the light irradiation apparatus 11 by the second driving system 122 as described above, the control apparatus 2 may determine on the basis of a characteristic of the vibration that should be reduced whether or not the vibration should be reduced by using the first driving system 121 and / or the vibration should be reduced by using the second driving system 122. For example, the control apparatus 2 may determine on the basis of a frequency of the vibration that should be reduced whether or not the vibration should be reduced by using the first driving system 121 and / or the vibration should be reduced by using the second driving system 122. Specifically, when a vibration in a first frequency range is included in the vibration that should be reduced, the control apparatus 2 may determine that the vibration should be reduced by using the first driving system 121. The first frequency range is typically set to a frequency range including a vibration that is reducible by the first driving system 121. In this case, the control apparatus 2 may control the first driving system 121 so s to reduce at least a part of the vibration propagating from the first driving system 121 to the light irradiation apparatus 11. Moreover, when a vibration in a second frequency range that is different from the first frequency range is included in the vibration that should be reduced, the control apparatus 2 may determine that the vibration should be reduced by using the second driving system 122. The second frequency range is typically set to a frequency range including a vibration that is reducible by the second driving system 122. In this case, the control apparatus 2 may control the second driving system 122 so s to reduce at least a part of the vibration propagating from the first driving system 121 to the light irradiation apparatus 11. Incidentally, when the accuracy of the alignment of the light irradiation apparatus 11 by the first driving system 121 is lower than the accuracy of the alignment of the light irradiation apparatus 11 by the second driving system 122 as described above, the second frequency range typically includes a frequency that is higher than the first frequency range.

The driving member 1225 may apply the driving force that acts along a direction including a component of the direction in which the air spring 1223 and / or the damper member 1224 applies the elastic force. In an example illustrated in FIG. 6, the driving member 1225 may apply the driving force that acts along a direction including a component of the Z axis direction, because the air spring 1223 and / or the damper member 1224 applies the elastic force along the Z axis direction. When the driving member 1225 generates the driving force that acts along the direction including the component of the direction in which the air spring 1223 and / or the damper member 1224 applies the elastic force, the driving member 1225 may be configured to converts the vibration of the air spring 1223 to the damping vibration by using this driving force. When the vibration of the air spring 1223 is converted to the damping vibration, the driving member 1224 may change a resonance frequency of the air spring 1223 by using the driving force. Typically, the driving member 1224 may increase the resonance frequency of the air spring 1223 by using the driving force.

The driving member 1225 may apply the driving force that acts along a direction intersecting with the direction in which the air spring 1223 and / or the damper member 1224 applies the elastic force. In the example illustrated in FIG. 6, the driving member 1225 may apply the driving force that acts along a direction (for example, at least one of the X axis direction and the Y axis direction) intersecting with the Z axis direction, because the air spring 1223 and / or the damper member 1224 applies the elastic force along the Z axis direction. When the driving member 1225 generates the driving force that acts along the direction intersecting with the direction in which the air spring 1223 and / or the damper member 1224 applies the elastic force, the driving member 1225 may not perform an operation for converting the vibration of the air spring 1223 to the damping vibration by using this driving force. Thus, a load of the driving member 1225 is reduced relatively.

An apparatus that actively reduces the vibration by using the elastic member such as the air spring 1223 and the driving member 1225 may be referred to as an active vibration isolation apparatus. Thus, the second driving system 122 may be referred to as an active vibration isolation apparatus. The active vibration isolation apparatus may be referred to as an AVIS (Active Vibration Isolation System).

### (1-3) Specific Example of Processing Operation by Processing System SYSa

### (1-3-1) Specific Example of Structure formed by Processing Operation

As described above by using FIG. 2, the processing system SYSa forms the concave part C at the coat SF of paint in the first embodiment. The concave part C is formed at a part of the coat SF of paint that is actually irradiated with the processing light EL. Thus, the concave part C is formable at a desired position of the coat SF of paint by properly setting a position on the coat SF of paint that is actually irradiated with the processing light EL (namely, a position at which the target irradiation area EA that is expected to be actually irradiated with the processing light EL is set). Namely, a structure of the coat SF of paint is formable on the processing target object S.

Specifically, the processing system SYSa moves the target irradiation area EA on the surface of the coat SF of paint by using at least one of the Galvano mirror 1122 and the driving system 12 as described above. The processing system SYSa emits the processing light EL at a timing when the target irradiation area EA overlaps with the area of the surface of the coat SF of paint that should be actually irradiated with the processing light EL (namely, that should be processed) in a period when the target irradiation area EA moves on the surface of the coat SF of paint. On the other hand, the processing system SYSa does not emit the processing light EL at a timing when the target irradiation area EA does not overlap with the area of the surface of the coat SF of paint that should be actually irradiated with the processing light EL in the period when the target irradiation area EA moves on the surface of the coat SF of paint. Namely, the processing system SYSa does not emit the processing light EL at a timing when the target irradiation area EA overlaps with an area of the surface of the coat SF of paint that should not be actually irradiated with the processing light EL (namely, that should not be processed) in the period when the target irradiation area EA moves on the surface of the coat SF of paint. As a result, the structure of the coat SF of paint in accordance with a pattern (alternatively, a distribution) of the area that is actually irradiated with the processing light EL is formed on the processing target object S.

In the first embodiment, the processing system SYSa forms a riblet structure that is one example of the structure of the coat SF of paint on the processing target object S under the control of the control apparatus 2. The riblet structure is a structure by which a resistance (especially, a frictional resistance, a turbulent frictional resistance) of the surface of the coat SF of paint to a fluid is reducible. A resistance of the surface of the processing target object S on which the riblet structure is formed to the fluid is smaller than a resistance of the surface of the processing target object S on which the riblet structure is not formed to the fluid. Thus, it can be said that the riblet structure is a structure by which the resistance of the surface of the processing target object S to the fluid is reducible. Note that the fluid here may be any medium (gas, liquid) that flows relative to the surface of the coat SF of paint. For example, each of the medium that flows relative to the static processing target object SF and the static medium distributing around the moving processing target object SF is one example of the fluid.

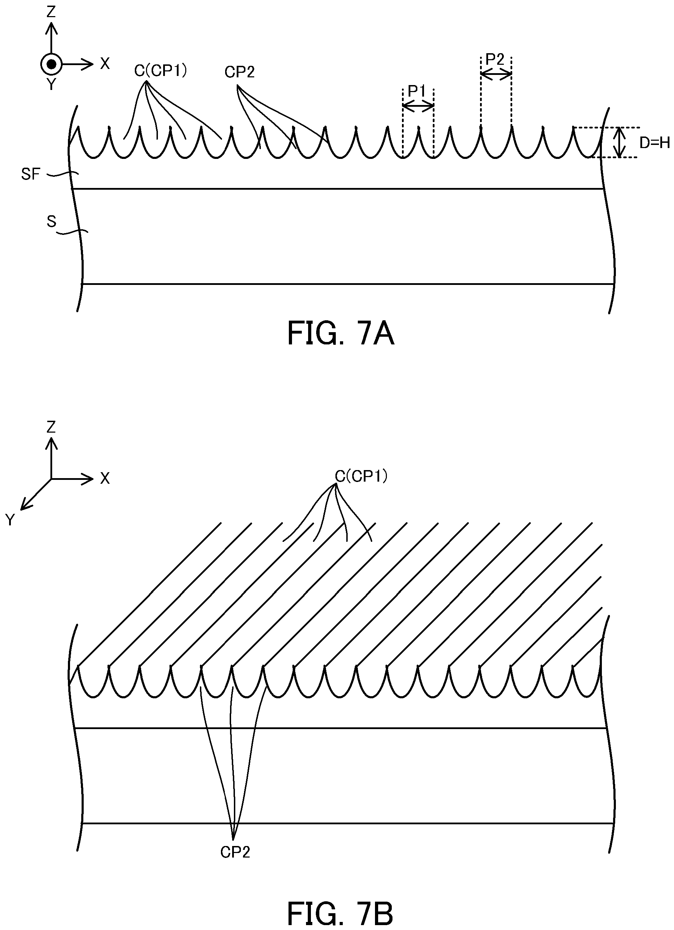

One example of the riblet structure is illustrated in FIG. 7A and FIG. 7B. As illustrated in FIG. 7A and FIG. 7B, the riblet structure is a structure in which a plurality of concave structures CP1 each of which is formed by sequentially forming the concave part C along a first direction (the Y axis direction in an example illustrated in FIG. 7A and FIG. 7B) (namely, a plurality of concave structures CP1 each of which is linearly formed to extend along the first direction) are arranged along a second direction (the X axis direction in the example illustrated in FIG. 7A and FIG. 7B) that intersects with the first direction, for example. Namely, the riblet structure is a structure in which the plurality of concave structures CP1 extending along the first direction have a periodical direction along the second direction that intersects with the first direction, for example. A convex structure CP2 that protrudes from a surrounding area substantially exists between two adjacent concave structures CP1. Therefore, it can be said that the riblet structure is a structure in which a plurality of convex structures CP2 each of which linearly extends along the first direction (for example, the Y axis direction) are arranged along the second direction (for example, the X axis direction) that intersects with the first direction, for example. Namely, it can be said the riblet structure is a structure in which the plurality of convex structures CP2 extending along the first direction have a periodical direction along the second direction that intersects with the first direction, for example. The riblet structure illustrated in FIG. 7A and FIG. 7B is a periodical structure. Note that the riblet structure may be non-periodical structure.

An interval between the two adjacent concave structures CP1 (namely, an arrangement pitch P1 of the concave structure CP1) is several microns to several hundred microns, for example, however, may be different size. Moreover, a depth (namely, a depth in the Z axis direction) D of each concave structure CP1 is several microns to several hundred microns, for example, however, may be different size. The depth D of each concave structure CP1 may be equal to or smaller than the arrangement pitch P1 of the concave structure CP1. The depth D of each concave structure CP1 may be equal to or smaller than a half of the arrangement pitch P1 of the concave structure CP1. A shape of a cross-sectional surface including the Z axis (specifically, a cross-sectional surface along the XZ plane) of each concave structure CP1 is a bowl-shaped curved shape, however, may be a triangle shape, may be a quadrangular shape, may be a polygonal shape more than a pentagonal shape.

An interval between the two adjacent convex structures CP2 (namely, an arrangement pitch P2 of the convex structure CP2) is several microns to several hundred microns, for example, however, may be different size. Moreover, a height (namely, a height in the Z axis direction) H of each convex structure CP2 is several microns to several hundred microns, for example, however, may be different size. The height H of each convex structure CP2 may be equal to or smaller than the arrangement pitch P2 of the convex structure CP2. The height H of each convex structure CP2 may be equal to or smaller than a half of the arrangement pitch P2 of the convex structure CP2. A shape of a cross-sectional surface including the Z axis (specifically, a cross-sectional surface along the XZ plane) of each convex structure CP2 is a chevron shape having a curved slope, however, may be a triangle shape, may be a quadrangular shape, may be a polygonal shape more than a pentagonal shape.

Note that the riblet structure itself formed by the processing system SYSa may be an existing riblet structure disclosed in "Mechanical Engineers' Handbook, Basic Edition, α4 Fluids Engineering", Chapter 5, edited by The Japan Society of Mechanical Engineers, for example, and a detailed description of the riblet structure itself is omitted.

As described above, the resistance of the surface of the processing target object S on which the riblet structure is formed to the fluid is reducible by the riblet structure like this. Thus, the processing target object S may be an object (for example, a structural object) the resistance of which to the fluid is desired to be reduced. For example, the processing target object S may be an object (namely, a movable body) that is movable so that at least a part thereof travels in the fluid (for example, at least one of the gas and the liquid). Specifically, for example, the processing target object S may include an airframe (for example, at least one of a body PL1, a main wing PL2, a vertical tail PL3 and a horizontal tail PL4) of an airplane PL as illustrated in FIG. 8A to FIG. 8C. In this case, as illustrated in FIG. 8A to FIG. 8C, the processing apparatus 1 (alternatively, the processing system SYSa, same applies in this paragraph) may self-stands on the airframe of the airplane PL by the support apparatus 14. Alternatively, the processing apparatus 1 may adhere to the airframe of the airplane PL to suspend (namely, hang) from the airframe of the airplane PL by the support apparatus 14 as illustrated in FIG. 8B, because the end part 144 of the leg member 142 of the support apparatus 14 is configured to adhere to the coat SF of paint. Moreover, the processing apparatus 1 is capable of self-standing on the coat SF of paint even when the surface of the coat SF of paint is inclined with respect to the horizontal plane in a state where the surface of the coat SF of paint faces upwardly, because the end part 144 of the leg member 142 of the support apparatus 14 is configured to adhere to the coat SF of paint and the end part 134 of the partition member 132 of the housing apparatus 13 is configured to adhere to the coat SF of paint. Moreover, the processing apparatus 1 is capable of adhering to the coat SF of paint to suspend from the coat SF of paint even when the surface of the coat SF of paint is inclined with respect to the horizontal plane in a state where the surface of the coat SF of paint faces downwardly. Even in both cases, the light irradiation apparatus 11 is movable along the surface of the airplane PL by the driving system 12 and / or the movement of the support apparatus 14. Therefore, the processing system SYSa is capable of forming the riblet structure of the coat SF of paint at the processing target object S such as the airframe of the airplane (namely, the processing target object S the surface of which is a curved surface, the surface of which is inclined with respect to the horizontal plane or the surface of which faces downwardly).

Beyond that, for example, the processing target object S may include a vehicle body and an aerodynamic part of a vehicle. For example, the processing target object S may include a ship hull of a ship. For example, the processing target object S may include a body of a rocket. For example, the processing target object S may include a turbine (for example, at least one of a hydraulic turbine, a wind turbine and the like, especially a turbine blade thereof). For example, the processing target object S may include a component that constitutes the object at least a part of which travels in the fluid. For example, the processing target object S may include an object at least a part of which is fixed in the flowing fluid. Specifically, for example, the processing target object S may include a bridge column built in a river or a sea. For example, the processing target object S may include a pipe in which the fluid flows. In this case, an inner wall of the pipe may be the surface of the above described processing target object S.

Note that one example of the processing target object S described here is a relatively large object (for example, an object having a size of an order of several meters to several hundred meters). In this case, as illustrated in FIG. 8A to FIG. 8C, a size of the light irradiation apparatus 11 is smaller than a size of the processing target object S. However, the processing target object S may be an object having any size. For example, the processing target object S may be an object having a size of an order of kilometer, centimeter, millimeter or micrometer.

A characteristic of the above described riblet structure may be set to a proper characteristic by which an effect of a reduction of the resistance is properly achieved based on what object the processing target object S is. Namely, the characteristic of the above described riblet structure may be optimized so that the effect of a reduction of the resistance is properly achieved based on what object the processing target object S is. More specifically, the characteristic of the riblet structure may be set to a proper characteristic by which the effect of the reduction of the resistance is properly achieved based on at least one of a type of the fluid that distributes around the used (namely, operated) processing target object S, a relative velocity of the processing target object S relative to the fluid, a shape of the processing target object S and the like. Moreover, the characteristic of the above described riblet structure may be set to a proper characteristic by which the effect of the reduction of the resistance is properly achieved based on what object the processing target object S is and where the riblet structure is formed at the object. For example, when the processing target object S is the airframe of the airplane PL, the characteristic of the riblet structure formed at the body PL1 may be different from the characteristic of the riblet structure formed at the main wing PL2.

The characteristic of the riblet structure may include a size of the riblet structure. The size of the riblet structure may include at least one of the arrangement pitch P1 of the concave structure CP1, the depth D of each concave structure CP1, the arrangement pitch P2 of the convex structure CP2, the height H of each convex structure CP2 and the like). The characteristic of the riblet structure may include a shape (for example, the shape of the cross-sectional surface including the Z axis (specifically, the cross-sectional surface along the XZ plane)) of the riblet structure. The characteristic of the riblet structure may include an extending direction of the riblet structure (namely, an extending direction of the concave structure CP1). The characteristic of the riblet structure may include a formed position of the riblet structure.

As one example, when the processing target object S is the airframe of the airplane that flies at a 1000 kilometer per hour at an altitude of 10 kilometer in cruising, the arrangement pitch P1 of the concave structure CP1 (namely, the arrangement pitch P2 of the convex structure CP2) may be set to about 78 micrometers, for example.

### (1-3-2) Flow of Processing Operation

Next, with reference to FIG. 9 to FIG. 20, a flow of a processing operation for forming the riblet structure will be described.

Firstly, as described above, the plurality of processing lights EL are deflected by the Galvano mirror 1122. In order to form the riblet structure, the Galvano mirror 1122 deflects the plurality of processing lights EL to alternately repeat: a scan operation for moving the plurality of target irradiation areas EA along the Y axis on the surface of the coat SF of paint and irradiating the plurality of target irradiation areas EA with the plurality of processing lights EL, respectively, at a desired timing; and a step operation for moving the plurality of irradiation areas EA along at least the X axis on the surface of the coat SF of paint by a predetermined amount. In this case, the Y axis may be referred to as a scan axis and the X axis may be referred to as a step axis.

Here, a size of an area on the surface of the coat SF of paint that is swept with the plurality of processing lights EL by controlling the Galvano mirror 1122 without moving the light irradiation apparatus 11 relative to the coat SF of paint is limited. Therefore, in the first embodiment, as illustrated in FIG. 9, the control apparatus 2 sets a plurality of processing shot areas SA on the surface of the coat SF of paint (especially, an area of the coat SF of paint at which the riblet structure should be formed). Each processing shot area SA corresponds to an area that is sweepable with the plurality of processing lights EL by controlling the Galvano mirror 1122 without moving the light irradiation apparatus 11 relative to the coat SF of paint. A shape of each processing shot area SA is a quadrangular shape, however, may be any shape.

The control apparatus 2 controls the light irradiation apparatus 11 to irradiate one processing shot area SA (for example, SA1) with the plurality of processing lights EL deflected by the Galvano mirror 1122 to form the riblet structure at one processing shot area SA (SA1). Then, the control apparatus 2 disposes the light irradiation apparatus 11 on a position from which another processing shot area SA (for example, SA2) is irradiated with the plurality of processing lights EL by controlling at least one of the driving systems 12 and 15 to move the light irradiation apparatus 11 relative to the coat SF of paint. Then, the control apparatus 2 controls the light irradiation apparatus 11 to irradiate another processing shot area SA (for example, SA2) with the plurality of processing lights EL deflected by the Galvano mirror 1122 to form the riblet structure at another processing shot area SA (SA2). The control apparatus 2 forms the riblet structure by repeating the following operation at all processing shot areas SA1 to SA16.

Next, an operation for forming the riblet structure at the processing shot areas SA1 to SA4 illustrated in FIG. 9 will be described as one example. Incidentally, in the below described description, an example in which two processing shot areas SA that are adjacent to each other along the X axis are located in the containing space SP will be described. However, the fact remains that same operation is performed even when any number of processing shot area SA is located in the containing space SP. Moreover, the operation for forming the riblet structure described below is merely one example, and the processing system SYS may form the riblet structure by performing an operation that is different from the below described operation. Namely, the processing system SYS may perform any operation as long as it forms the riblet structure on the processing target object S by irradiating the processing target object S with the plurality of processing lights EL.

As illustrated in FIG. 10, firstly, the control apparatus 2 controls the driving system 15 to move the support apparatus 14 relative to the coat SF of paint so that the housing apparatus 13 is disposed at a first housing position at which the processing shot areas SA1 and SA2 are located in the containing space SP. Namely, the control apparatus 2 moves the housing apparatus 13 supported by the support apparatus 14 so that the processing shot areas SA1 and SA2 are covered by the housing apparatus 13. Moreover, the control apparatus 2 controls the driving system 12 (namely, the first driving system 121 and / or the second driving system 122) to move the light irradiation apparatus 11 relative to the coat SF of paint so that the light irradiation apparatus 11 is disposed at a first irradiation position from which the processing shot area SA1 is irradiated with the plurality of processing lights EL. After the housing apparatus 13 is disposed at the first housing position and the light irradiation apparatus 11 is disposed at the first irradiation position, the partition member 132 becomes to be the first expansion state. Therefore, the end part 134 of the partition member 132 contacts with and adheres to the coat SF of paint. Similarly, the plurality of leg members 142 becomes to be the second expansion state. Therefore, the end parts 144 of the plurality of leg members 142 contact with and adhere to the coat SF of paint.

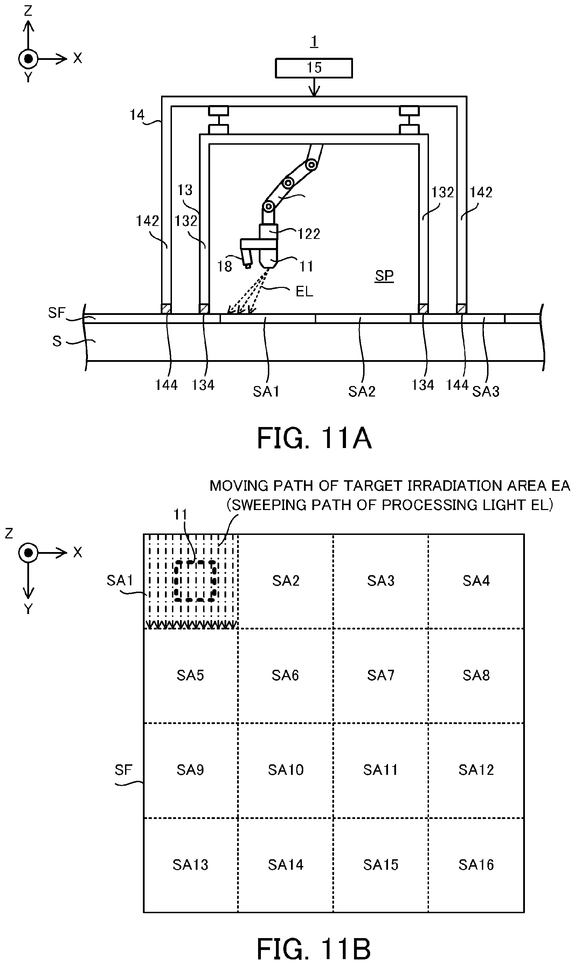

Then, as illustrated in FIG. 11A and FIG. 11B, the control apparatus 2 controls the light irradiation apparatus 11 (especially, the Galvano mirror 1122) to sweep the processing shot area SA1 with the plurality of processing lights EL. Specifically, the control apparatus 2 controls the Y scanning mirror 1122Y of the Galvano mirror 1122 to sweep a certain area in the processing shot area SA1 with the plurality of processing lights EL along the Y axis direction, in order to perform the above described scan operation. During a period when the scan operation is performed, the light source system 111 emits the plurality of processing lights EL. Then, the control apparatus 2 rotates at least the X scanning mirror 1122X of the Galvano mirror 1122 by a unit step amount, in order to perform the above described step operation. During a period when the step operation is performed, the light source system 111 does not emit the plurality of processing lights EL. Then, the control apparatus 2 controls the Y scanning mirror 1122Y of the Galvano mirror 1122 to sweep a certain area in the processing shot area SA1 with the plurality of processing lights EL along the Y axis direction, in order to perform the above described scan operation. In this manner, the control apparatus 2 controls the Galvano mirror 1122 to sweep whole of the processing shot area SA1 (alternatively, a partial area at which the riblet structure should be formed in the processing shot area SA1) with the plurality of processing lights EL by alternately repeating the scan operation and the step operation. Note that the plurality of processing lights EL may be emitted during the period when the step operation is performed.

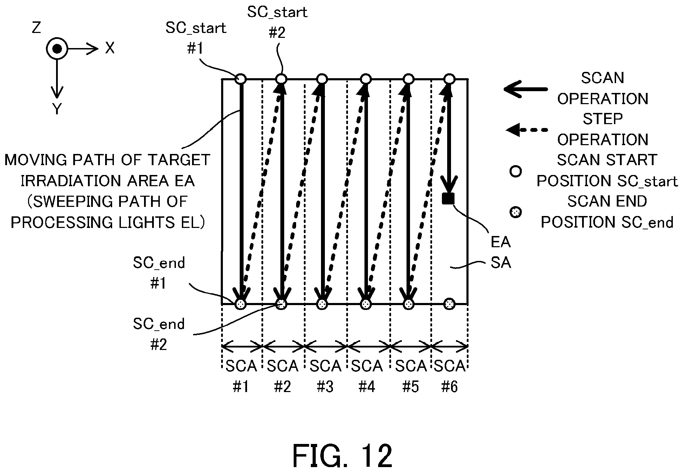

Namely, in the first embodiment, as illustrated in FIG. 12 that is a plan view that illustrates a sweeping path of the processing lights EL (namely, a moving path of the target irradiation areas EA, the same applies the below described description) during a period when the scan operation and the step operation are repeated, the processing apparatus 1 performs the scan operation in a plurality of scan areas SCA set in the processing shot area EA in sequence. FIG. 12 illustrates an example in which six scan areas SCA#1 to SCA#6 are set in the processing shot area SA. Each scan area SCA is an area that is swept by the plurality of processing lights EL that are emitted by one scan operation (namely, a series of scan operation without performing the step operation). Each scan area SCA is an area in which the plurality of target irradiation areas EA move by one scan operation. In this case, the plurality of target irradiation areas EA move from a scan start position SC_start to a scan end position SC_end in each scan area SCA by one scan operation. This scan area SCA is typically an area that extends along the Y axis direction (namely, a sweeping direction of the plurality of processing lights EL). The plurality of scan areas SCA are arranged along the X axis direction (namely, a direction that intersects with the sweeping direction of the plurality of processing lights EL).

In this case, the processing system SYSa starts the scan operation at one scan area SCA, which is located at the most +X side or the most -X side, of the plurality of scan areas SCA set in a certain processing shot area SA, for example. For example, FIG. 12 illustrates an example in which the processing system SYSa starts the scan operation at a scan area SCA#1 that is located at the most -X side. In this case, the control apparatus 2 controls the Galvano mirror 1122 so that a scan start position SC_start#1 of the scan area SCA#1 (for example, an end part at the -Y side or a neighborhood thereof in the scan area SCA# 1) is irradiated with the processing lights EL. Namely, the control apparatus 2 controls the Galvano mirror 1122 so that the target irradiation areas EA are set on the scan start position SC_start#1 of the scan area SCA#1. Then, the processing system SYSa performs the scan operation in the scan area SCA#1. Specifically, the control apparatus 2 controls the Galvano mirror 1122 so that the plurality of target irradiation areas EA move from the scan start position SC_start#1 of the scan area SCA#1 to a scan end position SC_end#1 of the scan area SCA#1 (for example, an end part at the +Y side or a neighborhood thereof in the scan area SCA#1). Moreover, the control apparatus 2 controls the light irradiation apparatus 11 so that the plurality of target areas EA are irradiated with the plurality of processing lights EL at a desired timing. As a result, the scan area SCA#1 is swept by the plurality of processing lights EL. Note that FIG. 12 illustrates the moving path of one target irradiation area EA in each scan area SCA for the purpose of simple illustration, however, the plurality of target irradiation areas EA move in the scan area SCA actually. Namely, FIG. 12 illustrates the sweeping path of one processing light EL in each scan area SCA for the purpose of simple illustration, however, the scan area SCA is swept by the plurality of processing lights EL actually.

After the scan operation in the scan area SCA#1 is completed, the processing system SYSa performs the step operation in order to perform the scan operation in another scan area SCA that is different from the scan area SCA#1. Specifically, the control apparatus 2 controls the Galvano mirror 1122 so that a scan start position SC_start#2 of a scan area SCA#2 (for example, an end part at the -Y side or a neighborhood thereof in the scan area SCA#2) that is adjacent to the scan area SCA#1 along the X axis direction is irradiated with the processing lights EL. Namely, the control apparatus 2 controls the Galvano mirror 1122 so that the target irradiation areas EA are set on the scan start position SC_start#2 of the scan area SCA#2. As a result, as illustrated in FIG. 12, the target irradiation positions EA move along each of the X axis direction and the Y axis direction. In this case, a moving distance of the target irradiation positions EA along the X axis direction may be equal to a size of the scan area SCA along the X axis direction. A moving distance of the target irradiation positions EA along the Y axis direction may be equal to a size of the scan area SCA along the Y axis direction.

Then, the processing system SYSa performs the scan operation in the scan area SCA#2. Specifically, the control apparatus 2 controls the Galvano mirror 1122 so that the plurality of target irradiation areas EA move from the scan start position SC_start#2 of the scan area SCA#2 to a scan end position SC_end#2 of the scan area SCA#2 (for example, an end part at the +Y side or a neighborhood thereof in the scan area SCA#2). Moreover, the control apparatus 2 controls the light irradiation apparatus 11 so that the plurality of target areas EA are irradiated with the plurality of processing lights EL at a desired timing. As a result, the scan area SCA#2 is swept by the plurality of processing lights EL.

Then, same operation is repeated until the scan operations in the scan areas SCA#3 to SCA#6 are completed.

In the example illustrated in FIG. 12, the sweeping direction of the processing lights EL by the scan operation is fixed to the +Y axis direction. The moving direction of the target irradiation areas EA by the scan operation is fixed to the +Y axis direction. Namely, in the example illustrated in FIG. 12, the sweeping directions of the processing lights EL (namely, the moving directions of the target irradiation areas EA) by the plurality of scan operations performed in the scan area SCA are same as each other. The sweeping directions of the plurality of processing lights EL with which the plurality of scan areas SCA are swept, respectively, are same as each other. The moving directions of the target irradiation areas EA in the plurality of scan areas SCA are same as each other. Specifically, the sweeping direction of the processing lights EL by the scan operation performed in the scan area SCA#1, the sweeping direction of the processing lights EL by the scan operation performed in the scan area SCA#2, ..., and the sweeping direction of the processing lights EL by the scan operation performed in the scan area SCA#6 are same as one another.

The riblet structure is formed in the processing shot area SA1 by repeating the scan operation and the step operation in this manner. Note that a width of an area that is swept by the processing lights EL (namely, a width of the processing shot area SA, especially, a width in the X axis direction) is wider than a width (especially, a width in the X axis direction) of the light irradiation apparatus 11, as illustrated in FIG. 11A and FIG. 11B.

During a period when the scan operation and the step operation are repeated in this manner, a positional error of the target irradiation areas EA may be caused by the operation of the Galvano mirror 1122. For example, when the Galvano mirror 1122 keeps operating, there is a possibility that a temperature of the Galvano mirror 1122 changes (typically, increases). When the temperature of the Galvano mirror 1122 changes, there is a possibility that a characteristic of the Galvano mirror 1122 changes compared to that before the temperature of the Galvano mirror 1122 changes. As a result, there is a possibility that the positions of the target irradiation areas EA relative to the Galvano mirror 1122 change (namely, the positional error of the target irradiation areas EA is caused). There is a possibility that the positional error of the target irradiation areas EA prevents a proper processing of the coat SF of paint. Thus, the control apparatus 2 may control the driving system 12 to move the light irradiation apparatus 11 relative to the coat SF of paint so as to reduce the positional error of the target irradiation areas EA (namely, allow the target irradiation areas EA to be closer to original positions). For example, the control apparatus 2 may control the first driving system 121 to move the light irradiation apparatus 11 relative to the coat SF of paint so as to reduce the positional error of the target irradiation areas EA (for example, decrease an amount of the positional error). For example, the control apparatus 2 may control the second driving system 122 (especially, the driving member 1225) to move the light irradiation apparatus 11 relative to the coat SF of paint so as to reduce the positional error of the target irradiation areas EA.

The control apparatus 2 controls the driving system 15 so that the plurality of leg members 142 continue to be in the second expansion state during a period when the light irradiation apparatus 11 emits the processing lights EL. As a result, the end parts 144 of the plurality of leg members 142 continue to adhere to the coat SF of paint. As a result, the stability of the support apparatus 14 improves, and thus, there is a low possibility that the irradiation areas EA of the processing lights EL are displaced on the coat SF of paint accidentally due to an instability of the support apparatus 14. However, a part of the plurality of leg members 142 may be in the second contraction state as long as the support apparatus 14 is capable of self-standing on the coat SF of paint (alternatively, is capable of adhering to the coat SF of paint to suspend from the coat SF of paint) during at least a part of the period when the light irradiation apparatus 11 emits the lights EL.

The control apparatus 2 controls the non-illustrated driving system that extends and contracts the partition member 132 so that the partition member 132 continues to be in the first expansion state during the period when the light irradiation apparatus 11 emits the processing lights EL. As a result, the end part 134 of the partition member 132 continues to adhere to the coat SF of paint. As a result, the sealability of the containing space SP is maintained, and thus, the processing light EL propagating in the containing space SP does not leak outside the containing space SP (namely, outside the housing apparatus 13). Moreover, the unnecessary substance that is generated in the containing space SP does not leak outside the containing space SP (namely, outside the housing apparatus 13).

Note that there is a possibility that at least a part of the end part 134 that should adhere to the coat SF of paint is away from the coat SF of paint due to any factor. When the light irradiation apparatus 11 continues to emit the processing lights EL in this situation, there is a possibility that at least one of the processing light EL and the unnecessary substance leaks outside the housing apparatus 13. Thus, the control apparatus 2 may control the light irradiation apparatus 11 to stop the irradiation of the processing lights EL when it is detected that at least a part of the end part 134 is away from the coat SF of paint during the period when the light irradiation apparatus 11 emits the processing lights EL.

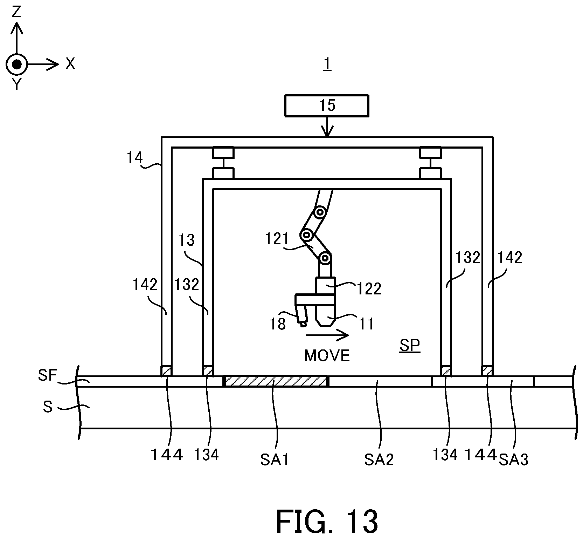

Then, as illustrated in FIG. 13, the control apparatus 2 controls the driving system 12 so that the light irradiation apparatus 11 moves from the first irradiation position to a second irradiation position at which the light irradiation apparatus 11 irradiates the processing shot area SA2 with the plurality of processing lights EL. During a period when the light irradiation apparatus 11 moves, the control apparatus 2 controls the light irradiation apparatus 11 so that the light irradiation apparatus 11 does not emit the processing lights EL.

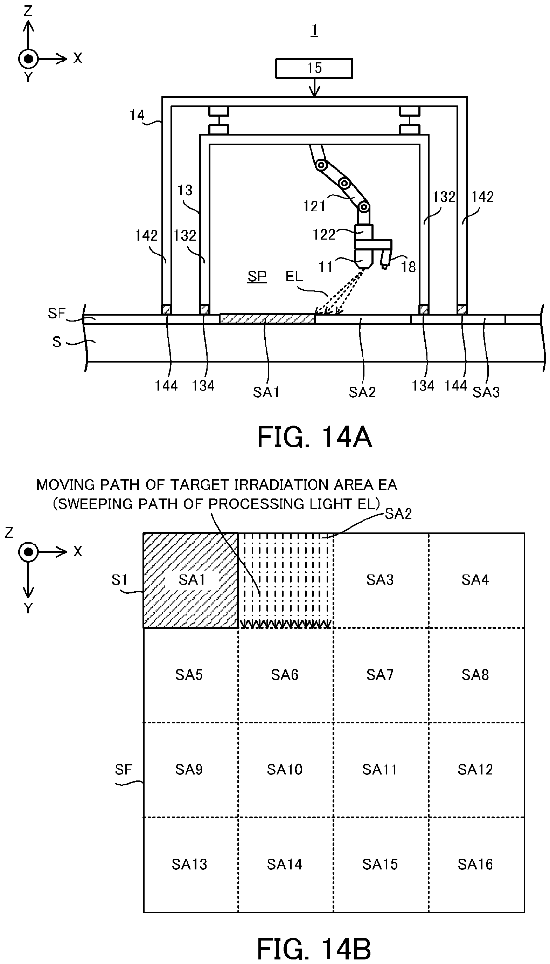

Then, as illustrated in FIG. 14A and FIG. 14B, the control apparatus 2 controls the light irradiation apparatus 11 (especially, the Galvano mirror 1122) to sweep the processing shot area SA2 with the plurality of processing lights EL. Specifically, the control apparatus 2 controls the light irradiation apparatus 11 (especially, the Galvano mirror 1122) to sweep whole of the processing shot area SA2 (alternatively, a partial area at which the riblet structure should be formed in the processing shot area SA2) with the plurality of processing lights EL by alternately repeating the above described scan operation and the above described step operation. As a result, the riblet structure is formed in the processing shot area SA2. Note that the plurality of concave parts CP1 constituting the riblet structure in the processing shot area SA1 and the plurality of concave parts CP1 constituting the riblet structure in the processing shot area SA2 (alternatively, other processing shot area SA) that is adjacent to the processing shot area SA1 may be formed to be sequentially connected to each other. Alternatively, the plurality of concave parts CP1 constituting the riblet structure in the processing shot area SA1 and the plurality of concave parts CP1 constituting the riblet structure in the processing shot area SA2 may be formed not to be sequentially connected to each other. For example, a sequential length of one concave part CP1 formed by sweeping the processing shot area SA with the processing light EL depends on the size (especially, the size along the Y axis direction that is the sweeping direction of the processing light EL) of the processing shot area SA. Therefore, when the size of the processing shot area SA is a size that realizes the sequential length allowing the riblet structure to have the above described function, the plurality of concave parts CP1 constituting the riblet structure in the processing shot area SA1 and the plurality of concave parts CP1 constituting the riblet structure in the processing shot area SA2 may be formed not to be sequentially connected to each other, respectively. As one example, when the processing target object S is the airplane, the sequential length allowing the riblet structure to have the above described function is about several millimeter in accordance with a calculation based on an air speed and a frequency of turbulence phenomenon when the airplane is used (typically, cruises). Thus, when the processing shot area SA the size of which is longer than about several millimeter in the Y axis direction is allowed to be set on the surface of the coat SF of paint, the plurality of concave parts CP1 constituting the riblet structure in the processing shot area SA1 and the plurality of concave parts CP1 constituting the riblet structure in the processing shot area SA2 may be formed not to be sequentially connected to each other, respectively.

After the riblet structure is formed in the processing shot area SA2, there is no processing shot area SA in which the riblet structure is not formed yet in the containing space SP. Thus, it is difficult for the light irradiation apparatus 11 to irradiate the processing shot area SA in which the riblet structure is not formed yet with the plurality of processing lights EL to form the riblet structure therein only by moving the light irradiation apparatus 11 in the containing space SP by the driving system 12. Thus, when there is no processing shot area SA in which the riblet structure is not formed yet in the containing space SP, the control apparatus 2 controls the driving system 15 to move the support apparatus 14 (namely, to move the housing apparatus 13) so that the processing shot area SA in which the riblet structure is not formed yet is located in the containing space SP.

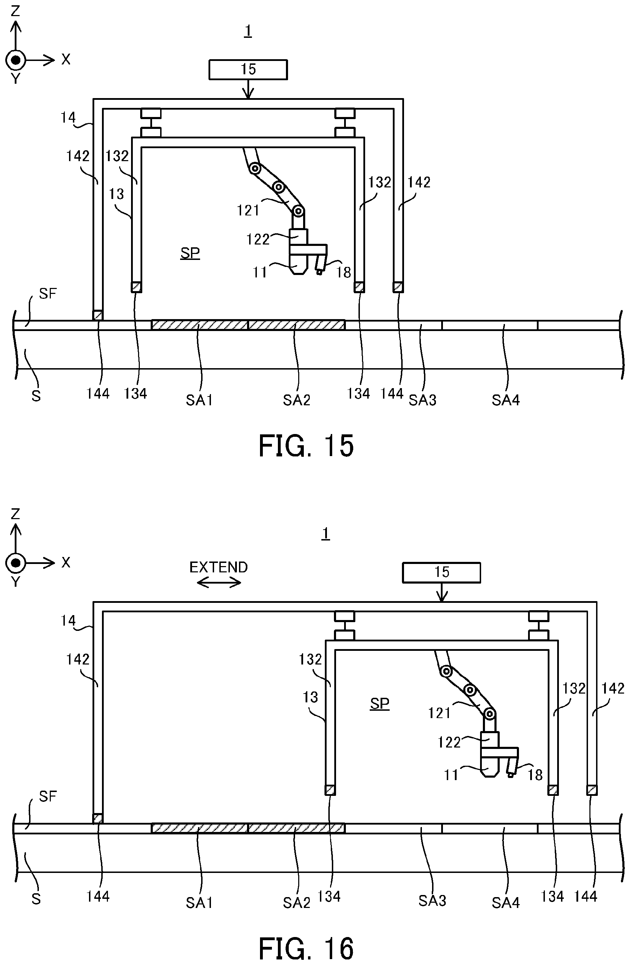

Specifically, firstly, as illustrated in FIG. 15, the control apparatus 2 controls the non-illustrated driving system that extends and contracts the partition member 132 so that the state of the partition member 132 is switched from the first expansion state to the first contraction state. As a result, the end part 134 of the partition member 132 is away from the coat SF of paint. Note that the control apparatus 2 controls the light irradiation apparatus 11 so that the light irradiation apparatus 11 does not emit the processing lights EL during a period when the support apparatus 14 moves. Thus, even when the end part 134 is away from the coat SF of paint, at least one of the processing light EL and the unnecessary substance does not leak outside the housing apparatus 13.

However, although the unnecessary substance existing in the containing space SP is sucked to the outside of the containing space SP by the above described exhaust apparatus 16, there is a possibility that all of the unnecessary substance existing in the containing space SP is not sucked by the exhaust apparatus 16 (namely, the unnecessary substance remains in the containing space SP) due to any factor. In this case, when the end part 134 is away from the coat SF of paint, there is a possibility that the unnecessary substance leaks outside the housing apparatus 13. Thus, the control apparatus 2 may determine on the basis of the detected result by the detection apparatus 135 that detects the unnecessary substance in the containing space SP whether or not the partition member 132 is switched from the first expansion state to the first contraction state. When the unnecessary substance remains in the containing space SP, the control apparatus 2 does not switch the partition member 132 from the first expansion state to the first contraction state. In this case, the exhaust apparatus 16 continues to suck the unnecessary substance remaining in the containing space SP. On the other hand, when the unnecessary substance does not remain in the containing space SP, the control apparatus 2 switches the partition member 132 from the first expansion state to the first contraction state.

Moreover, the control apparatus 2 controls the driving system 15 so that the state of at least one leg member 142 that moves relative to the coat SF of paint due to the movement of the support apparatus 14 (especially, the expansion of the contracted beam member 141 described later) among the plurality of leg members 142 is switched from the second expansion state to the second contraction state. The leg member 142 that moves relative to coat SF of paint due to the expansion of the contracted beam member 141 is typically the leg member 142 that is disposed at a front side along a moving direction of the support apparatus 14 (namely, a moving direction of the housing apparatus 13) among the plurality of leg members 142. In an example illustrated in FIG. 15, the support apparatus 14 moves toward the +X side and the leg member 142 that is disposed at the front side along the moving direction of the support apparatus 14 is the leg member 142 at the +X side. Hereinafter, the leg member 142 that is disposed at the front side along the moving direction of the support apparatus 14 is referred to as a "front leg member 142". As a result, the end part 144 of the front leg member 142 is away from the coat SF of paint.

Then, as illustrated in FIG. 16, the control apparatus 2 controls the driving system 15 so that the housing apparatus 13 moves from the first housing position to a second housing position at which the processing shot areas SA3 and SA4 are located in the containing space SP. Specifically, the control apparatus 2 controls the driving system 15 so that the beam member 141 extends along the moving direction of the support apparatus 14. As a result, the beam member 141 extends while supporting the housing apparatus 13 (moreover, while supporting the light irradiation apparatus 11 supported by the housing apparatus 13). Moreover, in parallel with the movement of the support apparatus 14, the control apparatus 2 controls the driving system 12 so that the light irradiation apparatus 11 moves from the second irradiation position to a third irradiation position at which the light irradiation apparatus 11 irradiates the processing shot area SA3 with the plurality of processing lights EL. In this manner, in the first embodiment, the support apparatus 14 is configured to self-run in a state where it is supported by the processing target object S. Thus, the support apparatus 14 may be referred to as a self-running apparatus.

The control apparatus 2 controls the non-illustrated driving system that extends and contracts the partition member 132 so that the partition member 132 continues to be in the first contraction state during the period when the support apparatus 14 moves (namely, the contracted beam member 141 extends). As a result, the movement of the support apparatus 14 (namely, the movement of the housing apparatus 13) is not prevented by a contact between the end part 134 of the partition member 132 and the coat SF of paint. Moreover, the coat SF of paint is not scratched by the contact between the end part 134 and the coat SF of paint when the support apparatus 14 moves. However, when the contact between the end part 134 and the coat SF of paint does not prevent movement of the support apparatus 14, at least a part of the end part 134 may contact with the coat SF of paint during at least a part of the period when the support apparatus 14 moves. When the contact between the end part 134 and the coat SF of paint does not scratch the coat SF of paint during the period when the support apparatus 14 moves, at least a part of the end part 134 may contact with the coat SF of paint during at least a part of the period when the support apparatus 14 moves.

Moreover, the control apparatus 2 controls the driving system 15 so that the front leg member 142 continues to be in the second contraction state during the period when the support apparatus 14 moves. As a result, the movement of the support apparatus 14 (namely, the movement of the housing apparatus 13) is not prevented by a contact between the end part 144 of the front leg member 142 and the coat SF of paint. Moreover, the coat SF of paint is not scratched by the contact between the end part 144 and the coat SF of paint when the support apparatus 14 moves. However, when the contact between the end part 144 and the coat SF of paint does not prevent movement of the support apparatus 14, at least a part of the end part 144 may contact with the coat SF of paint during at least a part of the period when the support apparatus 14 moves. When the contact between the end part 144 and the coat SF of paint does not scratch the coat SF of paint during the period when the support apparatus 14 moves, at least a part of the end part 144 may contact with the coat SF of paint during at least a part of the period when the support apparatus 14 moves.

Moreover, the control apparatus 2 controls the driving system 15 so that the other leg member 142 of the plurality of leg members 142 other than the front leg member 142 continues to be in the first expansion state during the period when the support apparatus 14 moves. As a result, even when the end part 144 of the front leg member 142 is away from the coat SF of paint, the end part 144 of the leg member 142 other than the front leg member 142 contacts with the coat SF of paint. Thus, the fact remains that the processing apparatus 1 is capable of self-standing on the coat SF of paint (alternatively, is capable of adhering to the coat SF of paint to suspend from the coat SF of paint), as with the case where all end parts 144 of the plurality of leg members 142 contact with the coat SF of paint.

Moreover, during the period when the support apparatus 14 moves, the control apparatus 2 controls the light irradiation apparatus 11 so that the light irradiation apparatus 11 does not emit the processing lights EL.

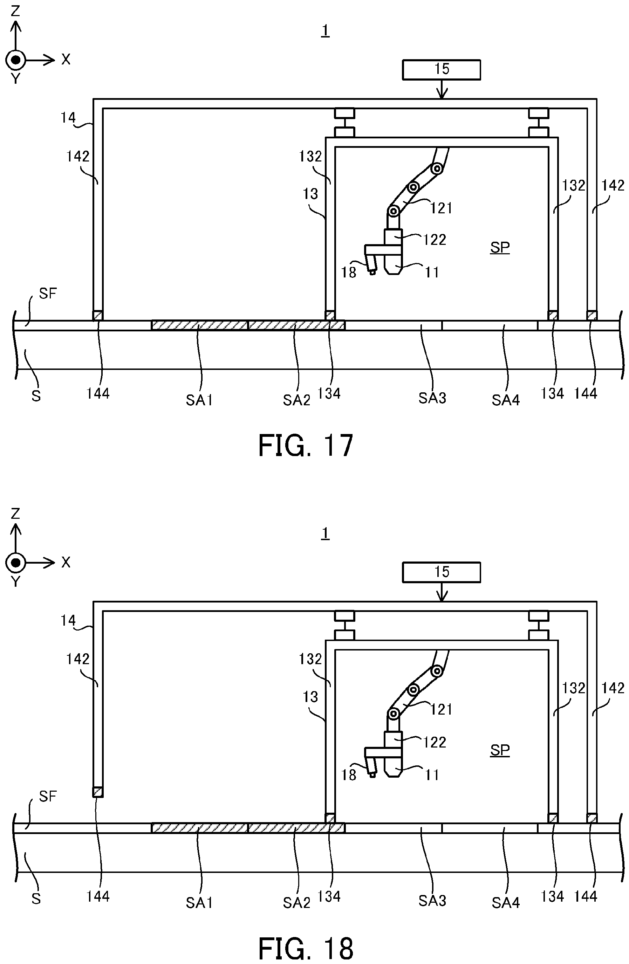

After the housing apparatus 13 is disposed at the second housing position, as illustrated in FIG. 17, the control apparatus 2 controls the non-illustrated driving system that extends and contracts the partition member 132 so that the partition member 132 is switched from the first contraction state to the first expansion state. As a result, the end part 134 of the partition member 132 contacts with and adheres to the coat SF of paint. Moreover, the control apparatus 2 controls the driving system 15 so that the front leg member 142 is switched from the second contraction state to the second expansion state. As a result, the end part 144 of the front leg member 142 contacts with and adheres to the coat SF of paint. Here, an operation for extending the partition member 132 and an operation for extending the front leg member 142 may be performed at the same time or may be performed at different times.

Then, as illustrated in FIG. 18, the control apparatus 2 controls the driving system 15 so that the state of at least one leg member 142 that moves relative to the coat SF of paint due to the movement of the support apparatus 14 (especially, the contraction of the extended beam member 141 described later) among the plurality of leg members 142 is switched from the second expansion state to the second contraction state. The leg member 142 that moves relative to coat SF of paint due to the contraction of the extended beam member 141 is typically the leg member 142 that is disposed at a rear side along the moving direction of the support apparatus 14 among the plurality of leg members 142. In an example illustrated in FIG. 18, the leg member 142 that is disposed at the rear side along the moving direction of the support apparatus 14 is the leg member 142 at the -X side. Hereinafter, the leg member 142 that is disposed at the rear side along the moving direction of the support apparatus 14 is referred to as a "rear leg member 142". As a result, the end part 144 of the rear leg member 142 is away from the coat SF of paint.

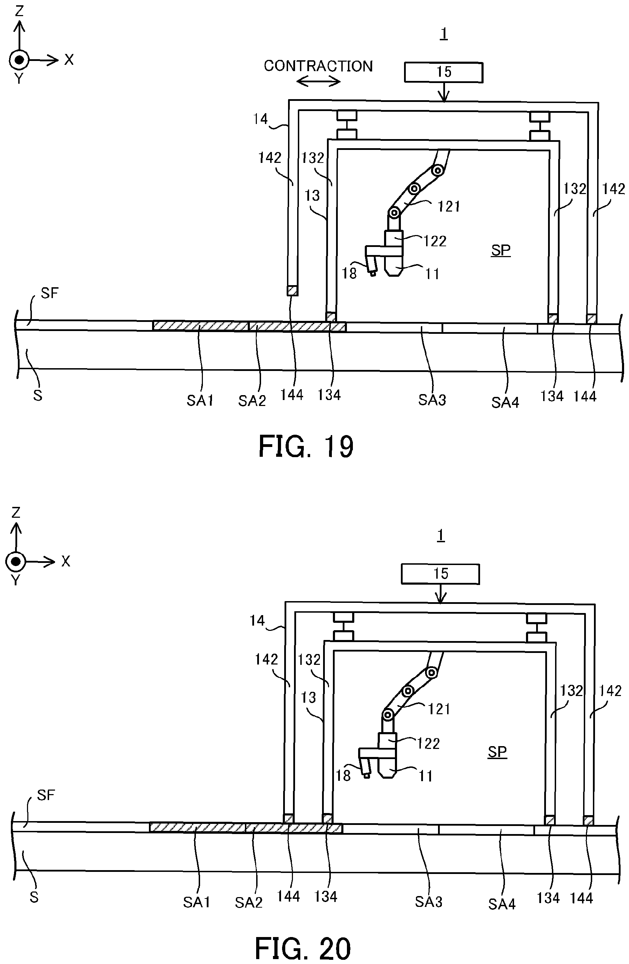

Then, as illustrated in FIG. 19, the control apparatus 2 controls the driving system 15 to contract the beam member 141 extending along the moving direction of the support apparatus 14.

After the beam member 141 finishes contracting, as illustrated in FIG. 20, the control apparatus 2 controls the driving system 15 so that the second leg member 142 is switched from the second contraction state to the second expansion state. As a result, the end part 144 of the rear leg member 142 contacts with and adheres to the coat SF of paint.

Then, the control apparatus 2 controls the light irradiation apparatus 11 to sweep the processing shot areas SA3 and SA4 with the plurality of processing lights EL, as with the case where the processing shot areas SA1 and SA2 are swept with the plurality of processing lights EL. Then, same operation is repeated, and thus, the surface of the coat SF of paint (especially, the area of the coat SF of paint at which the riblet structure should be formed) is irradiated with the plurality of processing lights EL. As a result, the riblet structure of the coat SF of paint is formed on the processing target object S.

### (1-4) Technical Effect of Processing SYSa

As described above, the processing system SYSa in the first embodiment forms the riblet structure of the coat SF of paint on the surface of the processing target object S by irradiating the processing target object S (especially, the coat SF of paint formed on the surface thereof) with the processing lights EL. Thus, the processing system SYSa forms the riblet structure relatively easily in a relatively short time, compared to a processing apparatus that forms the riblet structure by cutting the surface of the processing target object S by a cutting tool such as an end mill.

Moreover, the processing system SYSa forms the plurality of concave structures CP1 at the same time by emitting the plurality of processing lights EL at the same time. Thus, the throughput relating to the formation of the riblet structure improves, compared to a processing apparatus that forms only single concave structure CP1 at a time by emitting the single processing light EL.

Moreover, the processing system SYSa sweeps the coat SF of paint relatively fast by deflecting the plurality of processing lights EL by the Galvano mirror 1122. Thus, the throughput relating to the formation of the riblet structure improves.

Moreover, the processing system SYSa forms the riblet structure on the surface of the processing target object S by processing the coat SF of paint formed on the surface of the processing target object S instead of directly processing the processing target object S. Thus, an increase of a weight of the processing target object S due to the formation of the riblet structure is prevented, compared to a processing apparatus that forms the riblet structure by newly adding (for example, pasting), on the surface of the processing target object S (namely, the surface of the coat SF of paint), a special material for forming the riblet structure.

Moreover, the riblet structure is formable again relatively easily, because the processing system SYSa does not directly process the processing target object S. Specifically, when the riblet structure is formed again, firstly, the riblet structure of the coat SF of paint is removed and then new coat SF of paint is coated. Then, the processing system SYSa forms new riblet structure by processing the newly coated coat SF of paint. Therefore, a deterioration (for example, a breakage) of the riblet structure is handled relatively easily by forming the riblet structure again.

Moreover, the processing system SYSa is allowed to form the riblet structure on the surface of the processing target object S that is difficult to be directly processed or at which the riblet structure is not formed from the beginning, because the processing system SYS does not directly process the processing target object S. Namely, the riblet structure is formable relatively easily by processing the coat SF of paint by the processing system SYSa after coating the coat SF of paint on the surface of the processing target object S.

Incidentally, when the coat SF of paint is processed after the coat SF of paint is coated on the surface of the processing target object S, the operation for processing the processing target object S may include an operation for coating (namely, forming) the coat SF of paint on the processing target object S and an operation for processing the coat SF of paint (for example, partially removing the coat SF of paint). The operation for coating the coat SF of paint on the processing target object S may be performed by the processing system SYSa. In this case, the processing system SYSa may be provided with a coating apparatus that coats the coat SF of paint on the processing target object S. Alternatively, the operation for coating the coat SF of paint on the processing target object S may be performed at the outside of the processing system SYSa. For example, the operation for coating the coat SF of paint on the processing target object S may be performed by a coating apparatus outside the processing system SYSa.

Moreover, the processing system SYSa forms the riblet structure of the coat SF of paint. The coat SF of paint usually has relatively strong durability to an external environment (for example, at least one of heat, light, wind and the like). Thus, the processing system SYSa is capable of forming the riblet structure having the relatively strong durability relatively easily.

Moreover, in the first embodiment, the optical path of the processing lights EL between the terminal optical element of the optical system 112 and the coat SF of paint is included in the containing space SP. Thus, it is possible to properly prevent the processing light EL with which the coat SF of paint is irradiated (alternatively, scattered light, reflected light or the like of the processing light EL from the coat SF of paint) from propagating (in other words, scattering) toward the surrounding environment of the processing system SYSa, compared to a processing apparatus in which the optical path of the processing lights EL is not included in the containing space SP (namely, is exposed to an opened space). Moreover, it is possible to properly prevent the unnecessary substance generated by the irradiation of the processing light EL from flying (in other words, scattering) toward the surrounding environment of the processing system SYSa.

Moreover, in the first embodiment, the light irradiation apparatus 11 is supported by the support apparatus 14 that is movable on the coat SF of paint. Thus, the processing system SYSa is capable of relatively easily processing the coat SF of paint that relatively widely spreads. Namely, the processing system SYSa is capable of forming the riblet structure of the coat SF of paint in a relatively wide area on the surface of the processing target object S. Moreover, the processing system SYS is capable of forming the riblet structure on the surface of the relatively large or heavy processing target object S relatively easily, because it does not necessarily move the processing target object S.

Moreover, the processing system SYSa sucks the unnecessary substance generated by the irradiation of the processing light EL to the outside of the containing space SP by using the exhaust apparatus 16. Thus, the unnecessary substance rarely prevents the irradiation of the processing lights EL to the coat SF of paint. Thus, an irradiation accuracy of the processing lights EL improves, compared to a processing apparatus that is not provided with the exhaust apparatus 16 (namely, in which there is a possibility that the unnecessary substance prevents the irradiation of the processing lights EL to the coat SF of paint). As a result, the forming accuracy of the riblet structure improves.

Moreover, the processing system SYSa prevents the adherence of the dust to the optical surface 1124 (namely, the optical surface at the containing space SP side of the terminal optical element of the optical system 112) by using the gas supply apparatus 17. Thus, there is a lower possibility that the irradiation of the processing lights EL to the coat SF of paint is prevented by the dust that adheres to the optical surface 1124, compared to a processing apparatus that is not provided with the gas supply apparatus 17. Thus, the irradiation accuracy of the processing lights EL improves. As a result, the forming accuracy of the riblet structure improves.

Moreover, in the first embodiment, the processing apparatus 1 is configured to move the light irradiation apparatus 11 relative to the coat SF of paint by using the driving system 12 that is provided with the first driving system 121 and the second driving system 122. Thus, the processing apparatus 1 is capable of properly moving the light irradiation apparatus 11 relative to the coat SF of paint. Specifically, when the light irradiation apparatus 11 is moves by using only the first driving system 121 (namely, without using the second driving system 122), it is difficult to increase the accuracy of the alignment of the light irradiation apparatus 11 to some extent. This is because the accuracy of the alignment of the light irradiation apparatus 11 by the first driving system 121 is an accuracy that is obtained by integrating an accuracy of a movement (namely, an accuracy of a swing or an accuracy of a rotation) of the plurality of joints of the first driving system 121. However, in the present embodiment, even when it is difficult to increase the accuracy of the alignment of the light irradiation apparatus 11 by the first driving system 121 to some extent, the accuracy of the alignment of the light irradiation apparatus 11 is increased by the second driving system 122 the accuracy of the alignment of which is higher than that of the first driving system 121. Namely, it is possible to allow the accuracy of the alignment of the light irradiation apparatus 11 by whole driving system 12 including the first driving system 121 and the second driving system 122 to be higher than the accuracy of the alignment of the light irradiation apparatus 11 by the first driving system 121 by using the second driving system 122. Thus, the processing apparatus 1 is capable of moving the light irradiation apparatus 11 relative to the coat SF of paint properly (for example, with a high accuracy), compared to the case where it is not provided with the second driving system 122.

Moreover, there is such an advantage that the range in which the light irradiation apparatus 11 moves is larger, compared to a driving apparatus in a comparison example that is provided with the second driving system 122 and that is not provided with the first driving system 121, because the driving system 12 is provided with not only the second driving system 122 but also the first driving system 121 that allows the range in which the light irradiation apparatus 11 moves to be larger than the second driving system 122.

Namely, in the first embodiment, the processing system SYSa is configured to increase the range in which the light irradiation apparatus 11 moves to some extent by using mainly the first driving system 121 and to increase the accuracy of the movement of the light irradiation apparatus 11 by using mainly the second driving system 122. Namely, the processing system SYSa is capable of achieving both of an increase the range in which the light irradiation apparatus 11 moves and an improvement of the accuracy of the movement of the light irradiation apparatus 11.

In addition, in the first embodiment, necessity of increasing the accuracy of the movement of the light irradiation apparatus 11 by the first driving system 121 to some extent becomes small. Thus, a rigidity of the first driving system 121 (for example, a rigidity of the arm member 12121) may not be increased in order to increase the accuracy of the movement of the light irradiation apparatus 11 by the first driving system 121 to some extent. As a result, a weight of the first driving system 121 is reducible. Moreover, due to the reductio of the weight of the first driving system 121, a size of the actuator 12123 for moving the arm member 12121 is also reducible.

Moreover, in the first embodiment, it is possible to reduce the possibility that the vibration caused by the movement of the first driving system 121 is transmitted to the light irradiation apparatus 11 or to allow the amount of the vibration of the light irradiation apparatus 11 to be smaller than the amount of the vibration caused by the movement of the first driving system 121. As a result, a settling time of the light irradiation apparatus 11 is reducible and a total throughput improves. Alternatively, the forming accuracy of the riblet structure improves, because deterioration of the accuracy of the alignment due to the vibration of the light irradiation apparatus 11 is reducible.

Moreover, in the first embodiment, since the arm driving system 1212 is controlled on the basis of the measured result by the position measurement apparatus 18, the accuracy of the alignment of the light irradiation apparatus 1 improves.

### (2) Processing System SYSb in Second Embodiment

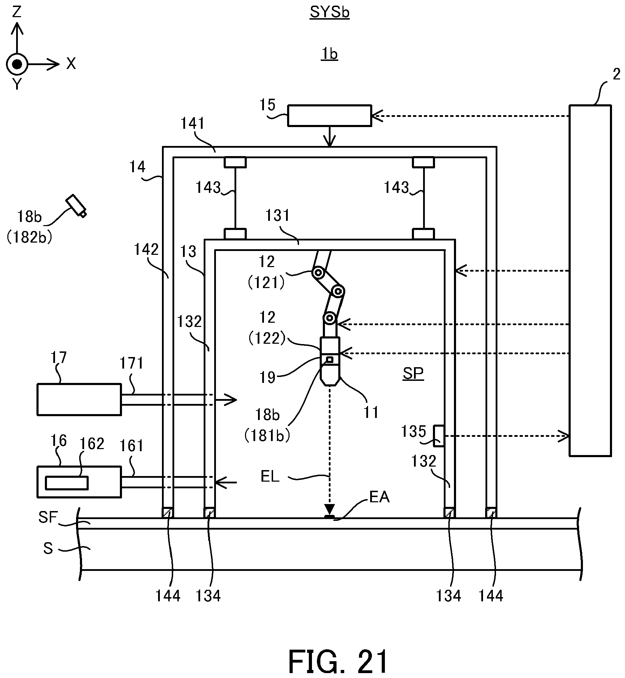

Next, with reference to FIG. 21, a processing system SYS in a second embodiment (in the below described description, the processing system SYS in the second embodiment is referred to as a "processing system SYSb") will be described. FIG. 21 is a cross-sectional view that schematically illustrates an entire structure of the processing system SYSb in the second embodiment.

As illustrated in FIG. 21, the processing system SYSb in the second embodiment is different from the processing system SYSa in the first embodiment in that it is provided with a processing apparatus 1b instead of the processing apparatus 1. Another feature of the processing system SYSb may be same as another feature of the processing system SYSa. The processing apparatus 1b is different from the processing apparatus 1 in that it is provided with a position measurement apparatus 18b instead of the position measurement apparatus 18. Another feature of the processing apparatus 1b may be same as another feature of the processing apparatus 1.

The position measurement apparatus 18b measures the relative positional relationship between the coat SF of paint and the light irradiation apparatus 11, as with the position measurement apparatus 18. The position measurement apparatus 18b measures a position of the light irradiation apparatus 11 relative to a predetermined fiducial position, compared to the above described position measurement apparatus 18. Specifically, the position measurement apparatus 18b measures the position of the light irradiation apparatus 11 in a fiducial coordinate system in which the fiducial position is set. The fiducial position may be an origin of the fiducial coordinate system. The measurement coordinate system, which is used by the position measurement apparatus 18b to measure the relative positional relationship between the coat SF of paint and the light irradiation apparatus 11, is used as the fiducial coordinate system, for example. However, another coordinate system may be used as the fiducial coordinate system. Incidentally, when a position of the coat SF of paint in the fiducial coordinate system is known, the measurement of a relative positional relationship between the fiducial position and the light irradiation apparatus 11 in the fiducial coordinate system by the position measurement apparatus 18b allows the relative positional relationship between the coat SF of paint and the light irradiation apparatus 11 to be calculated. Namely, it can be said that the position measurement apparatus 18b indirectly measures the relative positional relationship between the coat SF of paint and the light irradiation apparatus 11.

In order to measure the position of the light irradiation apparatus 11 relative to the fiducial position, the position measurement apparatus 18b is provided with an index member 181b and an index measurement apparatus 182b.

The index member 181b is a member that is an index when the position of the light irradiation apparatus 11 relative to the fiducial position is measured. The index member 181b is disposed at a position that is fixed to the light irradiation apparatus 11 (especially, the optical system 112). The index member 181b is disposed at a position a relative position of which is fixed relative to the light irradiation apparatus 11. The index member 181b is disposed at a position at which a relative position of the light irradiation apparatus 11 and the index member 181b does not change even when the driving system 12 moves the light irradiation apparatus 11. For example, FIG. 21 illustrates an example in which the index member 181b is disposed at the attachment member 19 to which the light irradiation apparatus 11 is attached. However, the index member 181b may be attached to a member that is different from the attachment member 19. For example, the index member 181b may be attached to the light irradiation apparatus 11. For example, the index member 181b may be attached to the above described housing 114 (see FIG. 4).

The index measurement apparatus 182b measures a position of the index member 181b. The index measurement apparatus 182b may be any measurement apparatus, as long as it is configured to measure the position of the index member 181b. The index measurement apparatus 182b may be disposed at any position, as long as it is configured to measure the position of the index member 181b.

An output from the index measurement apparatus 182b (namely, a measured result by the index measurement apparatus 182b) includes information relating to the position of the light irradiation apparatus 11 relative to the fiducial position. Specifically, the measured result by the index measurement apparatus 182b includes information relating to a position of the index member 181b relative to the fiducial position. Namely, the measured result by the index measurement apparatus 182b includes information relating to the position of the index member 181b in the fiducial coordinate system. Here, since the index member 181b is disposed at the position that is fixed to the light irradiation apparatus 11, the information relating to the position of the index member 181b in the fiducial coordinate system substantially includes information relating to the position of the light irradiation apparatus 11 in the fiducial coordinate system. Therefore, the control apparatus 2 properly determines the position of the light irradiation apparatus 11 relative to the fiducial position.

A marker is one example of the index member 181b. The marker may include a marker (for example, a punch mark, a concave part or a convex part) that is identifiable by a physical shape. The marker may include a marker (for example, that is identifiable by a visual characteristic (for example, a color and the like). The marker may include a marker (for example, a LED (Light Emitting Diode) and the like) that is identifiable by light generated by the marker itself. In this case, the index measurement apparatus 182b may include an imaging apparatus (for example, a camera) that is configured to image the marker. Alternatively, the index measurement apparatus 182b may include an irradiation apparatus that irradiates the marker with measurement light (alternatively, any measurement beam) and a light receiving apparatus that optically receives the measurement light from the marker.

A transmitting apparatus that is configured to transmit a signal is one example of the index member 181b. At least one of a radio wave signal and a light signal is one example of the signal. In this case, the index measurement apparatus 182b may include a receiving apparatus that is configured to receive the signal.

The position measurement apparatus 18b may be provided with single index member 181b. In this case, the control apparatus 2 determines the position of the light irradiation apparatus 11 in each of the X axis direction, the Y axis direction and the Z axis direction on the basis of the measured result by the index measurement apparatus 182b (namely, the information relating to the position of the single index member 181b). The position measurement apparatus 18b may be provided with two index members 181b. In this case, the control apparatus 2 determines the position of the light irradiation apparatus 11 in the rotational direction corresponding to the θZ direction (namely, a rotational amount of the light irradiation apparatus 11 around the Z axis), in addition to the position of the light irradiation apparatus 11 in each of the X axis direction, the Y axis direction and the Z axis direction, on the basis of the measured result by the index measurement apparatus 182b (namely, the information relating to the position of the two index members 181b). The position measurement apparatus 18b may be provided with three or more index members 181b. In this case, the control apparatus 2 determines the position of the light irradiation apparatus 11 in the rotational direction corresponding to each of the θX direction, the θY direction and the θZ direction (namely, a rotational amount of the light irradiation apparatus 11 around each of the X axis, the Y axis and the Z axis), in addition to the position of the light irradiation apparatus 11 in each of the X axis direction, the Y axis direction and the Z axis direction, on the basis of the measured result by the index measurement apparatus 182b (namely, the information relating to the position of the three or more index members 181b).

Note that a reflection member that reflects the measurement light from the (index) measurement apparatus 182b maybe provided instead of or in addition to the index member 181b. in this case, the reflection member may be a corner cube reflector or a cat's-eye reflector.

Moreover, the position measurement apparatus 18b may measure a position of a part that is a feature point on the coat SF of paint (on the processing target object S) in the fiducial coordinate system. Here, when a three-dimensional data of the processing target object S (the coat SF of paint) is used, a coordinate of the feature point in a coordinate system of the three-dimensional data. A positional relationship between any position of the processing target object S (the coat SF of paint) and the index member 181b is calculatable by using the position measurement apparatus 18b by matching a coordinate of the feature point in the fiducial coordinate system and the coordinate of the feature point in a coordinate system of the three-dimensional data. Note that the feature point of the processing target object S may include a point at a characterizing position of a three-dimensional shape of an object that is represented by a point cloud data that is an aggregation of points the represent positions on the surface of the processing target object S (the coat SF of paint). At least one of a vertex, an edge, a border, a point located at the most +Z side, a point located at the most -Z side, a point located at the most +X side, a point located at the most -X side, a point located at the most +Y side and a point located at the most -Y side of the processing target object S is one example of the feature point.

Note that a plurality of position measurement apparatuses 18b may be provided. In this case, measurement axes of the position measurement apparatuses 18b may intersect with each other.

Moreover, the position measurement apparatus 18b may measure the position of the light irradiation apparatus 11 by using a non-contact method (as one example, at least one of a light detection method, a sound wave detection method, a radio wave detection method and so on).

The processing system SYSb in the second embodiment like this achieves an effect that is same as the effect that is achievable by the processing system SYSa in the first embodiment described above.

### (3) Processing System SYSc in Third Embodiment

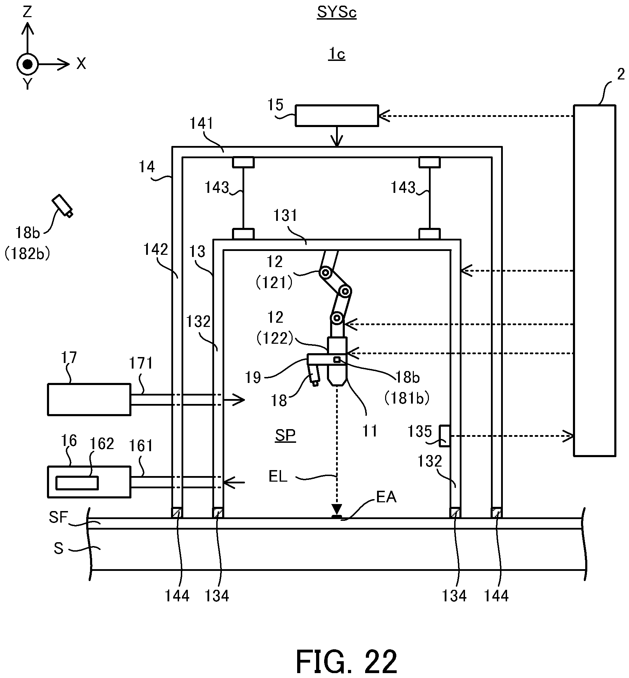

Next, with reference to FIG. 22, a processing system SYS in a third embodiment (in the below described description, the processing system SYS in the third embodiment is referred to as a "processing system SYSc") will be described. FIG. 22 is a cross-sectional view that schematically illustrates an entire structure of the processing system SYSc in the third embodiment.

As illustrated in FIG. 22, the processing system SYSc in the third embodiment is different from the processing system SYSa in the first embodiment in that it is provided with a processing apparatus 1c instead of the processing apparatus 1. Another feature of the processing system SYSc may be same as another feature of the processing system SYSa. The processing apparatus 1c is different from the processing apparatus 1 in that it is provided with the position measurement apparatus 18b, which is described in the second embodiment, in addition to the position measurement apparatus 18. Another feature of the processing apparatus 1c may be same as another feature of the processing apparatus 1.

The control apparatus 2 may control the driving system 12 (namely, the first driving system 121 and the second driving system 122) on the basis of the measured result by at least one of the position measurement apparatuses 18 and 18b. As a result, the processing system SYSc in the third embodiment achieves an effect that is same as the effect that is achievable by each of the processing system SYSa in the first embodiment and the processing system SYSb in the second embodiment described above.

However, when the processing system SYSc is provided with the position measurement apparatuses 18 and 18b (namely, a plurality of position measurement apparatuses), there is a possibility that a relative position of a measurement fiducial position of the position measurement apparatus 18 and a measurement fiducial position of the position measurement apparatus 18b changes during the processing operation is performed. Specifically, there is a possibility that the relative position of the measurement fiducial position of the position measurement apparatus 18 and the measurement fiducial position of the position measurement apparatus 18b is displaced from an original ideal relative position. As a result, there is a possibility that a structure that is formed at the coat SF of paint when the driving system 12 is controlled on the basis of the measured result by the position measurement apparatus 18 to form a certain structure is not same as a structure that is formed at the coat SF of paint when the driving system 12 is controlled on the basis of the measured result by the position measurement apparatus 18b to form the same structure. Thus, in the third embodiment, the control apparatus 2 may control the driving system 12 on the basis of information relating to the relative position of the measurement fiducial position of the position measurement apparatus 18 and the measurement fiducial position of the position measurement apparatus 18b, in addition to the measured result by at least one of the position measurement apparatuses 18 and 18b.

Specifically, the control apparatus 2 firstly obtains the information relating to the relative position of the measurement fiducial position of the position measurement apparatus 18 and the measurement fiducial position of the position measurement apparatus 18. In order to obtain the information relating to the relative position of the measurement fiducial position of the position measurement apparatus 18 and the measurement fiducial position of the position measurement apparatus 18, the control apparatus 2 may control the processing apparatus 1c to perform a test processing (specifically, to form a structure for a test (in the below described description, it is referred to as a "test structure")). Specifically, the control apparatus 2 may control the processing apparatus 1c to form the test structure ST by controlling the driving system 12 on the basis of the measured result by the position measurement apparatus 18 and to form the same test structure ST by controlling the driving system 12 on the basis of the measured result by the position measurement apparatus 18b. In this case, the control apparatus 2 may control the processing apparatus 1c to form the test structure ST at the actual coat SF of paint. Alternatively, a coat for the test processing may be coated on the coat SF of paint by a non-illustrated coating apparatus, and then, the control apparatus 2 may control the processing apparatus 1c to form the test structure ST at the coated coat for the test processing. Alternatively, the control apparatus 2 may control the processing apparatus 1c to form the test structure ST at an object for the test (namely, an object that is different from the processing target object SF) for forming the test structure ST.

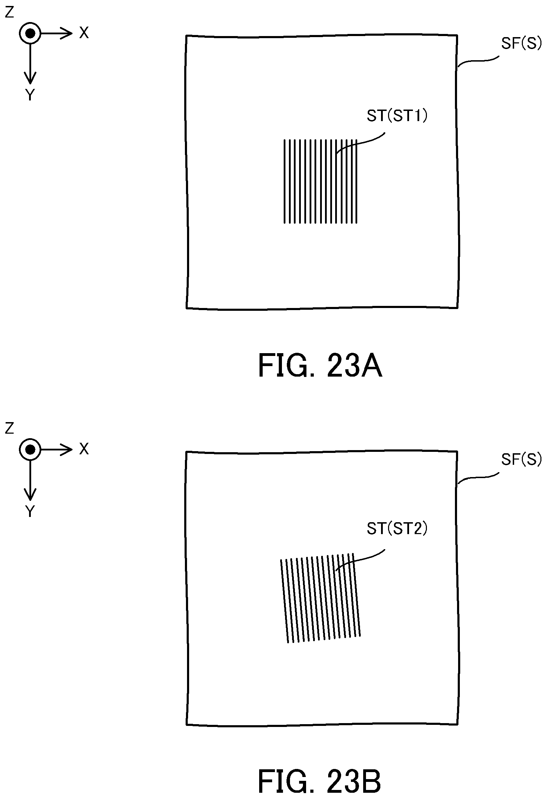

As a result, as illustrated in FIG. 23A and FIG. 23B, the test structure ST (in the below described description, it is referred to as a "test structure ST1") that is formed when the driving system 12 is controlled on the basis of the measured result by the position measurement apparatus 18 and the test structure ST (in the below described description, it is referred to as a "test structure ST2") that is formed when the driving system 12 is controlled on the basis of the measured result by the position measurement apparatus 18b are formed at the coat SF of paint (alternatively, the coat for the test or the object for the test). Note that FIG. 23A is a plan view that illustrates the test structure ST1 that is formed when the driving system 12 is controlled on the basis of the measured result by the position measurement apparatus 18. FIG. 23B is a plan view that illustrates the test structure ST1 that is formed when the driving system 12 is controlled on the basis of the measured result by the position measurement apparatus 18b. Note that the test structures ST1 and ST2 illustrated in FIG. 23A and FIG. 23B are line-and-space structures, however, the test structure is not limited to this. For example, it may be a structure that expand two-dimensionally (as one example, one or more cross-shape or a box-shape).

Then, the control apparatus 2 measures the formed two test structures ST1 and ST2 by using at least one of the position measurement apparatuses 18 and 18b (for example, the imaging apparatus) or a non-illustrated imaging apparatus. Then, the control apparatus 2 obtains information relating to formed positions of the test structures ST1 and ST2 on the basis of the measured result by at least one of the position measurement apparatuses 18 and 18b. Here, when the relative position of the measurement fiducial position of the position measurement apparatus 18 and the measurement fiducial position of the position measurement apparatus 18b does not change (namely, the relative position of the measurement fiducial position of the position measurement apparatus 18 and the measurement fiducial position of the position measurement apparatus 18b is not displaced from the original ideal relative position), the relative formed position of the test structure ST1 in an area in which the test structure ST1 is formed is same as the relative formed position of the test structure ST2 in an area in which the test structure ST2 is formed. On the other hand, when the relative position of the measurement fiducial position of the position measurement apparatus 18 and the measurement fiducial position of the position measurement apparatus 18b changes (namely, the relative position of the measurement fiducial position of the position measurement apparatus 18 and the measurement fiducial position of the position measurement apparatus 18b is displaced from the original ideal relative position), there is a high possibility that the relative formed position of the test structure ST1 in the area in which the test structure ST1 is formed is not same as the relative formed position of the test structure ST2 in the area in which the test structure ST2 is formed. Note that FIG. 23A and FIG. 23B illustrate an example in which the relative formed position of the test structure ST1 is not same as the relative formed position of the test structure ST2 in the area in which the test structure ST2 is formed. Thus, the information relating to the formed positions of the test structures ST1 and ST2 substantially includes the information relating to the relative position of the measurement fiducial position of the position measurement apparatus 18 and the measurement fiducial position of the position measurement apparatus 18b.

As a result, the control apparatus 2 may control the driving system 12 on the basis of the information relating to the formed positions of the test structures ST1 and ST2 so as to reduce an influence due to the change of the relative position of the measurement fiducial position of the position measurement apparatus 18 and the measurement fiducial position of the position measurement apparatus 18b. For example, the control apparatus 2 may correct the measured result by at least one of the position measurement apparatuses 18 and 18b so as to reduce the influence due to the change of the relative position of the measurement fiducial position of the position measurement apparatus 18 and the measurement fiducial position of the position measurement apparatus 18b, and may control the driving system 12 on the basis of the corrected measured result. For example, the control apparatus 2 may control the moving aspect (for example, at least one of the moving direction and the moving distance) of the light irradiation apparatus 11 by the driving system 12 so as to reduce the influence due to the change of the relative position of the measurement fiducial position of the position measurement apparatus 18 and the measurement fiducial position of the position measurement apparatus 18b, when the driving system 12 is controlled on the basis of the measured result by at least one of the position measurement apparatuses 18 and 18b. For example, the control apparatus 2 may control the irradiation position of one or more processing light EL on the coat SF of paint on the basis of the measured result by at least one of the position measurement apparatuses 18 and 18b to reduce the influence due to the change of the relative position of the measurement fiducial position of the position measurement apparatus 18 and the measurement fiducial position of the position measurement apparatus 18b. In this case, the irradiation position of the processing light EL may be at least one of a position on the surface of the coat SF of paint (the processing target object S) and a position in a direction that intersects with this surface. In this case, a processing data (data including the moving path of the irradiation position of the processing light EL, the intensity of the processing light EL or the like) used by the light irradiation apparatus 11 may be corrected on the basis of the measured result by at least one of the position measurement apparatuses 18 and 18b.

Alternatively, considering that the test structure is formed due to a change of the characteristic of the coat SF of paint (alternatively, the coat for the test or the object for the test) by the irradiation of the processing light EL, the control apparatus 2 may control the processing apparatus 1c to irradiate a sensitive member PE a characteristic of which is changed by the irradiation of the processing light EL with the processing light EL for forming the test structure ST, instead of actually forming the test structure ST. Specifically, the control apparatus 2 may control the processing apparatus 1c to irradiate the sensitive member PE with the processing light EL while controlling the driving system 12 in a same manner as the case where the test structure ST is formed on the basis of the measured result by the position measurement apparatus 18 and to irradiate the sensitive member PE with the processing light EL while controlling the driving system 12 in a same manner as the case where the same test structure ST is formed on the basis of the measured result by the position measurement apparatus 18b. Alternatively, the sensitive member PE (for example, a sheeted sensitive member EP) is pasted on the coat SF of paint by a non-illustrated pasting apparatus, and then, the control apparatus 2 may control the processing apparatus 1c to irradiate the pasted sensitive member PE with the processing light EL. Note that the sensitive member PE is not necessarily pasted on the coat SF of paint, when a positional relationship thereof relative to the coat SF of paint does not change between a timing when the processing light EL is emitted and a timing when the test structure ST is measured. For example, the sensitive member PE may be placed on the coat SF of paint.

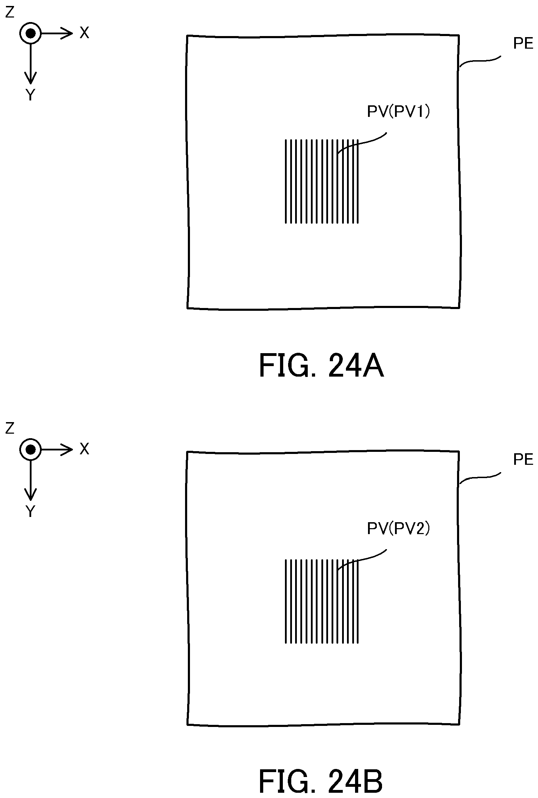

As a result, as illustrated in FIG. 24A and FIG. 24B, character change patterns PV characteristics of which are changed by the irradiation of the processing light EL are formed at the sensitive member PE. Note that FIG. 24A is a plan view that illustrates the characteristic change pattern PV (in the below described description, it is referred to as a "characteristic change pattern PV1") that is formed when the processing light EL is emitted while controlling the driving system 12 in a same manner as the case where the test structure ST is formed on the basis of the measured result by the position measurement apparatus 18. FIG. 24B is a plan view that illustrates the characteristic change pattern PV (in the below described description, it is referred to as a "characteristic change pattern PV2") that is formed when the processing light EL is emitted while controlling the driving system 12 in a same manner as the case where the test structure ST is formed on the basis of the measured result by the position measurement apparatus 18b.

Then, the control apparatus 2 measures the formed two characteristic change patterns PV1 and PV2 by using at least one of the position measurement apparatuses 18 and 18b (for example, the imaging apparatus) or a non-illustrated imaging apparatus. Then, the control apparatus 2 obtains information relating to formed positions of the characteristic change patterns PV1 and PV2 on the basis of the measured result by at least one of the position measurement apparatuses 18 and 18b. Here, when the relative position of the measurement fiducial position of the position measurement apparatus 18 and the measurement fiducial position of the position measurement apparatus 18b does not change, the relative formed position of the characteristic change pattern PV1 in an area in which the characteristic change pattern PV1 is formed is same as the relative formed position of the characteristic change pattern PV2 in an area in which the t characteristic change pattern PV2 is formed. On the other hand, when the relative position of the measurement fiducial position of the position measurement apparatus 18 and the measurement fiducial position of the position measurement apparatus 18b changes, there is a high possibility that the relative formed position of the characteristic change pattern PV1 in an area in which the characteristic change pattern PV1 is formed is not same as the relative formed position of the characteristic change pattern PV2 in an area in which the t characteristic change pattern PV2 is formed. Note that FIG. 24A and FIG. 24B illustrate an example in which the relative formed position of the characteristic change pattern PV1 is same as the relative formed position of the characteristic change pattern PV2 in an area in which the t characteristic change pattern PV2 is formed. Thus, the information relating to the formed positions of the characteristic change patterns PV1 and PV2 substantially includes the information relating to the relative position of the measurement fiducial position of the position measurement apparatus 18 and the measurement fiducial position of the position measurement apparatus 18b.

As a result, the control apparatus 2 may control the driving system 12 on the basis of the information relating to the formed positions of the characteristic change patterns PV1 and PV2 so as to reduce the influence due to the change of the relative position of the measurement fiducial position of the position measurement apparatus 18 and the measurement fiducial position of the position measurement apparatus 18b.

Note that information relating to the irradiation position of the processing light EL in the direction that intersects with the surface of the coat SF of paint (the processing target object S) may be obtained, when line widths of the characteristic change patterns PV1 and PV2 are measured.

Moreover, a plurality of position measurement apparatuses 18 and a plurality of position measurement apparatuses 18b may be provided. In this case, the measurement axes of position measurement apparatuses 18 may intersect with (alternatively, skew with respect to) each other or may be parallel to (alternatively, coaxial to) each other. And, the measurement axes of position measurement apparatuses 18b may intersect with each other.

### (4) Processing System SYSd in Fourth Embodiment

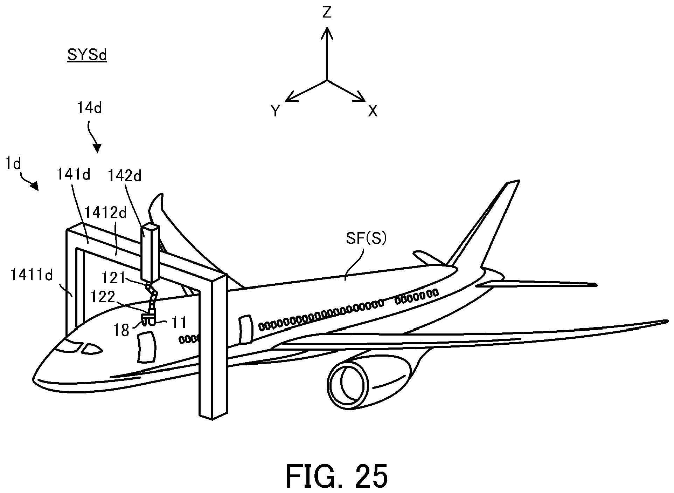

Next, with reference to FIG. 25, a processing system SYS in a fourth embodiment (in the below described description, the processing system SYS in the fourth embodiment is referred to as a "processing system SYSd") will be described. FIG. 25 is a perspective view that schematically illustrates the structure of the processing system SYSd in the fourth embodiment.

As illustrated in FIG. 25, the processing system SYSd in the fourth embodiment is different from the processing system SYSa in the first embodiment in that it is provided with a processing apparatus 1d instead of the processing apparatus 1. Another feature of the processing system SYSd may be same as another feature of the processing system SYSa. The processing apparatus 1d is different from the processing apparatus 1 in that it is provided with a support apparatus 14d instead of the support apparatus 14. Another feature of the processing apparatus 1d may be same as another feature of the processing apparatus 1. Note that an illustration of a part of the components of the processing system SYSd (for example, the housing apparatus 13, the driving system 15, the exhaust apparatus 16, the gas supply apparatus 17 and the control apparatus 2) is omitted in FIG. 25 in order to prioritize simple illustration of drawing.

The support apparatus 14d supports the housing apparatus 13, as with the support apparatus 14. Namely, the support apparatus 14d supports the driving system 12 and the light irradiation apparatus 11 through the housing apparatus 13, as with the support apparatus 14. The support apparatus 14d is different from the support apparatus 14 that is configured to self-run in the state where it is supported by the processing target object S in that it is configured to self-run without being supported by the processing target object S. The support apparatus 14d is different from the support apparatus 14 that is configured to self-run in the state where it contacts with the processing target object S in that it is configured to self-run without contacting with (namely, interfering with) the processing target object S. Another feature of the support apparatus 14d may be same as another feature of the support apparatus 14.

In order to self-run without interfering with the processing target object S, the support apparatus 14d is provided with a gantry member 141d and a moving block 142d instead of the beam member and the leg members 142 of the support apparatus 14.

The gantry member 141d is a gate-shaped member in which a beam member 1412d having a linear shape is disposed on a plurality of leg members 1411d having linear shapes. In an example illustrated in FIG. 25, the plurality of leg members 1411d are linear-shaped members extending in the Z axis direction and the beam member 1412d is a linear-shaped member extending in the X axis direction. The gantry member 141d has a size that allows it to surround the processing target object S at least partially without contacting with the processing target object S. Specifically, the gantry member 141d may have a size that is so large that the processing target object S is sandwiched between the plurality of leg members 1411d. The gantry member 141d may have a size that is so large that the beam member 1412d is located above the processing target object S. For example, in the example illustrated in FIG. 25, the gantry member 141d may have a size that is so large that it straddles the airframe of the airplane that is one specific example of the processing target object S.

The gantry member 141d is configured to self-run along a non-illustrated rail that is formed on a support surface on which the processing target S is disposed (alternatively, another surface). In the example illustrated in FIG. 25, the gantry member 141d is configured to self-run along a non-illustrated rail that extends in the Y axis direction, for example. Namely, in the example illustrated in FIG. 25, the gantry member 141d is configured to self-run along the Y axis direction.

The moving block 142d is attached to the beam member 1412d of the gantry member 141d. The moving block 142d is attached to the beam member 1412d of the gantry member 141d so that the moving block 142d is movable along the beam member 1412d. For example, the moving block 142d may be attached to a rail so that it is movable along the non-illustrated rail that is formed at the beam member 1412d. In the example illustrated in FIG. 25, the moving block 142d is movable along the X axis direction, because the beam member 1412d is the member that extends along the X axis direction. Furthermore, the block member 142d is movable along a direction that intersects with a direction in which the gantry member 141d self-runs and a direction in which the beam member 1412d extends. In the example illustrated in FIG. 25, the block member 142d is movable along the Z axis direction that intersects with the Y axis direction in which the gantry member 141d self-runs and the X axis direction in which the beam member 1412d extends.

The driving system 12 and the light irradiation apparatus 11 are attached to the moving block 142d thorough the non-illustrated housing apparatus 13. Namely, the moving block 142d supports the driving system 12 and the light irradiation apparatus 11 thorough the non-illustrated housing apparatus 13. Thus, the light irradiation apparatus 11 moves along with the movement of the gantry member 141d and the moving block 142d. Specifically, the light irradiation apparatus 11 moves along the Y axis direction along with the movement of the gantry member 141d along the Y axis direction. The light irradiation apparatus 11 moves along each of the X axis direction and the Z axis direction along with the movement of the moving block 142d along each of the X axis direction and the Z axis direction.

Note that the gantry member 141d may be provided with a fixing member that fixes the gantry member 141d relative to the support surface in order to reduce a positional error of the light irradiation apparatus 11 when the processing target object S is processed.

The processing system SYSd in the fourth embodiment like this achieves an effect that is same as the effect that is achievable by the processing system SYSa in the first embodiment described above.

Note that the gantry member 141d may be configured to self-run along each of a plurality of different directions. The moving block 142d may be attached to at least one leg member 1411d in addition to or instead of the beam member 1412d. The moving block 142d may be attached to at least one leg member 1411 d so that the moving block 142d is movable along at least one leg member 1411d. The moving block 142d may move along at least one leg member 1411d in addition to or instead of moving along the beam member 1412d. The moving block 142d may be movable in single direction. The moving block 142d may not be movable.

The processing system SYSd in the fourth embodiment may further have a characterizing element of at least one of the processing system SYSb in the second embodiment to the processing system SYSc in the third embodiment described above. The characterizing element of the processing system SYSb in the second embodiment includes an element relating to the position measurement apparatus 18b. The characterizing element of the processing system SYSc in the third embodiment includes an element relating to the position measurement apparatuses 18 and 18b.

### (5) Processing System SYSe in Fifth Embodiment

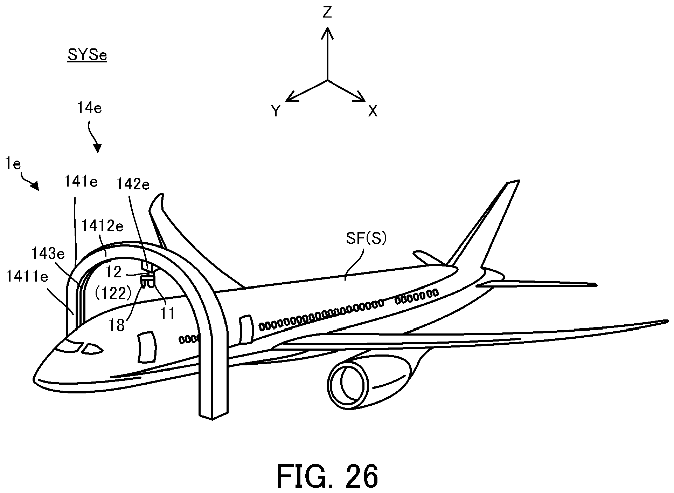

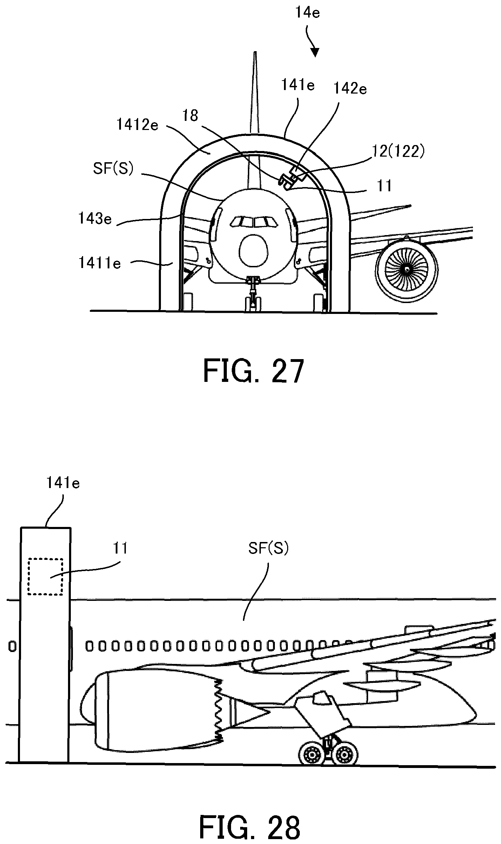

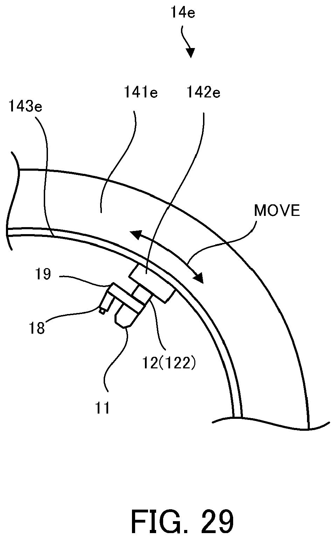

Next, with reference to FIG. 26 to FIG. 29, a processing system SYS in a fifth embodiment (in the below described description, the processing system SYS in the fifth embodiment is referred to as a "processing system SYSe") will be described. FIG. 26 is a perspective view that schematically illustrates the structure of the processing system SYSe in the fifth embodiment. FIG. 27 is a front view that schematically illustrates the structure of the processing system SYSe in the fifth embodiment. FIG. 28 is a side view that schematically illustrates the structure of the processing system SYSe in the fifth embodiment. FIG. 29 is a front view that enlarges and illustrates a part of the structure of the processing system SYSe in the fifth embodiment.

As illustrated in FIG. 26 to FIG. 29, the processing system SYSe in the fifth embodiment is different from the processing system SYSd in the fourth embodiment in that it is provided with a processing apparatus 1e instead of the processing apparatus 1. Another feature of the processing system SYSe may be same as another feature of the processing system SYSd. The processing apparatus 1e is different from the processing apparatus 1d in that it is provided with a support apparatus 14e instead of the support apparatus 14d. Another feature of the processing apparatus 1e may be same as another feature of the processing apparatus 1d. Note that an illustration of a part of the components of the processing system SYSe (for example, the housing apparatus 13, the driving system 15, the exhaust apparatus 16, the gas supply apparatus 17 and the control apparatus 2) is omitted in FIG. 26 to FIG. 29 in order to prioritize simple illustration of drawing.

The support apparatus 14e supports the housing apparatus 13, as with the support apparatus 14d. Namely, the support apparatus 14e supports the driving system 12 and the light irradiation apparatus 11 through the housing apparatus 13, as with the support apparatus 14d. The support apparatus 14e is configured to self-run without being supported by the processing target object S, as with the support apparatus 14d. The support apparatus 14d is different from the support apparatus 14d in that it is provided with an arch member 141e and a moving block 142e instead of the gantry member 141d and the moving block 142d. Another feature of the support apparatus 14e may be same as another feature of the support apparatus 14d.

The arch member 141e is an arch-shaped member in which a beam member 1412e having a curved shape (for example, having an arch shape) is disposed on a plurality of leg members 1411e having linear shapes. In an example illustrated in FIG. 26 to FIG. 29, the plurality of leg members 1411e are linear-shaped members extending in the Z axis direction and the beam member 14e is a curved-shaped member that extends in the X axis direction and a position in the Z axis direction (namely, a height) of which varies depending on the position along the X axis direction. The arch member 141e has a size that allows it to surround the processing target object S at least partially without contacting with the processing target object S. Specifically, the arch member 141e may have a size that is so large that the processing target object S is sandwiched between the plurality of leg members 1411e. The arch member 141e may have a size that is so large that the beam member 1412e is located above the processing target object S. For example, in the example illustrated in FIG. 26 to FIG. 29, the arch member 141e may have a size that is so large that it straddles the airframe of the airplane that is one specific example of the processing target object S.

The arch member 141e is configured to self-run along a non-illustrated rail that is formed on the support surface on which the processing target S is disposed (alternatively, another surface), as with the gantry member 141d in the fourth embodiment. In the example illustrated in FIG. 26, the arch member 141e is configured to self-run along a non-illustrated rail that extends in the Y axis direction, for example. Namely, in the example illustrated in FIG. 26, the arch member 141e is configured to self-run along the Y axis direction. However, the arch member 141e may be configured to self-run along each of a plurality of different directions.

The moving block 142e is attached to the arch member 141e. For example, the moving block 142e may be attached to the beam member 1412e of the arch member 141e. For example, the moving block 142e may be attached to at least one leg member 1411e of the arch member 141e. The moving block 142d is attached to the arch member 141e so that the moving block 142d is movable along the arch member 141e. For example, the moving block 142e may be attached to a rail 143e so that it is movable along the rail 143e (see FIG. 29) that is formed at the arch member 141e. The rail 143e is formed at the beam member 1412e of the arch member 141e. The rail 143e may be formed at least one member 1411e of the arch member 141e. In the example illustrated in FIG. 26 to FIG. 29, the moving block 142e is movable along the X axis direction and the Z axis direction, because the beam member 1412d is the member that extends in the X axis direction and the position in the Z axis direction (namely, the height) of which varies depending on the position along the X axis direction.

The driving system 12 and the light irradiation apparatus 11 are attached to the moving block 142e thorough the non-illustrated housing apparatus 13. Namely, the moving block 142e supports the driving system 12 and the light irradiation apparatus 11 thorough the non-illustrated housing apparatus 13. Thus, the light irradiation apparatus 11 moves along with the movement of the arch member 141e and the moving block 142e. Specifically, the light irradiation apparatus 11 moves along the Y axis direction along with the movement of the arch member 141e along the Y axis direction. The light irradiation apparatus 11 moves along each of the X axis direction and the Z axis direction along with the movement of the moving block 142e along each of the X axis direction and the Z axis direction. Note that the driving system 12 is not provided with the first driving system 121 in the example illustrated in FIG. 26 to FIG. 29, however, the driving system 12 may be provided with the first driving system 121.

The processing system SYSe in the fifth embodiment like this achieves an effect that is same as the effect that is achievable by the processing system SYSd in the fourth embodiment described above.

The processing system SYSe in the fifth embodiment may further have the characterizing element of at least one of the processing system SYSb in the second embodiment to the processing system SYSc in the third embodiment described above, as with the processing system SYSd in the fourth embodiment.

### (6) Processing System SYSf in Sixth Embodiment

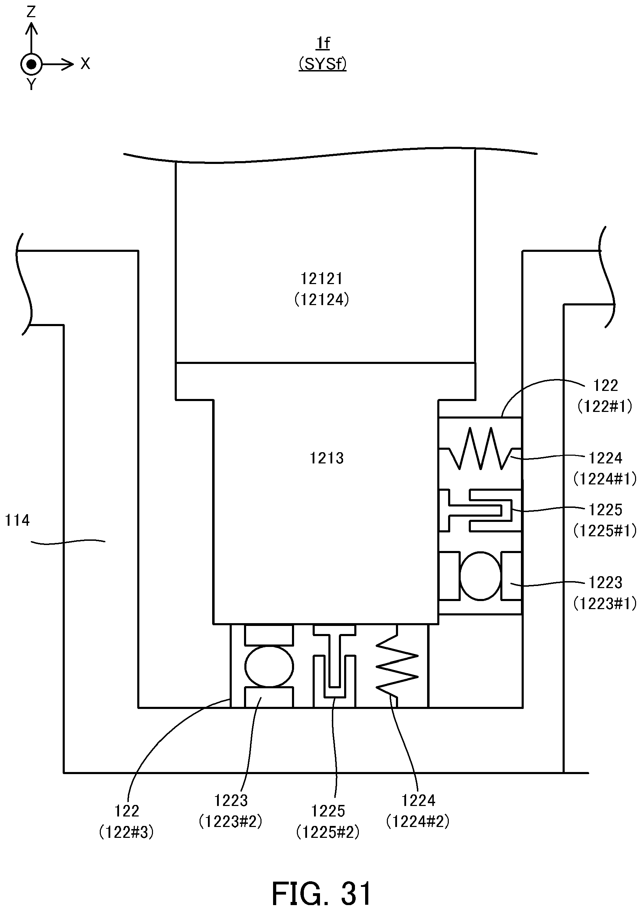

Next, a processing system SYS in a sixth embodiment (in the below described description, the processing system SYS in the sixth embodiment is referred to as a "processing system SYSf") will be described. The processing system SYSf in the sixth embodiment is different from the processing system SYSa in the first embodiment in that it is provided with a processing apparatus 1f instead of the processing apparatus 1. Another feature of the processing system SYSf may be same as another feature of the processing system SYSa. The processing apparatus 1f is different from the processing apparatus 1 in that it is provided with a driving system 12f instead of the driving system 12. Another feature of the processing apparatus 1f may be same as another feature of the processing apparatus 1. Thus, in the below described description, with reference to FIG. 30 to FIG. 31, the driving system 12f in the sixth embodiment will be described. Each of FIG. 30 and FIG. 31 is a cross-sectional view that illustrates a structure of the driving system 12f in the sixth embodiment.

As illustrated in FIG. 30 and FIG. 31, the driving system 12f is different from the driving system 12 in that it is provided with a plurality of second driving systems 122. FIG. 30 illustrates an example in which the driving system 12f is provided with two second driving systems 122, however, the driving system 12f may be provided with three or more second driving systems 122. Another feature of the driving system 12f may be same as another feature of the driving system 12. Note that FIG. 30 illustrates an example in which the second driving systems 122 are attached to the tip arm member 12124 of the first driving system 121 through the attachment member 1213, however, the second driving systems 122 may be directly attached to the tip arm member 12124.

The plurality of second driving systems 122 may be disposed so that the direction of the elastic force that is applied by the air spring 1223 of one second driving system 122 of the plurality of second driving systems 122 is different from the direction of the elastic force that is applied by the air spring 1223 of another second driving system 122 of the plurality of second driving systems 122. For example, in an example illustrated in FIG. 30 and FIG. 31, the air spring 1223#1 of the second driving system 122#1 is disposed to apply the elastic force along the X axis direction and the air spring 1223#2 of the second driving system 122#2 is disposed to apply the elastic force along the Z axis direction. In this case, the air spring 1223 of at least one of the plurality of second driving systems 122 may be disposed to apply the elastic force along a direction including the gravity direction component. In an example illustrated in FIG. 30 and FIG. 31, the air spring 1223#2 of the second driving system 122#2 is disposed to apply the elastic force along the Z axis direction that is the direction including the gravity direction component.

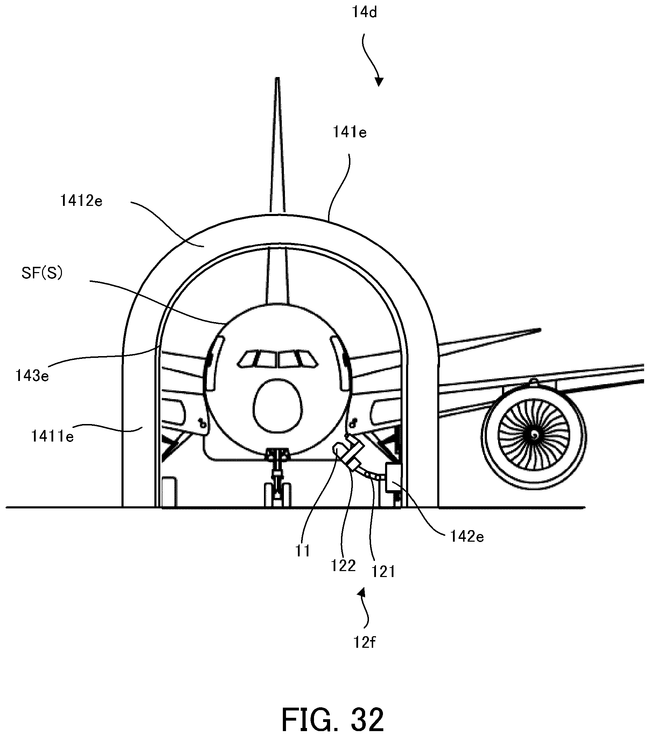

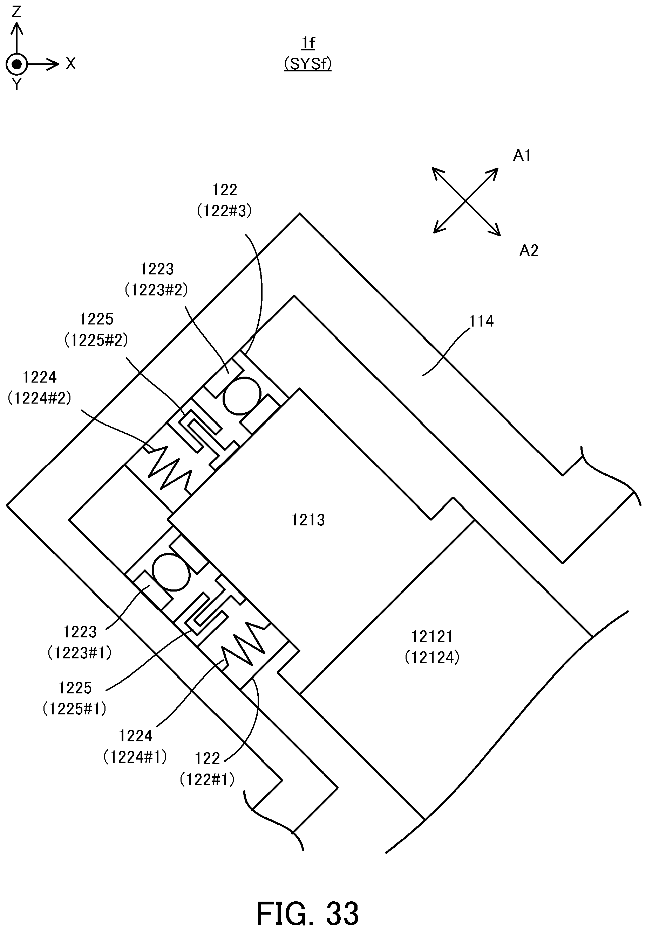

However, as illustrated in FIG. 32 and FIG. 33, there is a possibility that the attitude of the light irradiation apparatus 11 changes in the coordinate system that is constituted from the X axis, the Y axis and the Z axis (namely, at least one of the rotational amount around the X axis, the rotational amount around the Y axis and the rotational amount around the Z axis), depending on the moving aspect of the light irradiation apparatus 11 by the driving system 12. Note that FIG. 32 is a front view that illustrates the light irradiation apparatus 11 the attitude of which is changed to emit the processing light EL from an obliquely lower side toward an obliquely upper side of the airplane that is the processing target object S and FIG. 33 is a cross-sectional view that illustrates the plurality of second driving systems 122 that connect the light irradiation apparatus 11 illustrated in FIG. 32 and the first driving system 121. As a result, as illustrated in FIG. 32 and FIG. 33, there is a possibility that the direction of the elastic force applied by the air spring 1223 changes in the coordinate system that is constituted from the X axis, the Y axis and the Z axis. In the sixth embodiment, the plurality of second driving systems 122 may be disposed so that the direction of the elastic force that is applied by the air spring 1223 of one second driving system 122 is different from the direction of the elastic force that is applied by the air spring 1223 of another second driving system 122 even when the attitude of the light irradiation apparatus 11 changes. For example, the plurality of second driving systems 122 may be disposed so that a direction in which one second driving system 122 connects the light irradiation apparatus 11 and the first driving system 121 is different from a direction in which another second driving system 122 connects the light irradiation apparatus 11 and the first driving system 121. Moreover, the air spring 1223 of each second driving system 122 may apply the elastic force along the direction in which each second driving system 122 connects the light irradiation apparatus 11 and the first driving system 121. In this case, even when the attitude of the light irradiation apparatus 11 changes, the direction of the elastic force that is applied by the air spring 1223 of one second driving system 122 is different from the direction of the elastic force that is applied by the air spring 1223 of another second driving system 122. For example, in an example illustrated in FIG. 32 and FIG. 33, the air spring 1223#1 of the second driving system 122#1 applies the elastic force along a direction (for example, a direction A1 that extends from a bottom left to an upper right in FIG. 33) in which the second driving system 122#1 connects the light irradiation apparatus 11 (especially, the housing 114) and the first driving system 121 (especially, the attachment member 1213), and the air spring 1223#2 of the second driving system 122#2 applies the elastic force along a direction (for example, a direction A2 that extends from an upper left to a bottom right in FIG. 33) in which the second driving system 122#2 connects the light irradiation apparatus 11 and the first driving system 121.

The plurality of second driving systems 122 may be disposed so that the direction of the elastic force that is applied by the damper member 1224 of one second driving system 122 of the plurality of second driving systems 122 is different from the direction of the elastic force that is applied by the damper member 1224 of another second driving system 122 of the plurality of second driving systems 122. For example, in the example illustrated in FIG. 30 and FIG. 31, the damper member 1224#1 of the second driving system 122#1 is disposed to apply the elastic force along the X axis direction and the damper member 1224#2 of the second driving system 122#2 is disposed to apply the elastic force along the Z axis direction. In this case, the damper member 1224 of at least one of the plurality of second driving systems 122 may be disposed to apply the elastic force along a direction including the gravity direction component. In the example illustrated in FIG. 30 and FIG. 31, the damper member 1224#2 of the second driving system 122#2 is disposed to apply the elastic force along the Z axis direction that is the direction including the gravity direction component.

However, as illustrated in FIG. 32 and FIG. 33, there is a possibility that the direction of the elastic force applied by the damper member 1224 changes in the coordinate system that is constituted from the X axis, the Y axis and the Z axis, for the reason that is same as that in the case where the direction of the elastic force applied by the air spring 1223 changes. In the sixth embodiment, the plurality of second driving systems 122 may be disposed so that the direction of the elastic force that is applied by the damper member 1224 of one second driving system 122 is different from the direction of the elastic force that is applied by the damper member 1224 of another second driving system 122 even when the attitude of the light irradiation apparatus 11 changes. For example, the direction in which one second driving system 122 connects the light irradiation apparatus 11 and the first driving system 121 may be different from the direction in which another second driving system 122 connects the light irradiation apparatus 11 and the first driving system 121. Moreover, the damper member 1224 of each second driving system 122 may apply the elastic force along the direction in which each second driving system 122 connects the light irradiation apparatus 11 and the first driving system 121. In this case, even when the attitude of the light irradiation apparatus 11 changes, the direction of the elastic force that is applied by the damper member 1224 of one second driving system 122 is different from the direction of the elastic force that is applied by the damper member 1224 of another second driving system 122. For example, in the example illustrated in FIG. 32 and FIG. 33, the damper member 1224#1 of the second driving system 122#1 applies the elastic force along the direction (for example, the direction A1 that extends from a bottom left to an upper right in FIG. 33) in which the second driving system 122#1 connects the light irradiation apparatus 11 and the first driving system 121, and the damper member 1224#2 of the second driving system 122#2 applies the elastic force along the direction (for example, the direction A2 that extends from an upper left to a bottom right in FIG. 33) in which the second driving system 122#2 connects the light irradiation apparatus 11 and the first driving system 121.

The plurality of second driving systems 122 may be disposed so that the direction of the driving force that is applied by the driving member 1225 of one second driving system 122 of the plurality of second driving systems 122 is different from the direction of the driving force that is applied by the driving member 1225 of another second driving system 122 of the plurality of second driving systems 122. For example, in the example illustrated in FIG. 30 and FIG. 31, the driving member 1225 of the second driving system 122#1 is disposed to apply the driving force along a direction (for example, at least one of the Y axis direction and the Z axis direction) that intersects with the X axis direction and the driving member 1225#2 of the second driving system 122#2 is disposed to apply the driving force along a direction (for example, at least one of the X axis direction and the Y axis direction) that intersects with the Z axis direction. In this case, the driving member 1225 of at least one of the plurality of second driving systems 122 may be disposed to apply the driving force along a direction including a direction component that intersects with the gravity direction component. In the example illustrated in FIG. 30 and FIG. 31, the driving member 1225#2 of the second driving system 122#2 is disposed to apply the driving force along at least one of the X axis direction and the Y axis direction that is the direction including the direction component that intersects with the gravity direction component.

However, as illustrated in FIG. 32 and FIG. 33, there is a possibility that the direction of the driving force applied by the driving member 1225 changes in the coordinate system that is constituted from the X axis, the Y axis and the Z axis, for the reason that is same as that in the case where the direction of the elastic force applied by the air spring 1223 changes. In the sixth embodiment, the plurality of second driving systems 122 may be disposed so that the direction of the driving force that is applied by the driving member 1225 of one second driving system 122 is different from the direction of the driving force that is applied by the driving member 1225 of another second driving system 122 even when the attitude of the light irradiation apparatus 11 changes. For example, the direction in which one second driving system 122 connects the light irradiation apparatus 11 and the first driving system 121 may be different from the direction in which another second driving system 122 connects the light irradiation apparatus 11 and the first driving system 121. Moreover, the driving member 1225 of each second driving system 122 may apply the driving force along a direction that intersects with the direction in which each second driving system 122 connects the light irradiation apparatus 11 and the first driving system 121. In this case, even when the attitude of the light irradiation apparatus 11 changes, the direction of the driving force that is applied by the driving member 1225 of one second driving system 122 is different from the direction of the driving force that is applied by the driving member 1225 of another second driving system 122. For example, in the example illustrated in FIG. 32 and FIG. 33, the driving member 1225#1 of the second driving system 122#1 applies the driving force along a direction (for example, the direction A2 that extends from an upper left to a bottom right in FIG. 33) that intersects with the direction in which the second driving system 122#1 connects the light irradiation apparatus 11 and the first driving system 121, and the driving member 1225#2 of the second driving system 122#2 applies the driving force along a direction (for example, the direction A1 that extends from a bottom left to an upper right in FIG. 33) that intersects with the direction in which the second driving system 122#2 connects the light irradiation apparatus 11 and the first driving system 121.

Moreover, in the example, illustrated in FIG. 30 and FIG. 31, the number of the air springs 1223, the number of the damper members 1224 and the number of the driving members 1225 may not be equal to one another. For example, the number of the air springs 1223 may be smaller than the number of the driving members 1225.

The processing system SYSf in the sixth embodiment like this achieves an effect that is same as the effect that is achievable by the processing system SYSa in the first embodiment described above. In addition, since the processing system SYSf is provided with the plurality of second driving systems 122, the degree of the freedom of the attitude of the light irradiation apparatus 11 improves, compared to the processing system SYSa that is provided with single second driving system 122. For example, in the processing system SYSf, the light irradiation apparatus 11 is movable to have not only a first attitude that allows the processing light EL to be emitted from the upper side toward the lower side of the processing target object S but also a second attitude that allows the processing light EL to be emitted from the obliquely upper side toward the obliquely lower side of the processing target object S, a third attitude that allows the processing light EL to be emitted from the lateral side toward the lateral side of the processing target object S, a fourth attitude that allows the processing light EL to be emitted from the obliquely lower side toward the obliquely upper side of the processing target object S and a second attitude that allows the processing light EL to be emitted from the lower side toward the upper side of the processing target object S. Therefore, the processing system SYSf is capable of properly forming the structure at the coat SF of paint of the processing target object S having a complicated shape.

Incidentally, in the sixth embodiment, a connecting point of the first driving system 121 and the light irradiation apparatus 11 by the second driving system 122 may be located between a first surface of the light irradiation apparatus 11 and a second surface of the light irradiation apparatus 11 that faces toward a side opposite to a side toward which the first surface faces. For example, as illustrated in FIG. 30, when the light irradiation apparatus 11 is provided with the housing 114, the connecting point CP of the first driving system 121 and the light irradiation apparatus 11 by the second driving system 122 may be located between a first surface of the housing 114 (for example, a surface 1141 of the housing 14 that faces toward a side opposite to the processing target object S) and a second surface of the housing 114 (for example, a surface 1142 of the housing 14 that faces toward a processing target object S side). When the connecting point CP is located between the first surface and the second surface of the light irradiation apparatus 11 (for example, between the surface 1141 and the surface 1142 of the housing 114) like this, the accuracy of the alignment of the light irradiation apparatus 11 improves, compared to the case where the connecting point CP is not located between the first surface and the second surface of the light irradiation apparatus 11 (for example, between the surface 1141 and the surface 1142 of the housing 114). In this case, the connecting point CP of the first driving system 121 and the light irradiation apparatus 11 by the second driving system 122 may be located at a center of gravity position GP (see FIG. 30). When the connecting point CP is located at the center of gravity position GP, the accuracy of the alignment of the light irradiation apparatus 11 improves, compared to the case where the connecting point CP is not located at the center of gravity position GP. Note that the connecting point CP may be located between the first surface and the second surface of the light irradiation apparatus 11 (for example, between the surface 1141 and the surface 1142 of the housing 114) not only in the sixth embodiment but also in at least one of the first embodiment to the fifth embodiment, the connecting point CP may be located at the center of gravity position GP even in at least one of the first embodiment to the fifth embodiment.

The processing system SYSf in the sixth embodiment may further have a characterizing element of at least one of the processing system SYSb in the second embodiment to the processing system SYSe in the fifth embodiment described above. The characterizing element of the processing system SYSd in the fourth embodiment includes an element relating to the support apparatus 14d. The characterizing element of the processing system SYSe in the fifth embodiment includes an element relating to the support apparatus 14e.

### (7) Processing System SYSg in Seventh Embodiment

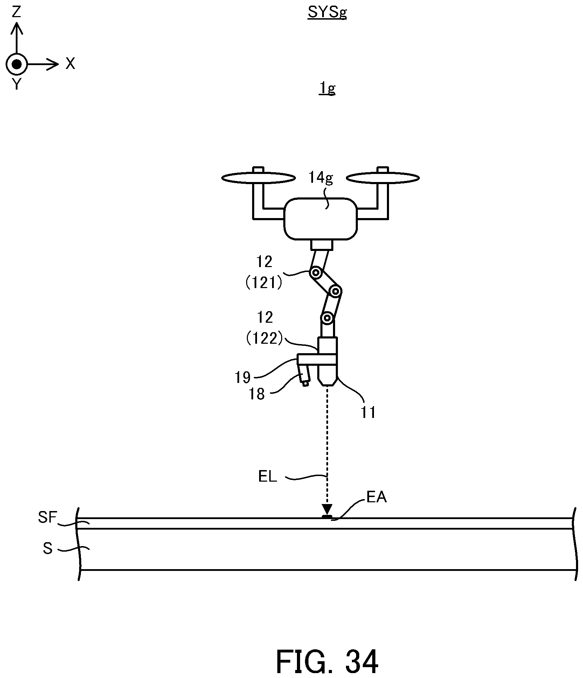

Next, with reference to FIG. 34, a processing system SYS in a seventh embodiment (in the below described description, the processing system SYS in the seventh embodiment is referred to as a "processing system SYSg") will be described. FIG. 34 is a cross-sectional view that schematically illustrates the structure of the processing system SYSg in the seventh embodiment.

As illustrated in FIG. 34, the processing system SYSg in the seventh embodiment is different from the processing system SYSa in the first embodiment in that it is provided with a processing apparatus 1g instead of the processing apparatus 1. Another feature of the processing system SYSg may be same as another feature of the processing system SYSa. The processing apparatus 1g is different from the processing apparatus 1 in that it is provided with a support apparatus 14g instead of the support apparatus 14. Another feature of the processing apparatus 1g may be same as another feature of the processing apparatus 1. Note that an illustration of a part of the components of the processing system SYSg (for example, the housing apparatus 13, the driving system 15, the exhaust apparatus 16, the gas supply apparatus 17 and the control apparatus 2) is omitted in FIG. 34 in order to prioritize simple illustration of drawing.

The support apparatus 14g supports the housing apparatus 13, as with the support apparatus 14. Namely, the support apparatus 14g supports the driving system 12 and the light irradiation apparatus 11 through the housing apparatus 13, as with the support apparatus 14. The support apparatus 14g is different from the support apparatus 14 that may not be configured fly in that it is configured to fly at a position that is away from the processing target object S. A flight vehicle such as an airplane is one example of the support apparatus 14g that is configured fly. The flight vehicle may be remotely controllable, may be controllable by an operator aboard the flight vehicle, or may be configured to autonomously fly. At least one of an airplane, a drone (see FIG. 34), a helicopter, a balloon and an airship is one example of the support apparatus 14g that is configured fly.

The processing system SYSg in the seventh embodiment like this achieves an effect that is same as the effect that is achievable by the processing system SYSa in the first embodiment described above.

Note that the processing system SYSg in the seventh embodiment may further have a characterizing element of at least one of the processing system SYSb in the second embodiment to the processing system SYSf in the sixth embodiment described above. The characterizing element of the processing system SYSf in the sixth embodiment includes an element relating to the driving system 12f.

### (8) Other Modified Example

In the above described description, the driving system 12 is provided with the first driving system 121 and the second driving system 122. However, the driving system 12 may not be provided with the first driving system 121. In this case, the second driving system 122 may be attached to the housing apparatus 13 without the first driving system 121. The second driving system 122 may be attached to the support apparatus 14 (alternatively, the support apparatus 14d, 14e or 14g) without the first driving system 121.

In the above described description, the processing system SYS deflects the processing lights EL by the Galvano mirror 1122 in order to sweep the surface of the coat SF of paint with the plurality of processing lights EL. However, the processing apparatus 1 may sweep the surface of the coat SF of paint with the plurality of processing lights EL by relatively moving the light irradiation apparatus 11 relative to the coat SF of paint in addition to or instead of deflecting the processing lights EL by the Galvano mirror 1122. Namely, the control apparatus 2 may control the driving system 12 to relatively move the light irradiation apparatus 11 relative to the coat SF of paint so that the surface of the coat SF of paint is swept with the processing lights EL.

One of a purpose of relatively moving the light irradiation apparatus 11 relative to the coat SF of paint by the driving system 12 is to sweep the surface of the coat SF of paint with the processing lights EL as described above. Thus, when the sweep of the coat SF of paint with the processing lights EL is realized without moving the light irradiation apparatus 11, the light irradiation apparatus 11 may not move. Namely, the processing apparatus 1 may not be provided with the driving system 12.

One of the purpose of relatively moving the light irradiation apparatus 11 relative to the coat SF of paint by the driving system 12 is to sweep the plurality of processing shot areas SA with the processing lights EL in sequence without moving the housing apparatus 13 and the support apparatus 14 when the plurality of processing shot areas SA are housed in the containing space SP of the housing apparatus 13. Thus, when the single processing shot area SA is housed in the containing space SP, the light irradiation apparatus 11 may not move. Namely, the processing apparatus 1 may not be provided with the driving system 12.

In the above described description, the processing apparatus 1 is provided with the housing apparatus 13, the support apparatus14, the driving system 15, the exhaust apparatus 16 and the gas supply apparatus 17. However, the processing apparatus 1 may not be provided with at least one of the housing apparatus 13, the support apparatus14, the driving system 15, the exhaust apparatus 16 and the gas supply apparatus 17, as long as it is configured to process the processing target object S. The processing apparatus 1 may not be provided with at least a part of the housing apparatus 13, the support apparatus14, the driving system 15, the exhaust apparatus 16 and the gas supply apparatus 17, as long as it is configured to process the processing target object S. When the processing apparatus 1 is not provided with the housing apparatus 13, the driving system 12 may be attached to the support apparatus 14. Moreover, the above described structure of each of the housing apparatus 13, the support apparatus14, the driving system 15, the exhaust apparatus 16 and the gas supply apparatus 17 is merely one example, and the processing apparatus 1 may be provided with at least one of the housing apparatus 13, the support apparatus14, the driving system 15, the exhaust apparatus 16 and the gas supply apparatus 17 having a structure that is different from the above described structure.

In the above described description, the processing system SYS forms the riblet structure of the coat SF of paint on the surface of the processing target object S. However, the processing system SYS may form any structure of the coat SF of paint having any shape on the surface of the processing target object S. Even in this case, any structure having any shape is formable by means of the control apparatus 2 controlling the light irradiation apparatus 11 and so on so that the surface of the coat SF of paint is swept with the processing lights EL along the sweeping path based on the structure that should be formed. A fine texture structure (typically, a concave and convex structure) that is formed regularly or irregularly in a micro / nano-meter order is one example of any structure. This fine texture structure may include at least one of a shark skin structure or a dimple structure that has a function of reducing a resistance from a fluid (a liquid and / or a gas). The fine texture structure may include a lotus leaf surface structure that has at least one of a liquid repellent function and a self-cleaning function (for example, has a lotus effect). The fine texture structure may include at least one of a fine protrusion structure that has a liquid transporting function (US2017/0044002A1), a concave and convex structure that has a lyophile effect, a concave and convex structure that has an antifouling effect, a moth eye structure that has at least one of a reflectance reduction function and a liquid repellent function, a concave and convex structure that intensifies only light of a specific wavelength by interference to have a structural color, a pillar array structure that has an adhesion function using van der Waals force, a concave and convex structure that has an aerodynamic noise reduction function, a honeycomb structure that has a droplet collection function and so on.

In the above described description, the processing system SYS removes the coat SF of paint by evaporating the coat SF of paint by the irradiation of the processing lights EL. However, the processing system SYS may remove the coat SF of paint by changing the characteristic of the coat SF of paint by the irradiation of the processing lights EL, in addition to or instead of evaporating the coat SF of paint by the irradiation of the processing lights EL. For example, the processing system SYS may remove the coat SF of paint by melting the coat SF of paint by the irradiation of the processing lights EL and removing the melted coat SF of paint. For example, the processing system SYS may remove the coat SF of paint by making the coat SF of paint brittle by the irradiation of the processing lights EL and peeling the brittle coat SF of paint. In the above described description, the processing system SYS processes the coat SF of paint formed on the surface of the processing target object S by the ablation. However, the processing system SYS may remove a part of the coat SF of paint formed on the surface of the processing target object S by a heat processing.

In the above described description, the processing system SYS forms the concave part C (alternatively, the concave structure CP 1 or any structure by the concave structure CP1 such as the riblet structure) by removing the coat SF of paint. Namely, the processing system SYS processes the coat SF of paint to partially reduce the thickness of the coat SF of paint. However, the processing system SYS may process the coat SF of paint to partially increase the thickness of the coat SF of paint in addition to or instead of partially reducing the thickness of the coat SF of paint. Namely, the processing system SYS may form a convex part (alternatively, the convex structure CP2 or any structure by the convex structure CP2) by adding the coat SF of paint in addition to or instead of forming the concave part C by removing the coat SF of paint. For example, the processing system SYS may irradiate a first part of the coat SF of paint with the processing light EL to remove the coat SF of paint at the first part and then may fix the removed coat SF of paint at a second part of the coat SF of paint to increase the thickness of the coat SF of paint at the second part (namely, to form the convex part at the second part).

In the above described description, the processing system SYS processes the coat SF of paint formed on the surface of the processing target object S. However, the processing system SYS may process any coat that is other than the coat SF of paint and that is formed on the surface of the processing target object S. Alternatively, the processing system SYS may process a structural object in which a plurality of layers are laminated. Specifically, the processing system SYS may process at least one layer (typically, at least one layer including a layer that is closest to the surface) of the plurality of layers that constitute the structural object. The processing system SYS may process at least one layer of the plurality of layers that constitute the structural object to form a structure of this layer. In this case, at least one layer that is processed corresponds to the above described coat SF of paint and the other layer other than the at least one layer corresponds to the processing target object S. Alternatively, the processing system SYS may process the processing target object S itself. Namely, the processing system SYS may process the processing target object S on the surface of which the coat SF of paint or any coat is not formed.

In the above described description, the processing system SYS forms the riblet structure for reducing the resistance of the surface of the processing target object S to the fluid. However, the processing system SYS may form, on the processing target object S, another structure that is different from the riblet structure for reducing the resistance of the surface to the fluid. For example, the processing system SYS may form, on the processing target object S, a riblet structure for reducing noise generated when the fluid and the surface of the processing target object S relatively move. For example, the processing system SYS may form, on the processing target object S, a structure that generates swirl relative to a flow of the fluid on the surface of the processing target object S. For example, the processing system SYS may form, on the processing target object S, a structure for adding hydrophobic property to the surface of the processing target object S.

In the above described description, the processing system SYS that processes the object with the processing light EL is described. Namely, in the above described description, an example in which the second driving system 122 connects the irradiation apparatus 11 and the first driving system 121 is described. However, an end effector that acts on the object may be used in addition to or instead of the irradiation apparatus 11 of the processing system SYS. For example, the second driving system 122 may connect the end effector and the first driving system 121. Here, the end effector may be a part having a function of directly acting on an operation target (for example, the object). Moreover, the end effector may be a part that gets a property of the operation target (for example, the object). Here, the property of the object (for example, the operation target) may include at least one of a shape of the object, a position of the object, a position of a feature point of the object, an attitude of the object, a surface characteristic (for example, at least one of a reflectance, a spectral reflectivity, a surface roughness, a color and so on). Note that the light irradiation apparatus 11 and the position measurement apparatus 18 may be regarded as a type of the end effector.

One example of an apparatus having this end effector is a first apparatus that is provided with: the end effector; the first driving system 121 as a movable member, a relative positional relationship between the movable member and a part of the object is changeable; and the second driving system 122 as a connecting apparatus that connects the first driving system 121 and the end effector so that a relative positional relationship between the first driving system 121 and the end effector is changeable. The first apparatus may be referred to as a robot system. Moreover, a second apparatus that is provided with the end effector and the second driving system 122 may be configured as one example of an apparatus having this end effector. The second apparatus may be referred to as an end effector apparatus. Note that an apparatus may be configured by the second driving system 122 that is the connecting apparatus for connecting the first driving system 121 and the end effector.

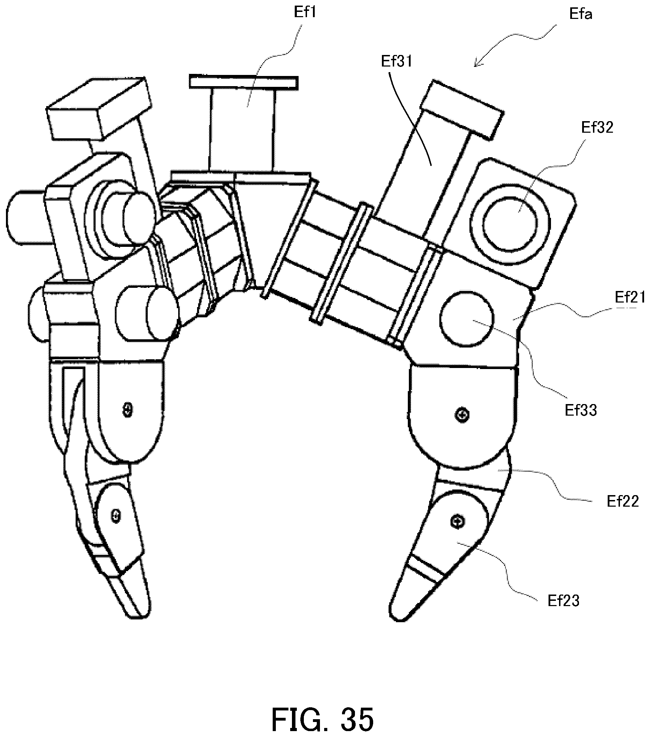

An end effector Efa that is one example of the end effector is illustrated in FIG. 35. The end effector Efa is provided with an attached part Ef1 that is attached to the connecting apparatus (for example, the second driving system 122); and a plurality of finger modules that are attached to a plurality of attachment surface (three attachment surface in an example illustrated in FIG. 35) that are inclined with respect to an axis of the attached part Ef1 (typically, an axis connecting the attached part Ef1 and the connecting apparatus), as illustrated in FIG. 35. Each finger module is provided with: a first link module Ef21 that is configured to rotate around a first joint axis of the attached part Ef1; a first driving module Ef31 that is provided to the first link module Ef21 and that rotates the first link module Ef21 around the first joint axis; a second link module Ef22 that is provided to the first link module Ef21 and that is configured to rotate around a second joint axis that is perpendicular to the first joint axis; a second driving module Ef32 that rotates the second link module Ef22 around the second joint axis; a third link module Ef23 that is provided to the second link module Ef22 to rotate around a third joint axis; and a third driving part Ef33 that rotates the third link module Ef23 around the third joint axis. Here, the end effector Efa may be referred to as a hand. Moreover, a part (typically, a tip part) of the third link module Ef23 may be regarded to be a grasping part that grasps the object and may be referred to as a tip of a finger of the hand.

Note that the position measurement apparatus 18 may be attached to the attached part Ef1. In this case, the measurement axis of the position measurement apparatus may be a direction along an axis of the attached part Ef1, a direction parallel to the axis of the attached part Ef1 or a direction inclined with respect to the axis of the attached part Ef1. The position measurement apparatus 18 may measure at least one of at least a part of the object and a part (typically, the grasping part or the tip of the finger) of the end effector Efa. Moreover, a part of the position measurement apparatus 18b (typically, the index member 181b) may be attached to the attached part Ef1.

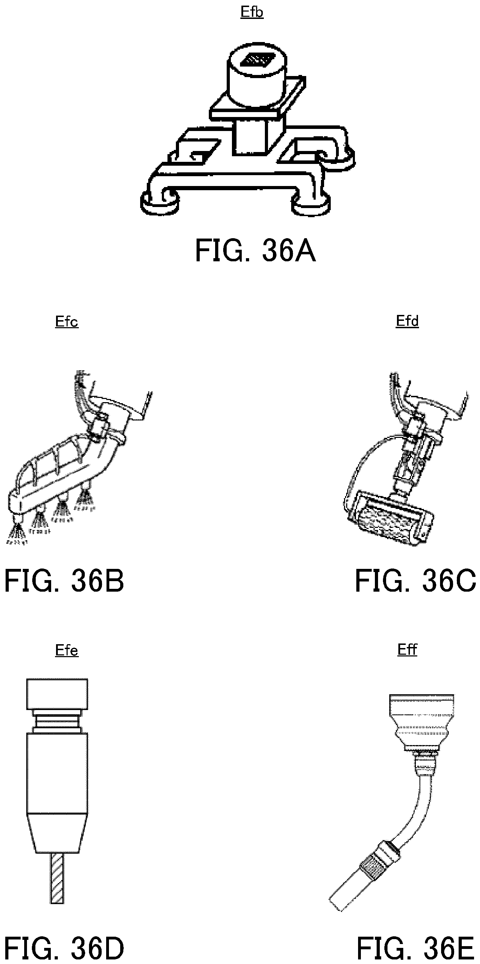

Note that the end effector is not limited to the position measurement apparatus and the end effector Efa that illustrated in FIG. 35 and that is the hand configured to grasp the object. For example, the end effector may include at least one of a suction holding apparatus Efb that sucks and holds the object as illustrated in FIG. 36A, a spray type of painting apparatus Efc as illustrated in FIG. 36B, a roller type of painting apparatus Efd as illustrated in FIG. 36C, a mechanical processing head apparatus Efe having a blade such as a drill as illustrated in FIG. 36D, a welding gun apparatus Eff as illustrated in FIG. 36E and so on. For example, the end effector may include at least one of an injector, a manipulator and an air blow that supplies molten metal, molten resin or particles for a blast processing.

Incidentally, when the end effector need electrical power, the connecting apparatus may perform a non-contact power feeding with respect to the end effector. Moreover, an output from the end effector may be outputted to an outside (typically, the control apparatus 2) in a non-contact method such as a wireless method, a light transmission method and so on.

### (9) Supplementary Note

Regarding the above described embodiment, below described supplementary notes are further disclosed.
[Supplementary Note 1] A processing system comprising:
   an active vibration isolation apparatus;
   an irradiation apparatus that is attached to the active vibration isolation apparatus and that irradiates an object with processing light for processing the object; and
   a control apparatus that changes a relative position of the object and the irradiation apparatus by controlling the active vibration isolation apparatus.
[Supplementary Note 2] The processing system according to the supplementary note 1, wherein
   the control apparatus changes the relative position of the object and the irradiation apparatus by controlling the active vibration isolation apparatus so as to perform an alignment of the object and an irradiation area of the processing light.
[Supplementary Note 3] The processing system according to the supplementary note 1 or 2, wherein
   the control apparatus changes the relative position of the object and the irradiation apparatus by controlling the active vibration isolation apparatus so that a desired position of the object is irradiated with the processing light.
[Supplementary Note 4] The processing system according to any one of the supplementary notes 1 to 3, wherein
   the control apparatus changes the relative position of the object and the irradiation apparatus by controlling the active vibration isolation apparatus so that an amount of a vibration of the irradiation apparatus relative to the object is smaller than that in the case where the active vibration isolation apparatus is not controlled.
[Supplementary Note 5] The processing system according to any one of the supplementary notes 1 to 4, wherein
   the irradiation apparatus is attached to another member through the active vibration isolation apparatus,
   the control apparatus changes the relative position of the object and the irradiation apparatus by controlling the active vibration isolation apparatus so that an amount of a vibration of the irradiation apparatus relative to the object is smaller than an amount of a vibration of another member relative to the object.
[Supplementary Note 6] The processing system according to any one of the supplementary notes 1 to 5, wherein
   the processing system further comprises a movement apparatus that moves the active vibration isolation apparatus.
[Supplementary Note 7] The processing system according to the supplementary note 6, wherein
   the movement apparatus moves the irradiation apparatus with the active vibration isolation apparatus.
[Supplementary Note 8] The processing system according to the supplementary note 6 or 7, wherein
   the active vibration isolation apparatus is attached to the movement apparatus.
[Supplementary Note 9] The processing system according to any one of the supplementary notes 6 to 8, wherein
   the irradiation apparatus is attached to the movement apparatus through the active vibration isolation apparatus.
[Supplementary Note 10] The processing system according to any one of the supplementary notes 6 to 9, wherein
   the movement apparatus includes a plurality of arm members and a joint member that connects the plurality of arm members in a pivotable manner.
[Supplementary Note 11] The processing system according to any one of the supplementary notes 6 to 10, wherein
   the movement apparatus includes a self-running apparatus that is configured to self-run without interfering with the object.
[Supplementary Note 12] The processing system according to any one of the supplementary notes 6 to 11, wherein
   the movement apparatus includes a self-running apparatus that is configured to self-run in a state where it is supported by the object.
[Supplementary Note 13] The processing system according to any one of the supplementary notes 6 to 12, wherein
   the movement apparatus includes a flying apparatus that is configured to fly at a position that is away from the object.
[Supplementary Note 14] The processing system according to any one of the supplementary notes 6 to 13, wherein
   the control apparatus changes the relative position of the object and the irradiation apparatus by controlling the movement apparatus.
[Supplementary Note 15] The processing system according to the supplementary note 14, wherein
   the control apparatus changes the relative position of the object and the irradiation apparatus by controlling the movement apparatus so as to perform an alignment of the object and an irradiation area of the processing light.
[Supplementary Note 16] The processing system according to the supplementary note 14 or 15, wherein
   the control apparatus changes the relative position of the object and the irradiation apparatus by controlling the movement apparatus so that a desired position of the object is irradiated with the processing light.
[Supplementary Note 17] The processing system according to any one of the supplementary notes 14 to 16, wherein
   an amount of the change of the relative position of the object and the irradiation apparatus by the active vibration isolation apparatus is smaller than an amount of the change of the relative position of the object and the irradiation apparatus by the movement apparatus.
[Supplementary Note 18] The processing system according to any one of the supplementary notes 14 to 17, wherein
   an accuracy of the change of the relative position of the object and the irradiation apparatus by the active vibration isolation apparatus is higher than an accuracy of the change of the relative position of the object and the irradiation apparatus by the movement apparatus.
[Supplementary Note 19] The processing system according to any one of the supplementary notes 14 to 18, wherein
   the control apparatus changes the relative position of the object and the irradiation apparatus by controlling at least one of the active vibration isolation apparatus and the movement apparatus so that an amount of a vibration of the irradiation apparatus relative to the object is smaller than that in the case where the active vibration isolation apparatus and the movement apparatus are not controlled.
[Supplementary Note 20] The processing system according to the supplementary note 19, wherein
   the control apparatus controls at least one of the active vibration isolation apparatus and the movement apparatus on the basis of a frequency of the vibration of the irradiation apparatus relative to the object so that the amount of the vibration of the irradiation apparatus relative to the object is smaller.
[Supplementary Note 21] The processing system according to the supplementary note 20, wherein
   the control apparatus controls the movement apparatus so that the amount of the vibration of the irradiation apparatus relative to the object is smaller, when the frequency is included in a first frequency range,
   the control apparatus controls the active vibration isolation apparatus so that the amount of the vibration of the irradiation apparatus relative to the object is smaller, when the frequency is included in a second frequency range that is higher than the first frequency range.
[Supplementary Note 22] The processing system according to any one of the supplementary notes 1 to 21, wherein
   the irradiation apparatus is attached to another member through the active vibration isolation apparatus,
   the active vibration isolation has: a position change apparatus that changes a relative position of another member and the irradiation apparatus; and a vibration damping apparatus that damps a vibration transmitted between another member and the irradiation apparatus.
[Supplementary Note 23] The processing system according to the supplementary note 22, wherein
   the control apparatus changes the relative position of the object and the irradiation apparatus by changing the relative position of another member and the irradiation apparatus by using the position change apparatus.
[Supplementary Note 24] The processing system according to the supplementary note 22 or 23, wherein
   the position change apparatus changes the relative position of another member and the irradiation apparatus by an electrical power,
   the vibration damping apparatus damps the vibration transmitted between another member and the irradiation apparatus by a pressure of air.
[Supplementary Note 25] The processing system according to any one of the supplementary notes 1 to 24, wherein
   the processing system further comprises a position measurement apparatus that measures the relative position of the object and the irradiation apparatus.
[Supplementary Note 26] The processing system according to the supplementary note 25, wherein
   the control apparatus controls the active vibration isolation apparatus on the basis of a measured result by the position measurement apparatus.
[Supplementary Note 27] The processing system according to the supplementary note 25 or 26, wherein
   the processing system comprises a plurality of position measurement apparatuses,
   the control apparatus controls the active vibration isolation apparatus on the basis of information relating to a relative position of a measurement fiducial position of a first position measurement apparatus of the plurality of position measurement apparatuses and a measurement fiducial position of a second position measurement apparatus of the plurality of position measurement apparatuses and measured results by the first and second position measurement apparatuses.
[Supplementary Note 28] The processing system according to any one of the supplementary notes 25 to 27, wherein
   the position measurement apparatus includes: an index member, a relative position of the index member relative to the irradiation apparatus is fixed; and an index measurement apparatus that measures a position of the index member.
[Supplementary Note 29] The processing system according to the supplementary note 28, wherein
   the index member includes a marker,
   the index measurement apparatus includes at least one of an imaging apparatus that is configured to image the maker and a light receiving apparatus that is configured to optically receive light from the marker.
[Supplementary Note 30] The processing system according to the supplementary note 28 or 29, wherein
   the index member includes a transmitting apparatus that is configured to transmit a signal,
   the index measurement apparatus includes a receiving apparatus that is configured to receive the signal.
[Supplementary Note 31] The processing system according to any one of the supplementary notes 25 to 30, wherein
   the position measurement apparatus includes an object measurement apparatus that measures the object.
[Supplementary Note 32] A processing method including:
   Irradiating an object with processing light for processing the object from an irradiation apparatus that is attached to an active vibration isolation apparatus; and
   changing a relative position of the object and the irradiation apparatus by using the active vibration isolation apparatus.
[Supplementary Note 33] A robot system comprising:
   an active vibration isolation apparatus;
   an end effector that is attached to the active vibration isolation apparatus and that acts on an object; and
   a control apparatus that changes a relative position of the object and the end effector by controlling the active vibration isolation apparatus.

The feature of each embodiment described above is allowed to be combined appropriately. A part of the feature of each embodiment described above may not be used. The feature of each embodiment described above may be allowed to be replaced by the feature of other embodiment, if needed. Moreover, the disclosures of all publications and United States patents that are cited in each embodiment described above are incorporated in the disclosures of the present application by reference if it is legally permitted.

The present invention is allowed to be changed, if desired, without departing from the essence or spirit of the invention which can be read from the claims and the entire specification, and a processing system, a processing method, a robot system, a connecting apparatus and an end effector apparatus each of which involves such changes, are also intended to be within the technical scope of the present invention.

### Description of Reference Codes

1 processing apparatus
11 light irradiation apparatus
111 light source system
112 optical system
114 housing
1122 Galvano mirror
12 driving system
121 first driving system
1212 arm driving system
12121 arm member
12122 joint member
12123 actuator
12124 tip arm member
122 second driving system
1223 air spring
1224 damper member
1224 driving member
14, 14d, 14e, 14g support apparatus
18, 18b position measurement apparatus
181b index member
182b index measurement apparatus
19 attachment member
2 control apparatus
C concave part
CP1 concave structure
CP2 convex structure
EA target irradiation area
EL processing light
S processing target object
SF coat of paint
PE sensitive member
SYS processing system
SA processing shot area
Efa to Eff end effector

### STATEMENTS

The following numbered statements set out particular combinations of features which are considered relevant to particular embodiments of the present disclosure.
Statement 1. A processing system that processes an object by processing light,
   the processing system comprising:
   a movable member, a relative positional relationship between the movable member and a part of the object being changeable;
   an irradiation apparatus that irradiates the object with the processing light; and
   a connecting apparatus that connects the movable member and the irradiation apparatus so that a relative positional relationship between the movable member and the irradiation apparatus is changeable,
   the connecting apparatus comprising: a driving member that moves at least one of the movable member and the irradiation apparatus; and an elastic member that couples the movable member with the irradiation apparatus.
Statement 2. The processing system according to statement 1, wherein
   the driving member applies, to at least one of the movable member and the irradiation apparatus, a driving force along a first direction,
   the elastic member applies, to at least one of the movable member and the irradiation apparatus, an elastic force along a second direction that intersects with the first direction.
Statement 3. The processing system according to statement 2, wherein the elastic member support a weight of the irradiation apparatus.
Statement 4. The processing system according to statement 3, wherein the elastic member support the weight along the second direction.
Statement 5. The processing system according to any one of statement 1 to 4, wherein
   the driving member applies, to at least one of the movable member and the irradiation apparatus, a driving force along a first direction,
   the elastic member applies, to at least one of the movable member and the irradiation apparatus, an elastic force along a second direction that has a component along the first direction.
Statement 6. The processing system according to statement 5, wherein the driving member applies the driving force to change a resonance frequency of the elastic member.
Statement 7. The processing system according to any one of statements 1 to 4, wherein
   the elastic member couples the movable member with the irradiation apparatus so that the at least one of a position and an attitude of the irradiation apparatus is changeable relative to the movable member.
Statement 8. The processing system according to any one of statements 1 to 7, wherein
   the connecting apparatus comprises: a first elastic member that applies, to at least one of the movable member and the irradiation apparatus, an elastic force along a first direction; and a second elastic member that applies, to at least one of the movable member and the irradiation apparatus, an elastic force along a second direction that is different from the first direction.
Statement 9. The processing system according to any one of statements 1 to 7, wherein
   the connecting member comprises: a first elastic member that applies, to at least one of the movable member and the irradiation apparatus, an elastic force along a first direction including a gravity direction component; and a second elastic member that applies, to at least one of the movable member and the irradiation apparatus, an elastic force along a second direction that is different from the first direction.
Statement 10. The processing system according to statement 8 or 9, wherein
   the connecting apparatus comprises: a first driving member that applies, to at least one of the movable member and the irradiation apparatus, a driving force along a third direction; and a second driving member that applies, to at least one of the movable member and the irradiation apparatus, a driving force along a fourth direction that is different from the third direction.
Statement 11. The processing system according to any one of statements 1 to 10, wherein
   the connecting apparatus connects a first part of the movable member and a second part that is a part of the irradiation apparatus, a relative positional relationship between the first part and a part of the object is changeable.
Statement 12. The processing system according to statement 11, wherein
   the processing system further comprises a control apparatus that controls the driving member so that an amount of a vibration of the irradiation apparatus is smaller than an amount of a vibration of the first part.
Statement 13. The processing system according to statement 11 or 12, wherein
   the processing system further comprises a movement apparatus that moves a position of the first part of the movable part relative to the part of the obj ect.
Statement 14. The processing system according to statement 13, wherein
   an accuracy of an alignment of the second part by the driving member is higher than an accuracy of an alignment of the first part by the movement apparatus.
Statement 15. The processing system according to statement 13 or 14, wherein
   a range in which the first part moves by the movement apparatus is larger than a range in which the second part moves by the driving member.
Statement 16. The processing system according to any one of statements 1 to 15, wherein
   the processing system comprises a position measurement apparatus that measures a relative positional relationship between the object and the irradiation apparatus,
   the driving member is controlled by using an output from the position measurement apparatus.
Statement 17. The processing system according to any one of statements 13 to 15, wherein
   the processing system comprises a position measurement apparatus that measures a relative positional relationship between the object and the irradiation apparatus,
   the movement apparatus is controlled by using an output from the position measurement apparatus.
Statement 18. The processing system according to statement 16 or 17, wherein
   the position measurement apparatus measures a position of the object relative to the irradiation apparatus.
Statement 19. The processing system according to any one of statements 16 to 18, wherein
   the position measurement apparatus measures a position of the irradiation apparatus relative to a fiducial position.
Statement 20. The processing system according to any one of statements 1 to 19, wherein
   a range which the irradiation apparatus is allowed to irradiate with the processing light is changed by a movement of the irradiation apparatus.
Statement 21. The processing system according to any one of statements 1 to 20, wherein
   the connecting apparatus connects a first part of the movable member and a second part that is a part of the irradiation apparatus, a relative positional relationship between the first part and a part of the object is changeable,
   the elastic member reduces a vibration that is transmitted from the first part to the second part,
   the driving member reduced a relative displacement between the first part and the second part caused by the vibration that is transmitted from the first part to the second part.
Statement 22. The processing system according to any one of statements 1 to 21, wherein
   the irradiation apparatus comprises an irradiation position change apparatus that changes an irradiation position of the processing light on the object relative to the irradiation apparatus.
Statement 23. The processing system according to statement 22, wherein
   the driving member reduces a positional error of the irradiation position due to an operation of the irradiation position change apparatus.
Statement 24. The processing system according to any one of statements 1 to 21, wherein
   the processing system comprises:
   a plurality of position measurement apparatus; and
   a control apparatus that controls the driving member on the basis of information relating to a relative position of a measurement fiducial position of a first position measurement apparatus of the plurality of position measurement apparatuses and a measurement fiducial position of a second position measurement apparatus of the plurality of position measurement apparatuses and measured results by the first and second position measurement apparatuses.
Statement 25. The processing system according to any one of statements 16 to 19 and 24, wherein
   the position measurement apparatus includes: an index member, a relative position of the index member relative to the irradiation apparatus is fixed; and an index measurement apparatus that measures a position of the index member.
Statement 26. The processing system according to statement 25, wherein
   the index member includes a marker,
   the index measurement apparatus includes at least one of an imaging apparatus that is configured to image the maker and a light receiving apparatus that is configured to optically receive light from the marker.
Statement 27. The processing system according to statements 25 or 26, wherein
   the index member includes a transmitting apparatus that is configured to transmit a signal,
   the index measurement apparatus includes a receiving apparatus that is configured to receive the signal.
Statement 28. The processing system according to any one of statements 16 to 19 and 24 to 27, wherein
   the position measurement apparatus includes an object measurement apparatus that measures the object.
Statement 29. A processing system that processes an object by processing light,
   the processing system comprising:
   a movable member, a relative positional relationship between the movable member and a part of the object being changeable;
   an irradiation apparatus that irradiates the object with the processing light;
   a connecting apparatus that connects the movable member and the irradiation apparatus so that a relative positional relationship between the movable member and the irradiation apparatus is changeable; and
   a vibration reduction apparatus that reduces a vibration that is transmitted from the movable member to the irradiation apparatus.
Statement 30. The processing system according to statement 29, wherein
   the vibration reduction apparatus comprises: a driving member that moves at least one of the movable member and the irradiation apparatus; and an elastic member that couples the movable member with the irradiation apparatus.
Statement 31. The processing system according to statement 30, wherein
   the vibration reduction apparatus comprises a control apparatus that controls the driving member so that an amount of a vibration of the irradiation apparatus is smaller than an amount of a vibration of the movable member.
Statement 32. The processing system according to statement 31, wherein
   the processing system further comprises a position measurement apparatus that measures a relative positional relationship between the object and the irradiation apparatus,
   the control apparatus controls the driving member by using an output from the position measurement apparatus.
Statement 33. The processing system according to statement 32, wherein
   the position measurement apparatus measures a position of the irradiation apparatus relative to the object.
Statement 34. The processing system according to statement 32 or 33, wherein
   the position measurement apparatus measures a position of the irradiation apparatus relative to a fiducial position.
Statement 35. The processing system according to any one of statements 29 to 34, wherein
   the irradiation apparatus comprises an irradiation position change apparatus that changes an irradiation position of the processing light on the object relative to the irradiation apparatus.
Statement 36. The processing system according to statement 35, wherein
   the vibration reduction apparatus reduces a positional error of the irradiation apparatus due to an operation of the irradiation position change apparatus.
Statement 37. The processing system according to statement 22, 23, 35 or 36, wherein
   the processing system further comprises a position measurement apparatus that measures a relative positional relationship between the object and the irradiation apparatus.
Statement 38. The processing system according to statement 37, wherein
   the position measurement apparatus measures the irradiation position relative to the object.
Statement 39. The processing system according to statement 38, wherein
   a sensitive member, a characteristic of which is changed by an irradiation of the processing light, is irradiated with the processing light from the irradiation apparatus,
   the position measurement apparatus measures a part of the sensitive member the characteristic of which is changed.
Statement 40. The processing system according to any one of statements 29 to 39, wherein
   the processing system comprises:
   a plurality of position measurement apparatus; and
   a control apparatus that controls the vibration reduction apparatus on the basis of information relating to a relative position of a measurement fiducial position of a first position measurement apparatus of the plurality of position measurement apparatuses and a measurement fiducial position of a second position measurement apparatus of the plurality of position measurement apparatuses and measured results by the first and second position measurement apparatuses.
Statement 41. The processing system according to any one of statements 32 to 34 and 40, wherein
   the position measurement apparatus includes: an index member, a relative position of the index member relative to the irradiation apparatus is fixed; and an index measurement apparatus that measures a position of the index member.
Statement 42. The processing system according to statement 41, wherein
   the index member includes a marker,
   the index measurement apparatus includes at least one of an imaging apparatus that is configured to image the maker and a light receiving apparatus that is configured to optically receive light from the marker.
Statement 43. The processing system according to statement 41 or 42, wherein
   the index member includes a transmitting apparatus that is configured to transmit a signal,
   the index measurement apparatus includes a receiving apparatus that is configured to receive the signal.
Statement 44. The processing system according to any one of statements 32 to 34 and 40 to 43, wherein
   the position measurement apparatus includes an object measurement apparatus that measures the object.
Statement 45. A processing system that processes an object by processing light,
   the processing system comprising:
   a movable member, a relative positional relationship between the movable member and a part of the object being changeable;
   an irradiation apparatus that irradiates the object with the processing light;
   a connecting apparatus that connects the movable member and the irradiation apparatus so that a relative positional relationship between the movable member and the irradiation apparatus is changeable; and
   a position measurement apparatus that measures a position of the irradiation apparatus relative to the object or a fiducial position,
   the connecting apparatus comprising a position change member that changes a position of the irradiation apparatus relative to the movable member on the basis of a position measured result by the position measurement apparatus.
Statement 46. The processing system according to statement 45, wherein
   the connecting apparatus comprising an elastic member that couples the movable member with the irradiation apparatus.
Statement 47. The processing system according to any one of statements 1 to 46, wherein
   the movable member includes a plurality of arm members and a joint member that connects the plurality of arm members in a pivotable manner.
Statement 48. The processing system according to any one of statements 1 to 47, wherein
   the movable member includes a self-running apparatus that is configured to self-run without interfering with the object.
Statement 49. The processing system according to any one of statements 1 to 48, wherein
   the movable member includes a self-running apparatus that is configured to self-run in a state where it is supported by the object.
Statement 50. The processing system according to any one of statements 1 to 49, wherein
   the movable member includes a flying apparatus that is configured to fly at a position that is away from the object.
Statement 51. The processing system according to any one of statements 13 to 15 and 17, wherein
   the movement apparatus includes a self-running apparatus that is configured to self-run without interfering with the object.
Statement 52. The processing system according to any one of statements 13 to 15, 17 and 51, wherein
   the movement apparatus includes a self-running apparatus that is configured to self-run in a state where it is supported by the object.
Statement 53. The processing system according to any one of statements 13 to 15, 17 and 51 to 52, wherein
   the movement apparatus includes a flying apparatus that is configured to fly at a position that is away from the object.
Statement 54. The processing system according to any one of statements 1 to 53, wherein
   the irradiation apparatus comprises a housing that has a first surface that faces toward a first side and a second surface that faces toward a second side that is an opposite side of the first side,
   a connecting position of the movable member and the irradiation apparatus by the connecting member is located between the first surface and the second surface.
Statement 55. The processing system according to statement 54, wherein
   the connecting position is located at a center of mass of the irradiation position.
Statement 56. A processing method of processing an object by processing light,
   the processing method including:
   changing a positional relationship between a position of a movable member and a position of a part of the object;
   irradiating the object with the processing light by using an irradiation apparatus;
   changing a relative positional relationship between the movable member and the irradiation apparatus; and
   connecting the movable member and the irradiation apparatus by a connecting part that has: a driving member that moves at least one of the movable member and the irradiation apparatus; and an elastic member that couples the movable member with the irradiation apparatus.
Statement 57. A processing method of processing an object by processing light,
   the processing method including:
   changing a positional relationship between a position of a movable member and a position of a part of the object;
   irradiating the object with the processing light by using an irradiation apparatus;
   changing a relative positional relationship between the movable member and the irradiation apparatus; and
   reducing a vibration that is transmitted from the movable member to the irradiation apparatus.
Statement 58. A processing method of processing an object by processing light,
   the processing method including:
   changing a positional relationship between a position of a movable member and a position of a part of the object;
   irradiating the object with the processing light by using an irradiation apparatus;
   measuring a position of the irradiation apparatus relative to the object or a fiducial position; and
   changing a relative positional relationship between the movable member and the irradiation apparatus on the basis of the measured position of the irradiation apparatus.
Statement 59. A robot system comprising:
   an end effector that acts on an object;
   a movable member, a relative relationship between the movable member and a part of the object being changeable; and
   a connecting apparatus that connects the movable member and the end effector so that a relative positional relationship between the movable member and the end effector is changeable,
   the connecting apparatus comprising: a driving member that moves at least one of the movable member and the end effector; and an elastic member that couples the movable member with the end effector.
Statement 60. A robot system comprising:
   an end effector that acts on an object;
   a movable member, a relative relationship between the movable member and a part of the object being changeable;
   a connecting apparatus that connects the movable member and the end effector so that a relative positional relationship between the movable member and the end effector is changeable; and
   a vibration reduction apparatus that reduces a vibration that is transmitted from the movable member to the end effector.
Statement 61. A robot system comprising:
   an end effector that acts on an object;
   a movable member, a relative relationship between the movable member and a part of the object being changeable;
   a connecting apparatus that connects the movable member and the end effector so that a relative positional relationship between the movable member and the end effector is changeable; and
   a position measurement apparatus that measures a position of the end effector relative to the object or a fiducial position,
   the connecting apparatus comprising a position change member that changes a position of the end effector relative to the movable member on the basis of a position measured result by the position measurement apparatus.
Statement 62. The robot system according to any one of statements 59 to 61, wherein
   the movable member includes a plurality of arm members and a joint member that connects the plurality of arm members in a pivotable manner.
Statement 63. The robot system according to any one of statements 59 to 62, wherein
   the movable member includes a self-running apparatus that is configured to self-run without interfering with the object.
Statement 64. The robot system according to any one of statements 59 to 63, wherein
   the movable member includes a self-running apparatus that is configured to self-run in a state where it is supported by the object.
Statement 65. The robot system according to any one of statements 59 to 64, wherein
   the movable member includes a flying apparatus that is configured to fly at a position that is away from the object.
Statement 66. A connecting apparatus that connects an end effector and a movable member, the end effector acting on an object, a relative relationship between the movable member and a part of the object being changeable,
   the connecting apparatus comprising: a driving member that moves at least one of the movable member and the end effector; and an elastic member that couples the movable member with the end effector,
   the connecting apparatus connecting the movable member and the end effector so that a relative positional relationship between the movable member and the end effector is changeable.
Statement 67. A connecting apparatus that connects an end effector and a movable member, the end effector acting on an object, a relative relationship between the movable member and a part of the object being changeable,
   the connecting apparatus comprising a vibration reduction apparatus that reduces a vibration that is transmitted from the movable member to the end effector,
   the connecting apparatus connecting the movable member and the end effector so that a relative positional relationship between the movable member and the end effector is changeable.
Statement 68. A connecting apparatus that connects an end effector and a movable member, the end effector acting on an object, a relative relationship between the movable member and a part of the object being changeable,
   the connecting apparatus comprising a position change member that changes a position of the end effector relative to the movable member on the basis of a position measured result by a position measurement apparatus that measures a position of the connecting apparatus and / or the end effector relative to the object or a fiducial position.
Statement 69. An end effector apparatus comprising:
   an end effector that acts on an object; and
   a connecting apparatus that connects the end effector and a movable member so that a relative positional relationship between the movable member and the end effector is changeable, a relative relationship between the movable member and a part of the object being changeable,
   the connecting apparatus comprising: a driving member that moves at least one of the movable member and the end effector; and an elastic member that couples the movable member with the end effector.
Statement 70. An end effector apparatus comprising:
   an end effector that acts on an object;
   a connecting apparatus that connects the end effector and a movable member so that a relative positional relationship between the movable member and the end effector is changeable, a relative relationship between the movable member and a part of the object being changeable; and
   a vibration reduction apparatus that reduces a vibration that is transmitted from the movable member to the end effector.
Statement 71. An end effector apparatus comprising:
   an end effector that acts on an object;
   a connecting apparatus that connects the end effector and a movable member so that a relative positional relationship between the movable member and the end effector is changeable, a relative relationship between the movable member and a part of the object being changeable; and
   a position measurement apparatus that measures a position of the end effector relative to the object or a fiducial position,
   the connecting apparatus comprising a position change member that changes a position of the end effector relative to the movable member on the basis of a position measured result by the position measurement apparatus.

## Claims

1. A process system (SYS) that performs a process related to an object (SF), wherein the process system comprises:
a process apparatus (11, Efa, Efb, Efc, Efd, Efe, Eff) that is configured to perform the process related to the object;
a movable member (121, 14, 14d, 14e, 14g) that is configured to change a relative positional relationship between the process apparatus and a part of the object;
a connecting apparatus (122) that is configured to connect the movable member and the process apparatus so that a relative positional relationship between the movable member and the process apparatus is changeable; and
a position measurement apparatus (18, 18b) that is configured to measure a position of the process apparatus,
the connecting apparatus (122, 1225) is configured to change a position of the process apparatus relative to the movable member on the basis of a position measured result by the position measurement apparatus.

2. The process system (SYS) according to claim 1, wherein
the process apparatus includes at least one of an irradiation apparatus (11) that is configured to irradiate the object (SF) with processing light (EL), a grasping apparatus (Efa) that is configured to grasp the object, a holding apparatus (Efb) that is configured to hold the object, a position measurement apparatus (18) that is configured to measure a position of the object, a processing apparatus (Efe) that is configured to perform a mechanical processing on the object, a welding apparatus (Eff), an injector, a manipulator, and an air blow.

3. The process system (SYS) according to claim 1 or 2, wherein
the position measurement apparatus (18, 18b) is configured to measure the position of the process apparatus (11, Efa, Efb, Efc, Efd, Efe, Eff) relative to the object (SF) or a fiducial position

4. The process system (SYS) according to any one of claims 1 to 3, wherein
the connecting apparatus (122) comprising a position change member (1225) that is configured to change the position of the process apparatus (11, Efa, Efb, Efc, Efd, Efe, Eff) relative to the movable member (121, 14, 14d, 14e, 14g) on the basis of the position measured result by the position measurement apparatus (18, 18b).

5. The process system (SYS) according to any one of claims 1 to 4, wherein
a moving distance of the process apparatus (11, Efa, Efb, Efc, Efd, Efe, Eff) by the connecting apparatus (122) is smaller than a moving distance of the process apparatus by the movable member (121, 14, 14d, 14e, 14g).

6. The process system (SYS) according to any one of claims 1 to 5, wherein
a positional relationship between the position measurement apparatus (18, 18b) and the process apparatus (11, Efa, Efb, Efc, Efd, Efe, Eff) does not change even when the connecting apparatus (122) changes a position of the process apparatus.

7. The process system (SYS) according to any one of claims 1 to 6, wherein
the connecting apparatus (122) is positioned between the position measurement apparatus (18) and the movable member (121, 14, 14d, 14e, 14g).

8. The process system (SYS) according to any one of claims 1 to 7, wherein
the connecting apparatus (122) is positioned between the process apparatus (11, Efa, Efb, Efc, Efd, Efe, Eff) and the movable member (121, 14, 14d, 14e, 14g).

9. The process system (SYS) according to any one of claims 1 to 8, wherein
a measurement target by the position measurement apparatus (18b) includes a index member (181b).

10. The process system (SYS) according to claim 9, wherein
the index member (181b) is positioned at a side surface of the process apparatus (11, Efa, Efb, Efc, Efd, Efe, Eff).

11. The process system (SYS) according to claim 9 or 10, wherein
the index member (181b) is allowed to be measured from a first direction that intersects a second direction, the second direction is a direction from the process apparatus (11, Efa, Efb, Efc, Efd, Efe, Eff) toward the object (SF).

12. The process system (SYS) according to any one of claims 9 to 11, wherein
the index member (181b) is positioned at a position at which a relative positional relationship between the process apparatus (11, Efa, Efb, Efc, Efd, Efe, Eff) and the index member does not change even when the connecting apparatus (122) changes a position of the process apparatus.

13. The process system (SYS) according to any one of claims 1 to 12, wherein
a measurement target by the position measurement apparatus (18b) includes at least one of a physical marker, a reflection member, and a marker that is configured to emit light.

14. The process system (SYS) according to claim 13, wherein
the position measurement apparatus (18, 18b) is configured to irradiate the measurement target with measurement light.

15. The process system (SYS) according to any one of claims 1 to 14, wherein
the position measured result includes information related to a position along at least one of a first axis direction, a second axis direction that intersect the first axis direction, and a third axis direction that intersects the first and second axis directions.

16. The process system (SYS) according to any one of claims 1 to 15, wherein
the position measured result includes information related to a position around at least one of a first axis direction, a second axis direction that intersect the first axis direction, and a third axis direction that intersects the first and second axis directions.

17. The process system (SYS) according to any one of claims 1 to 16, wherein
the position measurement apparatus includes a first position measurement apparatus (18) and a second position measurement apparatus (18b),
the first position measurement apparatus is configured to measure a position of the object (SF) relative to the process apparatus (11, Efa, Efb, Efc, Efd, Efe, Eff),
the second position measurement apparatus is configured to measure a position of the process apparatus.

18. The process system (SYS) according to any one of claims 1 to 17, wherein
the position measurement apparatus (18) is positioned at a position that is fixed relative to the process apparatus (11, Efa, Efb, Efc, Efd, Efe, Eff).

19. The process system (SYS) according to any one of claims 1 to 18, wherein
the position measurement apparatus (18b) is configured to measure the position of the process apparatus (11, Efa, Efb, Efc, Efd, Efe, Eff) relative to a fiducial coordinate.

20. The process system (SYS) according to any one of claims 1 to 19, wherein
the connecting apparatus (122) comprises an elastic member (1223, 1224) that couples the movable member (121) with the process apparatus (11, Efa, Efb, Efc, Efd, Efe, Eff).

21. The process system (SYS) according to claim any one of claims 1 to 20, wherein
the movable member (121) includes a plurality of arm members (12121) and a joint member (12122) that connects the plurality of arm members in a pivotable manner.

22. The process system (SYS) according to any one of claims 1 to 21, wherein
the movable member includes a self-running apparatus (14d, 14e) that is configured to self-run without interfering with the object (SF).

23. The process system (SYS) according to any one of claims 1 to 22, wherein
the movable member includes a self-running apparatus (14) that is configured to self-run in a state where it is supported by the object (SF).

24. The process system (SYS) according to any one of claims 1 to 23, wherein
the movable member includes a flying apparatus (14g) that is configured to fly at a position that is away from the object (W).

25. The process system (SYS) according to any one of claims 1 to 24, wherein
the process apparatus (11, Efa, Efb, Efc, Efd, Efe, Eff) comprises a housing (114) that has a first surface (1141) that faces toward a first side and a second surface (1142) that faces toward a second side that is an opposite side of the first side,
a connecting position (CP) of the movable member (121) and the process apparatus by the connecting member (122) is located between the first surface and the second surface.

26. The process system (SYS) according to claim 25, wherein
the connecting position (CP) is located at a center of mass (GP) of the process apparatus (11, Efa, Efb, Efc, Efd, Efe, Eff).

27. A process method of performing a process related to an object (SF), wherein
the process method comprises:
changing a relative positional relationship between a movable member (121, 14, 14d, 14e, 14g) and a part of the object (SF);
performing the object related to the object by using a process apparatus (11, Efa, Efb, Efc, Efd, Efe, Eff);
measuring a position of the process apparatus; and
changing a relative positional relationship between the movable member and the process apparatus on the basis of the measured position of the process apparatus.
